# EUROPEAN PATENT APPLICATION

(11) **EP 4 300 294 A1**
(43) Date of publication of application: **03.01.2024**
(21) Application number: 23173511.9
(22) Date of filing: 16.05.2023
(51) Int. Cl.: G06F 9/30

(54) **INSTRUCTIONS AND SUPPORT FOR HORIZONTAL REDUCTIONS**

(30) Priority: 02.07.2022 US 202217856978
(71) Applicant: Intel Corporation, Santa Clara, CA 95054 (US)
(72) Inventor: Adelman, Menachem, 7179034 Modi'in (IL); Gradstein, Amit, 3052316 Binyamina HA (IL); Shemy, Regev, Kiryat Ata (IL); Natarajan, Chitra, Queens Village, NY 11427 (US); Borges, Leonardo, Portland, OR 97239 (US); Shivaswamy, Chytra, Marblehead, 01945 (US); Ermolaev, Igor, 80639 Munich BY (DE); Espig, Michael, Newberg, OR 97132 (US); Beit Aharon, Or, Ramat Yishai (IL); Wiedemeier, Jeff, Austin TX, 78737 (US)
(74) Representative: Samson & Partner Patentanwälte mbB

(57) **Abstract**

Techniques for performing horizontal reductions are described. In some examples, an instance of a horizontal instruction is to include at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in the destination operand.

## Description

### BACKGROUND

Reduction is a common operation in high performance computing. Given a set of numbers and an operation, applying the operation on all the numbers yields the reduction result.

### BRIEF DESCRIPTION OF DRAWINGS

Various examples in accordance with the present disclosure will be described with reference to the drawings, in which:
FIG. 1 illustrates example executions of a horizontal add reduction instruction.
FIG. 2 illustrates example executions of a horizontal add reduction instruction.
FIG. 3 illustrates example executions of a horizontal add reduction instruction.
FIG. 4 illustrates example executions of a horizontal add reduction instruction.
FIG. 5 illustrates example executions of a horizontal add reduction instruction with floating point data elements.
FIG. 6 illustrates example executions of a horizontal add reduction instruction with floating point data elements.
FIG. 7 illustrates example executions of a horizontal add reduction instruction with floating point data elements.
FIG. 8 illustrates example executions of a horizontal add reduction instruction with floating point data elements.
FIG. 9 illustrates examples of an integer adder.
FIG. 10 illustrates example executions of a horizontal logical operation reduction instruction.
FIG. 11 illustrates example executions of a horizontal logical operation reduction instruction.
FIG. 12 illustrates example executions of a horizontal logical operation reduction instruction.
FIG. 13 illustrates example executions of a horizontal logical operation reduction instruction.
FIG. 14 illustrates example executions of a horizontal integer minimum or maximum reduction instruction.
FIG. 15 illustrates example executions of a horizontal integer minimum or maximum reduction instruction.
FIG. 16 illustrates example executions of a horizontal integer minimum or maximum reduction instruction.
FIG. 17 illustrates example executions of a horizontal integer minimum or maximum reduction instruction.
FIG. 18 illustrates example executions of a horizontal minimum or maximum reduction instruction with floating point data elements.
FIG. 19 illustrates example executions of a horizontal minimum or maximum reduction instruction with floating point data elements.
FIG. 20 illustrates example executions of a horizontal minimum or maximum reduction instruction with floating point data elements.
FIG. 21 illustrates example executions of a horizontal minimum or maximum reduction instruction with floating point data elements.
FIG. 22 illustrates examples of computing hardware to process at least a reduction instruction.
FIG. 23 illustrates an example of method performed by a processor to process a horizontal reduction instruction.
FIG. 24 illustrates an example of method to process a horizontal reduction instruction using emulation or binary translation.
FIG. 25 illustrates an exemplary system.
FIG. 26 illustrates a block diagram of an example processor that may have more than one core and an integrated memory controller.
FIG. 27(A) is a block diagram illustrating both an exemplary in-order pipeline and an exemplary register renaming, out-of-order issue/execution pipeline according to examples.
FIG. 27(B) is a block diagram illustrating both an exemplary example of an in-order architecture core and an exemplary register renaming, out-of-order issue/execution architecture core to be included in a processor according to examples.
FIG. 28 illustrates examples of execution unit(s) circuitry.
FIG. 29 is a block diagram of a register architecture according to some examples.
FIG. 30 illustrates examples of an instruction format.
FIG. 31 illustrates examples of an addressing field.
FIG. 32 illustrates examples of a first prefix.
FIGS. 33(A)-(D) illustrate examples of how the R, X, and B fields of the first prefix in FIG. 32 are used.
FIGS. 34(A)-(B) illustrate examples of a second prefix.
FIG. 35 illustrates examples of a third prefix.
FIG. 36 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for performing one or more horizontal reductions in response to an instance of a single instruction. Detailed herein are instructions, and support thereof, for horizontal add reductions, horizontal logic reductions, and/or horizontal minimum/maximum reductions.

Reduction is a common operation in high performance computing. Given a set of numbers and an operation, applying the operation on all the numbers yields the reduction result. For example, for add reductions, an example could be adding all the elements in the set. In the case of minimum/maximum reductions, an example could be returning the maximal number in the set. In the case of logical reductions, an example could be taking the XOR of all the elements.

Performing reductions between different vectors is natural in single instruction, multiple data (SIMD) or vector machines, but performing a reduction within a vector register is more challenging and requires a sequence of permute instructions to bring different elements to the same SIMD lanes. Detailed herein are instructions, and support thereof, for horizontal add reductions, horizontal logic reductions, and/or horizontal minimum/maximum reductions that do not require the sequence of permute instructions.

Examples of horizontal adds between elements of the same vector register are described first. For integer adds, the examples include instructions to add 8,16,32 and 64-bit integers. Integer horizontal add reductions can be either signed or unsigned. For 8 and 16-bit integer add reduction, the result is stored in a 32-bit destination (lowest 32 bits of the destination vector register). For 8 and 16-bit integer adds there may also be a version with a 32-bit accumulator to allow summing long array of elements without overflow. For floating point adds, the instructions support fp16, fp32, fp64 and bfloat16 datatypes. For fp16 and bf16 there is also an instruction version with an fp32 accumulator to minimize rounding errors when accumulating a long array of elements. In some examples, some of the instructions support element masking. In some examples, masked-out elements are ignored. In some examples, masked-out elements are replaced with an identity value (e.g., zero or all ones depending on the operation).

In some examples, different datatypes and sizes are supported. For example, integer sizes of nibble (N) (4-bit), byte (B) (8-bit), word (W) (16-bit), double-word (D) (32-bit), and/or quad-word (Q) (64-bit) may be supported. Additionally, the addition may be signed and/or unsigned depending on the instruction. Other datatypes that may be supported include, but are not limited to: half-precision floating point (FP16), single precision floating point (FP32), double precision floating point (FP64), FP19, and bfloat16 (BF16).

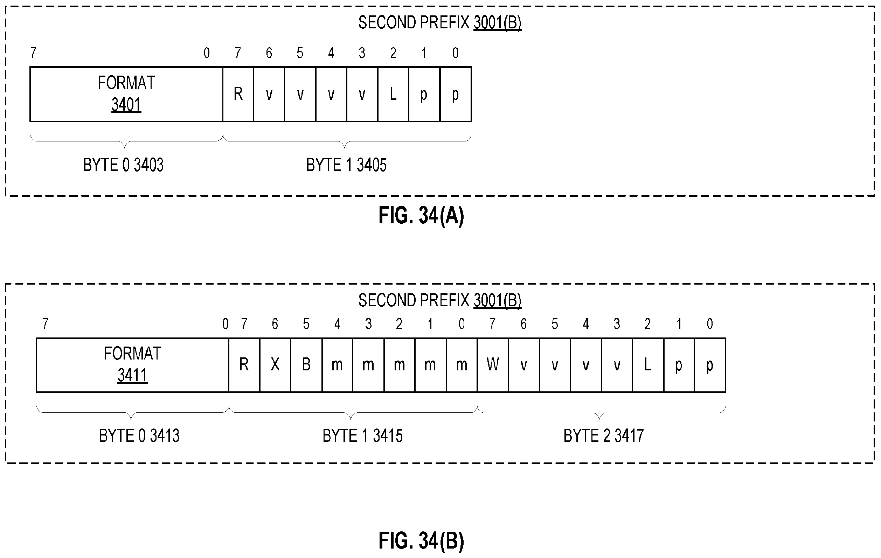

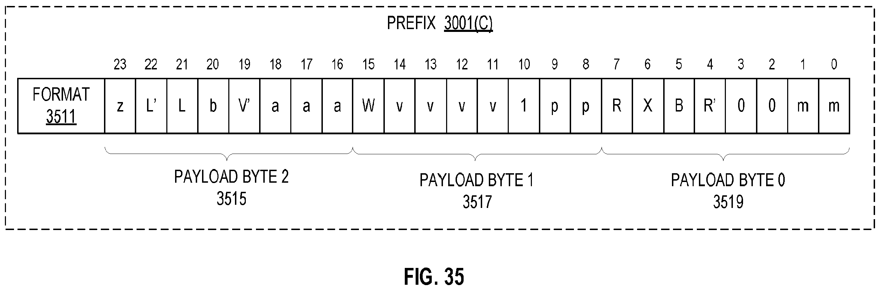

Examples of a format for an integer horizontal add reduction instruction include VPHRADD{S}[BD, WD, D, Q] DST {k1}, SRC1. In some examples, VPHRADD is a base opcode mnemonic of the instruction which may be supplemented as detailed above. BD indicates the source data elements are byte sized and the destination data elements are double-word sized, WD indicates source data elements are word sized and the destination data elements are double-word sized, D indicates source data elements destination data elements are double-word sized, and/or D indicates source data elements destination data elements are double-word sized. When {S} is in the mnemonic it indicates a signed operation. For example, VPHARADDSBD indicates horizontal add reduction using signed byte source data elements wherein the destination stores double-word data elements. The opcode 3003 itself, and potentially aspects of a prefix 3001, provides an indication that a horizontal add reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal add reduction instruction include VPHRADD{S}[BD, WD, D, Q] DST {k1}, SRC1, SRC2. In some examples, VPHRADD is a base opcode mnemonic of the instruction which may be supplemented as detailed above. BD indicates the source data elements are byte sized and the destination data elements are double-word sized, WD indicates source data elements are word sized and the destination data elements are double-word sized, D indicates source data elements destination data elements are double-word sized, and/or D indicates source data elements destination data elements are double-word sized. When {S} is in the mnemonic it indicates a signed operation. For example, VPHARADDSBD indicates horizontal add reduction using signed byte source data elements wherein the destination stores double-word data elements. The opcode 3003 itself, and potentially aspects of a prefix 3001, provides an indication that a horizontal add reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal add reduction instruction include VPHRADD [PD, PS, PH, BF16] DST {k1}, SRC1. In some examples, VPHRADD is a base opcode mnemonic of the instruction which may be supplemented as detailed above. PH indicates the data elements are FP16, PS indicates the data elements are FP32, PD indicates the data elements are FP64, and BF16 indicates the data elements are BF16. For example, VPHARADDPH indicates horizontal add reduction using FP16 data elements. The opcode 3003 itself, and potentially aspects of a prefix 3001, provides an indication that a horizontal add reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal add reduction instruction include VPHRADD [PH, BF16][PS] DST {k1}, SRC1, SRC2. In some examples, VPHRADD is a base opcode mnemonic of the instruction which may be supplemented as detailed above. PH indicates the source data elements are FP16, PS indicates the destination data elements are FP32, and BF16 indicates the source data elements are BF16. For example, VPHARADDPHPS indicates horizontal add reduction using FP16 source data elements wherein the destination stores FP32 elements. The opcode 3003 itself, and potentially aspects of a prefix 3001, provides an indication that a horizontal add reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

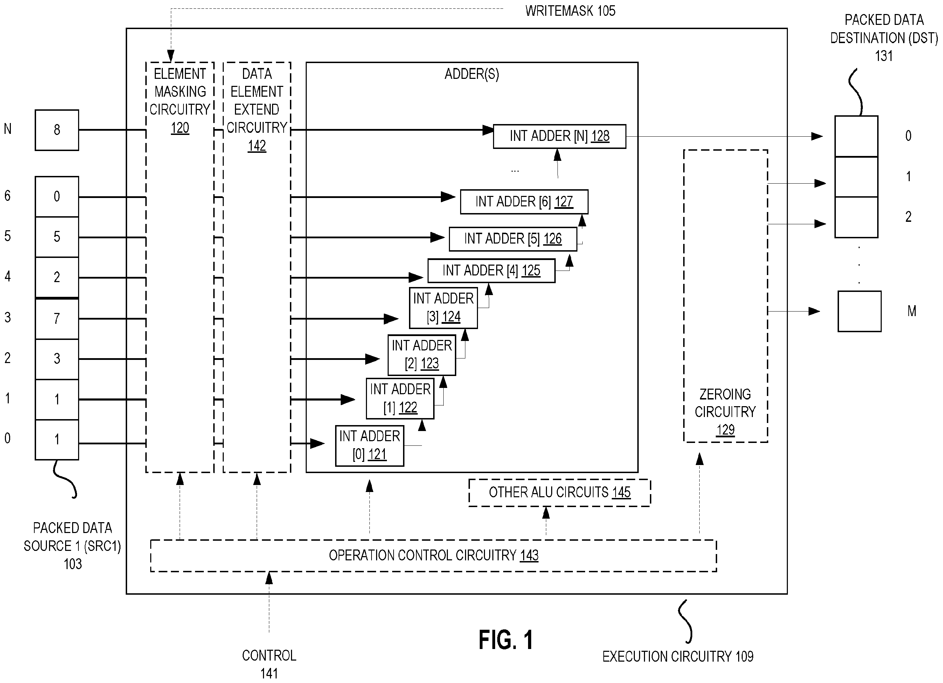

FIG. 1 illustrates example executions of a horizontal add reduction instruction. While this illustration is in little endian format, the principles discussed herein work in big endian format. In this example, the execution of the horizontal add reduction instruction sums non-masked data elements from a single source to generate an addition reduction. For example, when data elements of positions [0], [2], and [4] of the source are not masked (meaning they are to be included in the summation) the result of the addition reduction is the sum of those data elements. In some examples, the sum is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with B, W, D, or Q. In some examples, the opcode indicates if the addition is to be signed or not. In this example, the opcode mnemonic may include an "S" for signed (and in some examples a "U" for unsigned).

In this illustration, a packed data source (SRC1) 103 stores a plurality of packed data elements (shown here as 0 to N). As noted above, in some examples SRC1 103 is a packed data (e.g., vector or SIMD) register. In other examples, SRC1 103 is one or more locations in memory.

SRC1103 is provided to execution circuitry 109 which is to perform the horizontal add reduction. Depending on the example, the execution circuitry 109 may include a plurality of adders (shown as integer adder circuitries 0 - N 121-128) to perform the horizontal add reduction and store a result in destination 131. As shown, the output of each adder is fed into an adder for a more significant data element position. (Note that integer adder 0 121 may not be technically needed.) While illustration shows N integer adders, in some examples, the same adder is re-used multiple times and this illustrates a logical implementation. In some examples, the execution circuitry 109 is a part of a pipeline execution (such an execute stage 2716). In some examples, the execution circuitry 109 is a part of, or comprises, execution unit(s) circuitry 2762 and/or execution circuitry 2209. The execution circuitry 109 comprises combinational logic circuitry in some examples.

In some examples, when the data elements of the source 103 and destination 131 are not the same size, the data elements of SRC1 103 are extended using data element extend circuitry 142. For unsigned additions the data elements of SRC1103 are zero extended and for signed additions the data elements of SRC1103 are sign extended.

In some examples, values in a mask (e.g., writemask 105) provided, or referenced by, the instruction are used to selectively mask corresponding data element positions of SRC1103 using element masking circuitry 120. For example, bit position [0] of the mask 105 indicates how data element position [0] of SRC1103 is to be treated. In some examples, the mask is provided by a writemask operand. In some examples, the mask is provided by an immediate. In some examples, the mask is provided by a non-writemask register operand. In some examples, a 0 for a value in a bit position of the writemask 105 indicates to not provide a data element in a corresponding data element position (or provide an identity value depending on the implementation). For example, when the mask[0] is 0, in some instances, the data element of SRC1[0] 103 is not fed to adder 121.

In this illustration, a data element from a least significant data element position of SRC1 103 is provided to integer adder[0] 121. In some examples, the result is stored in data element position [0] of DST 131.

In some examples, the remaining data elements of DST 131 are zeroed using zeroing circuitry 129. Note that the number of data elements of the DST 131 and SRC1 103 may not be the same.

As noted above, the datatype and size may vary depending on the opcode, etc. In some examples, a decoder and/or scheduler provides this information (as control 141) to the execution circuitry 109 that allows for the proper execution unit type (e.g., integer adder) to be used. In some examples, operation control circuitry 143 configures the execution circuitry 109 according to that control information 141 to use one or more integer adders instead of other logic circuits 145 such as Boolean logic circuits, etc. In some examples, the operation control circuitry 143 is external to the execution circuitry 109 such as a part of a scheduler such as scheduler 2756.

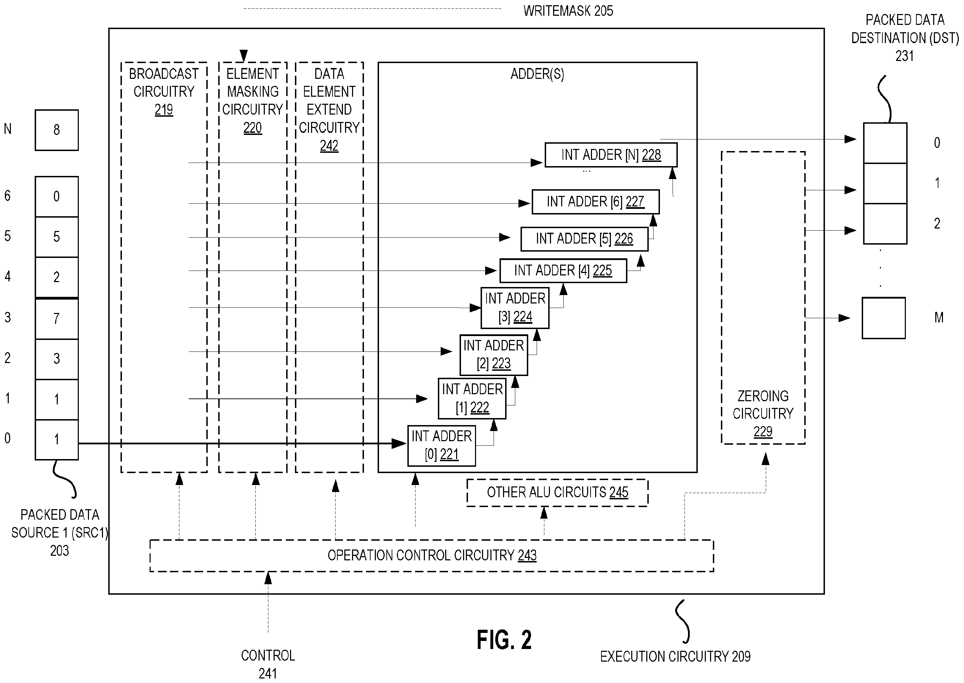

FIG. 2 illustrates example executions of a horizontal add reduction instruction. While this illustration is in little endian format, the principles discussed herein work in big endian format. In this example, the execution of the horizontal add reduction instruction sums non-masked data element positions from broadcasted data element of a single source to generate an addition reduction. The result of the addition reduction is the sum of those data elements. In some examples, the sum is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with B, W, D, or Q. In some examples, the opcode indicates if the addition is to be signed or not. In this example, the opcode mnemonic may include an "S" for signed (and in some examples a "U" for unsigned).

In this illustration, a packed data source (SRC1) 203 stores a plurality of packed data elements (shown here as 0 to N). As noted above, in some examples SRC1 203 is a packed data (e.g., vector or SIMD) register. In other examples, SRC1 203 is one or more locations in memory.

SRC1 203 is provided to execution circuitry 209 which is to perform the horizontal add reduction. In this example, broadcast circuitry 219 may broadcast a single data element to all of the adders as a first input. In some examples, the data element from the least significant data element position of SRC1 203 is broadcast.

In some examples, element masking circuitry is used to determine which adders will receive the single data element. In some examples, values in a mask (e.g., writemask 205) provided, or referenced by, the instruction are used to selectively mask corresponding data element positions of SRC1 203 (and corresponding adders) using element masking circuitry 220. For example, bit position [1] of the mask 205 indicates how an adder associated with data element position [1] of SRC1 203 is to be treated. In some examples, the mask is provided by a writemask operand. In some examples, the mask is provided by an immediate. In some examples, the mask is provided by a non-writemask register operand. In some examples, a 0 for a value in a bit position of the writemask 205 indicates to not provide a data element in a corresponding data element position. For example, when the mask[1] is 0, in some instances, the data element of SRC1[0] 203 is not broadcast to adder[1] 222.

Depending on the example, the execution circuitry 209 may include a plurality of adders (shown as integer adder circuitries 0 - N 221-228) to perform the horizontal add reduction and store a result in destination 231. As shown, the output of each adder is fed into an adder for a more significant data element position. (Note that integer adder 0 221 may not be technically needed.) While illustration shows N integer adders, in some examples, the same adder is re-used multiple times and this illustrates a logical implementation. In some examples, the execution circuitry 209 is a part of a pipeline execution (such an execute stage 2716). In some examples, the execution circuitry 209 is a part of, or comprises, execution unit(s) circuitry 2762 and/or execution circuitry 2209. The execution circuitry 209 comprises combinational logic circuitry in some examples.

In some examples, when the data elements of the source 203 and destination 231 are not the same size, the data elements of SRC1 203 are extended using data element extend circuitry 242. For unsigned additions the data elements of SRC1 203 are zero extended and for signed additions the data elements of SRC1 203 are sign extended.

In some examples, the remaining data elements of DST 231 are zeroed using zeroing circuitry 229. Note that the number of data elements of the DST 231 and SRC1 203 may not be the same.

As noted above, the datatype and size may vary depending on the opcode, etc. In some examples, a decoder and/or scheduler provides this information (as control 241) to the execution circuitry 209 that allows for the proper execution unit type (e.g., integer adder) to be used. In some examples, operation control circuitry 243 configures the execution circuitry 209 according to that control information 241 to use one or more integer adders instead of other logic circuits 245 such as Boolean logic circuits, etc. In some examples, the operation control circuitry 243 is external to the execution circuitry 209 such as a part of a scheduler such as scheduler 2756.

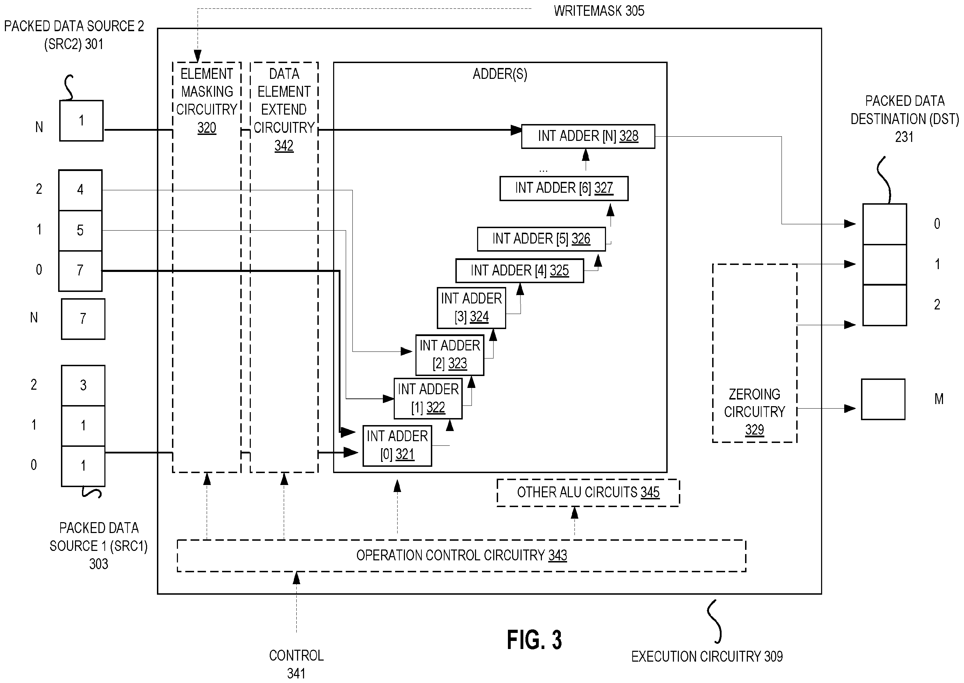

FIG. 3 illustrates example executions of a horizontal add reduction instruction. While this illustration is in little endian format, the principles discussed herein work in big endian format. In this example, the execution of the horizontal add reduction instruction sums a data element from a first source to non-masked data elements from a second source to generate an addition reduction. For example, when data elements of positions [0], [2], and [4] of the second source are not masked (meaning they are to be included in the summation) the result of the addition reduction is the sum of those data elements plus the data element from the first source. In some examples, the sum is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with B, W, D, or Q. In some examples, the opcode indicates if the addition is to be signed or not. In this example, the opcode mnemonic may include an "S" for signed (and in some examples a "U" for unsigned).

In this illustration, a first packed data source (SRC1) 303 and a second packed data source (SRC2) 301 each store a plurality of packed data elements (shown here as 0 to N). As noted above, in some examples SRC1 303 and SRC2 301 are packed data (e.g., vector or SIMD) registers. In other examples, SRC2 301 is one or more locations in memory.

SRC1 303 and SRC2 301 are provided to execution circuitry 309 which is to perform the horizontal add reduction. Depending on the example, the execution circuitry 309 may include a plurality of adders (shown as integer adder circuitries 0 - N 321-328) to perform the horizontal add reduction and store a result in destination 331. As shown, the output of each adder is fed into an adder for a more significant data element position. (Note that integer adder 0 321 may not be technically needed.) While illustration shows N integer adders, in some examples, the same adder is re-used multiple times and this illustrates a logical implementation. In some examples, the execution circuitry 309 is a part of a pipeline execution (such an execute stage 2716). In some examples, the execution circuitry 309 is a part of, or comprises, execution unit(s) circuitry 2762 and/or execution circuitry 2209. The execution circuitry 309 comprises combinational logic circuitry in some examples.

In some examples, when the data elements of the sources 301 and 303 and destination 331 are not the same size, the data elements of the sources 301 and 303 are extended using data element extend circuitry 342. For unsigned additions the data elements of the sources 301 and 303 are zero extended and for signed additions the data elements of the sources 301 and 303 are sign extended.

In some examples, values in a mask (e.g., writemask 305) provided, or referenced by, the instruction are used to selectively mask corresponding data element positions of SRC1 303 using element masking circuitry 320. For example, bit position [0] of the mask 305 indicates how data element position [0] of SRC1 303 is to be treated. In some examples, the mask is provided by a writemask operand. In some examples, the mask is provided by an immediate. In some examples, the mask is provided by a non-writemask register operand. In some examples, a 0 for a value in a bit position of the writemask 305 indicates to not provide a data element in a corresponding data element position (or provide an identity value depending on the implementation). For example, when the mask[0] is 0, in some instances, the data element of SRC1[0] 303 is not fed to adder 321.

In this illustration, a data element from a least significant data element position of SRC1 303 is provided to integer adder[0] 321. In some examples, integer adder[0] 321 also receives a data element from a least significant data element position of SRC2 301 and adds those two data elements together to generate an addition result. In some examples, the result is stored in data element position [0] of DST 331.

In some examples, the remaining data elements of DST 331 are zeroed using zeroing circuitry 329. Note that the number of data elements of the DST 331 and the sources 401 and 403 may not be the same.

As noted above, the datatype and size may vary depending on the opcode, etc. In some examples, a decoder and/or scheduler provides this information (as control 341) to the execution circuitry 309 that allows for the proper execution unit type (e.g., integer adder) to be used. In some examples, operation control circuitry 343 configures the execution circuitry 309 according to that control information 341 to use one or more integer adders instead of other logic circuits 345 such as Boolean logic circuits, etc. In some examples, the operation control circuitry 343 is external to the execution circuitry 309 such as a part of a scheduler such as scheduler 2756.

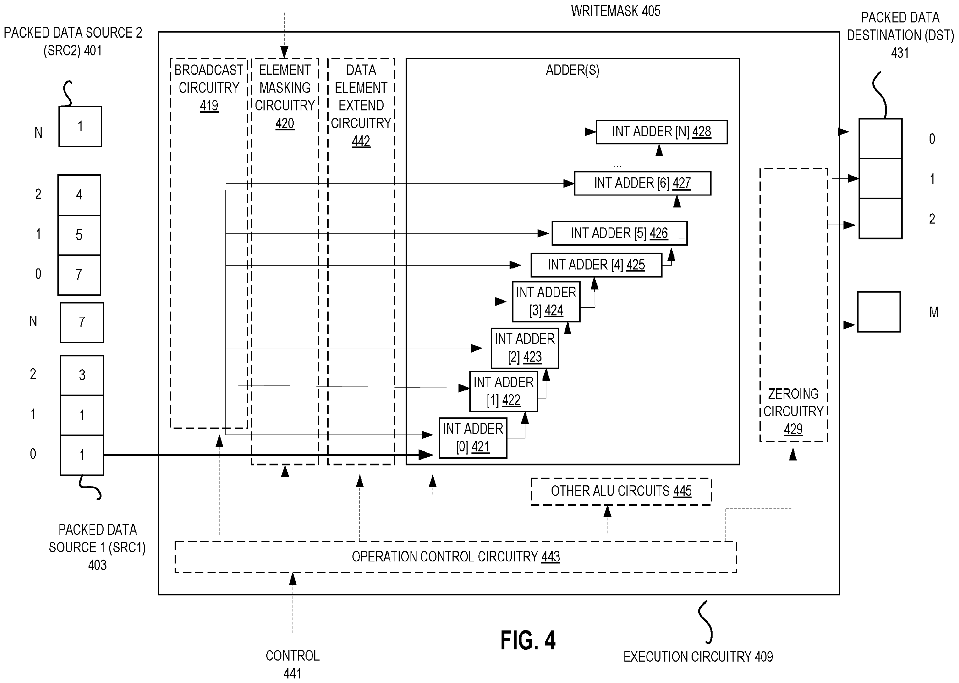

FIG. 4 illustrates example executions of a horizontal add reduction instruction. While this illustration is in little endian format, the principles discussed herein work in big endian format. In this example, the execution of the horizontal add reduction instruction sums a data element from a first source to a broadcasted data element from a second source to generate an addition reduction. In some examples, a mask is used to determine which adders will receive the broadcasted data element. That is the data element may not be broadcasted to each data element. The result of the addition reduction is the sum of those data elements. In some examples, the sum is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with B, W, D, or Q. In some examples, the opcode indicates if the addition is to be signed or not. In this example, the opcode mnemonic may include an "S" for signed (and in some examples a "U" for unsigned).

In this illustration, a first packed data source (SRC1) 403 and a second packed data source (SRC2) 401 each store a plurality of packed data elements (shown here as 0 to N). As noted above, in some examples SRC1 403 and SRC2 401 are packed data (e.g., vector or SIMD) registers. In other examples, SRC2 401 is one or more locations in memory.

SRC1 403 and SRC2 301 is provided to execution circuitry 409 which is to perform the horizontal add reduction. In this example, broadcast circuitry 419 may broadcast a single data element from SRC2 401 to all of the adders as a first input. In some examples, the data element from the least significant data element position of SRC1403 is broadcast.

In some examples, element masking circuitry is used to determine which adders will receive the single data element. In some examples, values in a mask (e.g., writemask 405) provided, or referenced by, the instruction are used to selectively mask corresponding data element positions of SRC2 401 (and corresponding adders) using element masking circuitry 420. For example, bit position [1] of the mask 405 indicates how an adder associated with data element position [1] of SRC2 401 is to be treated. In some examples, the mask is provided by a writemask operand. In some examples, the mask is provided by an immediate. In some examples, the mask is provided by a non-writemask register operand. In some examples, a 0 for a value in a bit position of the writemask 405 indicates to not provide a data element in a corresponding data element position. For example, when the mask[1] is 0, in some instances, the data element of SRC1[0] 401 is not broadcast to adder[1] 422.

Depending on the example, the execution circuitry 409 may include a plurality of adders (shown as integer adder circuitries 0 - N 421-428) to perform the horizontal add reduction and store a result in destination 431. As shown, the output of each adder is fed into an adder for a more significant data element position. (Note that integer adder 0 421 may not be technically needed.) While illustration shows N integer adders, in some examples, the same adder is re-used multiple times and this illustrates a logical implementation. In some examples, the execution circuitry 409 is a part of a pipeline execution (such an execute stage 2716). In some examples, the execution circuitry 409 is a part of, or comprises, execution unit(s) circuitry 2762 and/or execution circuitry 2209. The execution circuitry 409 comprises combinational logic circuitry in some examples.

In some examples, when the data elements of the sources 401 and 403 and destination 431 are not the same size, the data elements of sources 401 and 403 are extended using data element extend circuitry 442. For unsigned additions the data elements of the sources 401 and 403 are zero extended and for signed additions the data elements of the sources 401 and 403 are sign extended.

In some examples, the remaining data elements of DST 431 are zeroed using zeroing circuitry 429. Note that the number of data elements of the DST 431 and sources 401 and 403 may not be the same.

As noted above, the datatype and size may vary depending on the opcode, etc. In some examples, a decoder and/or scheduler provides this information (as control 441) to the execution circuitry 409 that allows for the proper execution unit type (e.g., integer adder) to be used. In some examples, operation control circuitry 443 configures the execution circuitry 409 according to that control information 441 to use one or more integer adders instead of other logic circuits 445 such as Boolean logic circuits, etc. In some examples, the operation control circuitry 443 is external to the execution circuitry 409 such as a part of a scheduler such as scheduler 2756.

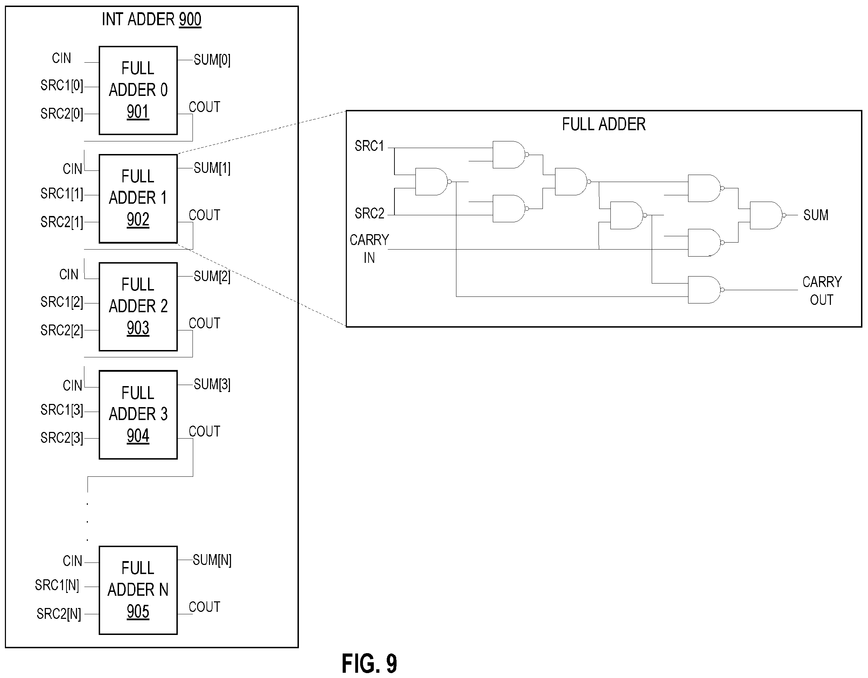

FIG. 9 illustrates examples of an integer adder. As shown, an integer adder 900 includes a plurality of full adders 901-05 which each add two bits (one from each source) and consider a carry in for that addition. An example of a full adder in NAND-gate form is also shown. Note that this is merely illustrative and other types of combinational logic may be used.

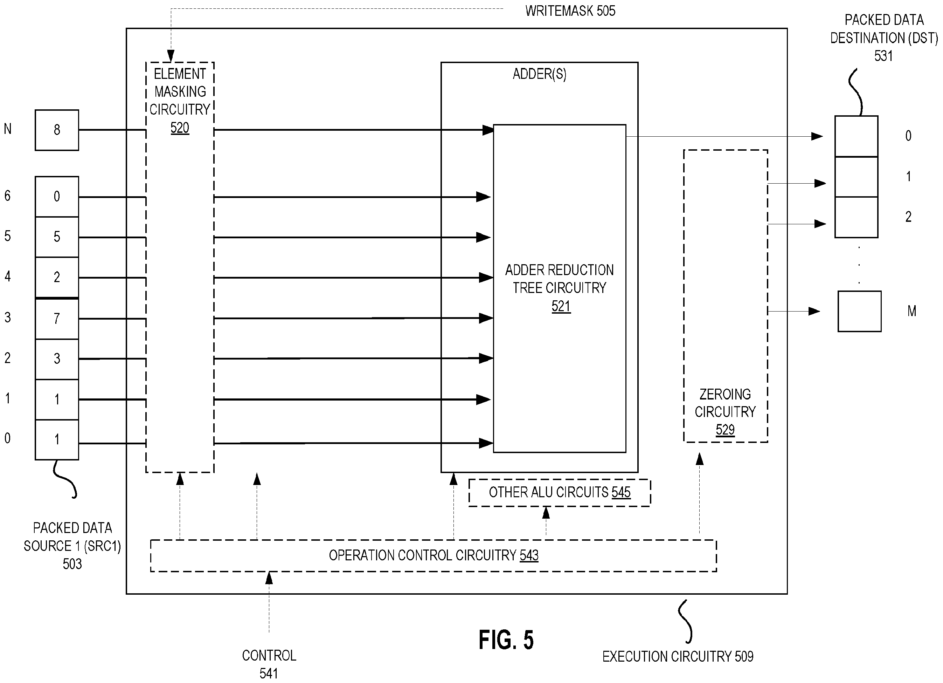

FIG. 5 illustrates example executions of a horizontal add reduction instruction with floating point data elements. While this illustration is in little endian format, the principles discussed herein work in big endian format. In this example, the execution of the horizontal add reduction instruction with floating point data elements sums non-masked data elements from a single source to generate an addition reduction. For example, when data elements of positions [0], [2], and [4] of the source are not masked (meaning they are to be included in the summation) the result of the addition reduction is the sum of those data elements. In some examples, the sum is stored in a least significant data element position of a destination (such as a register or memory location). In some examples, other data elements positions have their data elements zeroed.

The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a packed data source (SRC1) 503 stores a plurality of packed data elements (shown here as 0 to N). As noted above, in some examples SRC1 503 is a packed data (e.g., vector or SIMD) register. In other examples, SRC1503 is one or more locations in memory.

SRC1 503 is provided to execution circuitry 509 which is to perform the horizontal add reduction. Depending on the example, the execution circuitry 509 may include a plurality of floating point to perform the horizontal add reduction and store a result in destination 531. In some examples, the adders are configured as an adder reduction tree circuit 521. In some examples, the execution circuitry 509 is a part of a pipeline execution (such an execute stage 2716). In some examples, the execution circuitry 509 is a part of, or comprises, execution unit(s) circuitry 2762 and/or execution circuitry 2209. The execution circuitry 509 comprises combinational logic circuitry in some examples.

In some examples, values in a mask (e.g., writemask 505) provided, or referenced by, the instruction are used to selectively mask corresponding data element positions of SRC1 503 using element masking circuitry 520. For example, bit position [0] of the mask 505 indicates how data element position [0] of SRC1 503 is to be treated. In some examples, the mask is provided by a writemask operand. In some examples, the mask is provided by an immediate. In some examples, the mask is provided by a non-writemask register operand. In some examples, a 0 for a value in a bit position of the writemask 505 indicates to not provide a data element in a corresponding data element position (or provide an identity value depending on the implementation). For example, when the mask[0] is 0, in some instances, the data element of SRC1[0] 503 is not fed to the adder reduction tree circuit 521.

In this illustration, a data element from a least significant data element position of SRC1 503 is provided to the adder reduction tree circuit 521. In some examples, the adder reduction tree circuit 521 also receives a data element from a least significant data element position of SRC1 503 and adds those two data elements together to generate an addition result. In some examples, the result is stored in data element position [0] of DST 531.

In some examples, the remaining data elements of DST 531 are zeroed using zeroing circuitry 529. Note that the number of data elements of the DST 531 and SRC1 503 may not be the same.

As noted above, the datatype and size may vary depending on the opcode, etc. In some examples, a decoder and/or scheduler provides this information (as control 541) to the execution circuitry 509 that allows for the proper execution unit type (e.g., FP adder) to be used. In some examples, operation control circuitry 543 configures the execution circuitry 509 according to that control information 541 to use one or more FP adders instead of other logic circuits 545 such as Boolean logic circuits, etc. In some examples, the operation control circuitry 543 is external to the execution circuitry 509 such as a part of a scheduler such as scheduler 2756.

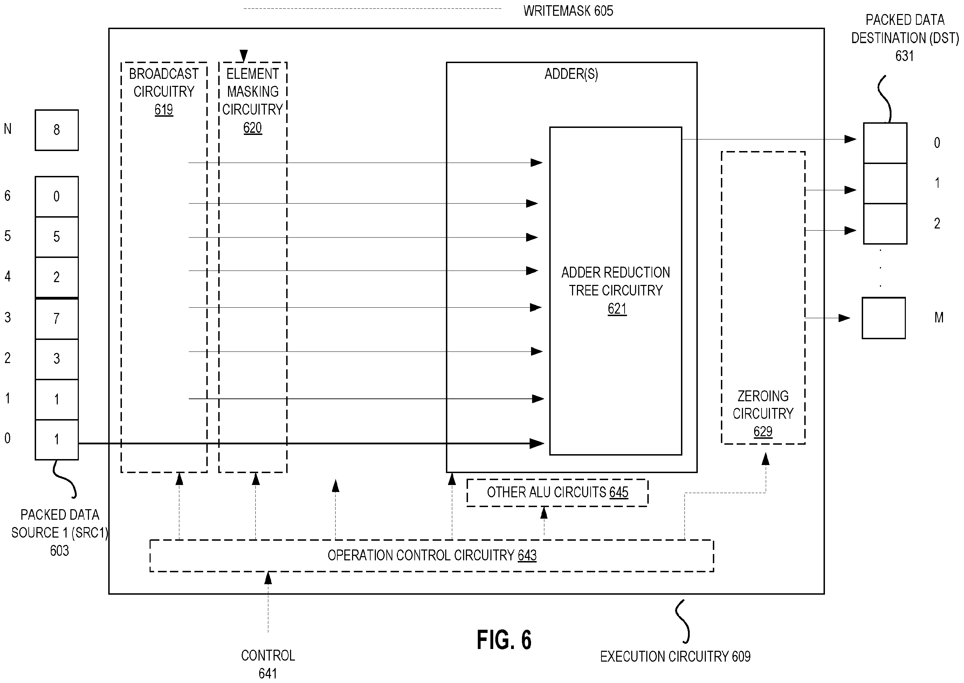

FIG. 6 illustrates example executions of a horizontal add reduction instruction with floating point data elements. While this illustration is in little endian format, the principles discussed herein work in big endian format. In this example, the execution of the horizontal add reduction instruction with floating point data elements sums non-masked data element positions from broadcasted data element of a single source to generate an addition reduction. The result of the addition reduction is the sum of those data elements. In some examples, the sum is stored in a least significant data element position of a destination (such as a register or memory location). In some examples, other data elements positions have their data elements zeroed.

The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a packed data source (SRC1) 603 stores a plurality of packed data elements (shown here as 0 to N). As noted above, in some examples SRC1 603 is a packed data (e.g., vector or SIMD) register. In other examples, SRC1 603 is one or more locations in memory.

SRC1 603 is provided to execution circuitry 609 which is to perform the horizontal add reduction. In this example, broadcast circuitry 619 may broadcast a single data element to all of the adders as a first input. In some examples, the data element from the least significant data element position of SRC1 603 is broadcast.

In some examples, element masking circuitry is used to determine which adders will receive the single data element. In some examples, values in a mask (e.g., writemask 605) provided, or referenced by, the instruction are used to selectively mask corresponding data element positions of SRC1 603 (and corresponding adders) using element masking circuitry 620. For example, bit position [1] of the mask 605 indicates how an adder associated with data element position [1] of SRC1 603 is to be treated. In some examples, the mask is provided by a writemask operand. In some examples, the mask is provided by an immediate. In some examples, the mask is provided by a non-writemask register operand. In some examples, a 0 for a value in a bit position of the writemask 605 indicates to not provide a data element in a corresponding data element position. For example, when the mask[1] is 0, in some instances, the data element of SRC1[0] 603 is not broadcast to the adder reduction tree circuit 521.

Depending on the example, the execution circuitry 609 may include a plurality of floating point adders to perform the horizontal add reduction and store a result in destination 631. In some examples, these floating point adders form the adder reduction tree circuit 621.

In some examples, the execution circuitry 609 is a part of a pipeline execution (such an execute stage 2716). In some examples, the execution circuitry 609 is a part of, or comprises, execution unit(s) circuitry 2762 and/or execution circuitry 2209. The execution circuitry 609 comprises combinational logic circuitry in some examples.

In some examples, the remaining data elements of DST 631 are zeroed using zeroing circuitry 629. Note that the number of data elements of the DST 631 and SRC1 603 may not be the same.

As noted above, the datatype and size may vary depending on the opcode, etc. In some examples, a decoder and/or scheduler provides this information (as control 641) to the execution circuitry 609 that allows for the proper execution unit type (e.g., FP adder) to be used. In some examples, operation control circuitry 643 configures the execution circuitry 609 according to that control information 641 to use one or more FP adders instead of other logic circuits 645 such as Boolean logic circuits, etc. In some examples, the operation control circuitry 643 is external to the execution circuitry 609 such as a part of a scheduler such as scheduler 2756.

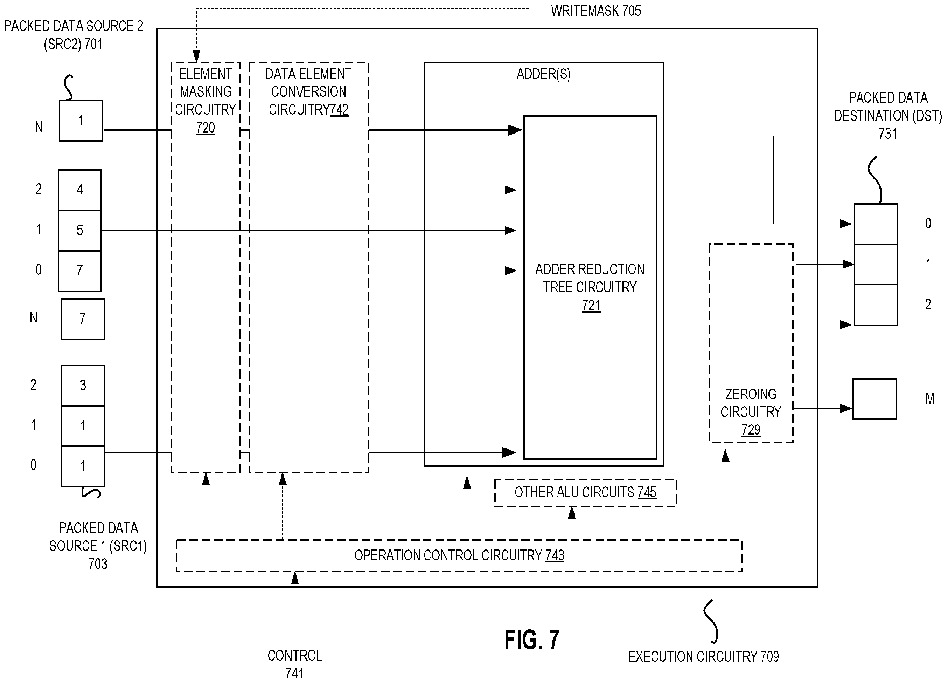

FIG. 7 illustrates example executions of a horizontal add reduction instruction with floating point data elements. While this illustration is in little endian format, the principles discussed herein work in big endian format. In this example, the execution of the horizontal add reduction instruction with floating point data elements sums a data element from a first source to non-masked data elements from a second source to generate an addition reduction. For example, when data elements of positions [0], [2], and [4] of the second source are not masked (meaning they are to be included in the summation) the result of the addition reduction is the sum of those data elements plus the data element from the first source. In some examples, the sum is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a first packed data source (SRC1) 703 and a second packed data source (SRC2) 701 each store a plurality of packed data elements (shown here as 0 to N). As noted above, in some examples SRC1 703 and SRC2 701 are packed data (e.g., vector or SIMD) registers. In other examples, SRC2 701 is one or more locations in memory.

SRC1 703 and SRC2 701 are provided to execution circuitry 709 which is to perform the horizontal add reduction. Depending on the example, the execution circuitry 709 may include a plurality of floating point adders. In some examples, these adders form an adder reduction tree circuit 721.

In some examples, the execution circuitry 709 is a part of a pipeline execution (such an execute stage 2716). In some examples, the execution circuitry 709 is a part of, or comprises, execution unit(s) circuitry 2762 and/or execution circuitry 2209. The execution circuitry 709 comprises combinational logic circuitry in some examples.

In some examples, when the data elements of the sources 701 and 703 and destination 731 are not the same size, the data elements of the sources 701 and 703 are converted using data element conversion circuitry 742.

In some examples, values in a mask (e.g., writemask 705) provided, or referenced by, the instruction are used to selectively mask corresponding data element positions of SRC1 703 using element masking circuitry 720. For example, bit position [0] of the mask 705 indicates how data element position [0] of SRC1 703 is to be treated. In some examples, the mask is provided by a writemask operand. In some examples, the mask is provided by an immediate. In some examples, the mask is provided by a non-writemask register operand. In some examples, a 0 for a value in a bit position of the writemask 705 indicates to not provide a data element in a corresponding data element position (or provide an identity value depending on the implementation). For example, when the mask[0] is 0, in some instances, the data element of SRC1[0] 703 is not fed to the adder reduction tree circuitry 721.

In this illustration, a data element from a least significant data element position of SRC1 703 is provided to the adder reduction tree circuitry 721. In some examples, the result is stored in data element position [0] of DST 731.

In some examples, the remaining data elements of DST 731 are zeroed using zeroing circuitry 729. Note that the number of data elements of the DST 731 and the sources 801 and 803 may not be the same.

As noted above, the datatype and size may vary depending on the opcode, etc. In some examples, a decoder and/or scheduler provides this information (as control 741) to the execution circuitry 709 that allows for the proper execution unit type (e.g., FP adder) to be used. In some examples, operation control circuitry 743 configures the execution circuitry 709 according to that control information 741 to use one or more FP adders instead of other logic circuits 745 such as Boolean logic circuits, etc. In some examples, the operation control circuitry 743 is external to the execution circuitry 709 such as a part of a scheduler such as scheduler 2756.

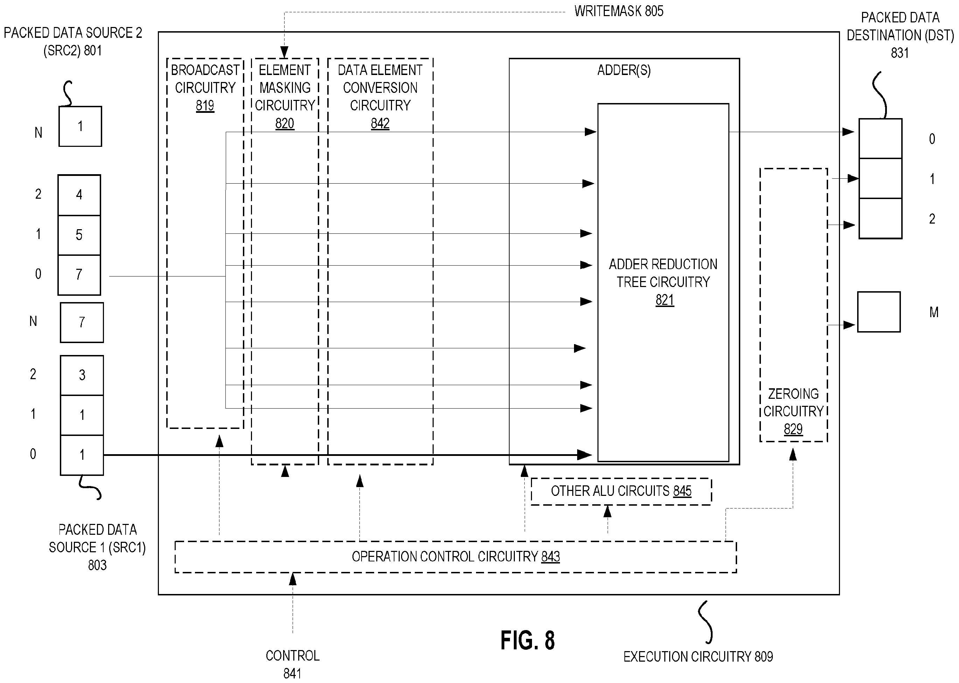

FIG. 8 illustrates example executions of a horizontal add reduction instruction with floating point data elements. While this illustration is in little endian format, the principles discussed herein work in big endian format. In this example, the execution of the horizontal add reduction instruction with floating point data elements sums a data element from a first source to a broadcasted data element from a second source to generate an addition reduction. In some examples, a mask is used to determine which adders will receive the broadcasted data element. That is the data element may not be broadcasted to each data element. The result of the addition reduction is the sum of those data elements. In some examples, the sum is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal add reduction). In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a first packed data source (SRC1) 803 and a second packed data source (SRC2) 801 each store a plurality of packed data elements (shown here as 0 to N). As noted above, in some examples SRC1 803 and SRC2 801 are packed data (e.g., vector or SIMD) registers. In other examples, SRC2 801 is one or more locations in memory.

SRC1 803 and SRC2 701 is provided to execution circuitry 809 which is to perform the horizontal add reduction. The horizontal add reduction is performed by floating point adders. In some examples, the floating point adders form adder reduction tree circuitry 821.

In this example, broadcast circuitry 819 may broadcast a single data element from SRC2 801 to all of the adders as a first input. In some examples, the data element from the least significant data element position of SRC1 803 is broadcast.

In some examples, element masking circuitry is used to determine which adders will receive the single data element. In some examples, values in a mask (e.g., writemask 805) provided, or referenced by, the instruction are used to selectively mask corresponding data element positions of SRC2 801 (and corresponding adders) using element masking circuitry 820. For example, bit position [1] of the mask 805 indicates how an adder associated with data element position [1] of SRC2 801 is to be treated. In some examples, the mask is provided by a writemask operand. In some examples, the mask is provided by an immediate. In some examples, the mask is provided by a non-writemask register operand. In some examples, a 0 for a value in a bit position of the writemask 805 indicates to not provide a data element in a corresponding data element position. For example, when the mask[1] is 0, in some instances, the data element of SRC1[0] 801 is not broadcast to adder reduction tree circuitry 821.

Depending on the example, the execution circuitry 809 may include a plurality of floating point adders (e.g., adder reduction tree circuitry 821) to perform the horizontal add reduction and store a result in destination 831. In some examples, the execution circuitry 809 is a part of a pipeline execution (such an execute stage 2716). In some examples, the execution circuitry 809 is a part of, or comprises, execution unit(s) circuitry 2762 and/or execution circuitry 2209. The execution circuitry 809 comprises combinational logic circuitry in some examples.

In some examples, when the data elements of the sources 801 and 803 and destination 831 are not the same size, the data elements of sources 801 and 803 are converted using data element conversion circuitry 842.

In some examples, the remaining data elements of DST 831 are zeroed using zeroing circuitry 829. Note that the number of data elements of the DST 831 and sources 801 and 803 may not be the same.

Examples of horizontal logical reductions between elements of the same vector register are described now. In some examples, instructions to perform AND, OR and XOR logical reductions between elements of the same vector register. The instructions support reductions for at least element widths of 8, 16, 32, 64, 128 and 256-bit. The instructions also support masking. In case of OR and XOR, masked-out elements are ignored and treated as zero. In some examples, as in the case of AND where zero is not an identity element, the masked versions of the instruction are defined with an additional unmasked accumulator source and ignore the masked elements.

Examples of a format for a horizontal logical OR reduction instruction include VPHROR[B, W, D, Q, DQ, QQ] DST, SRC1. In some examples, VPHROR is a base opcode mnemonic of the instruction which may be supplemented as detailed above. B indicates byte sized data elements, W indicates word sized data elements, D indicates double-word sized data elements, Q indicates quad-word sized data elements, DQ indicates double quad-word sized data elements, and QQ indicates quad quad-word sized data elements. The opcode 3003 itself, and potentially aspects of a prefix 3001, provides an indication that a horizontal logical OR reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35.

Examples of a format for a horizontal logical XOR reduction instruction include VPHRXOR[B, W, D, Q, DQ, QQ] DST {k1}, SRC1. In some examples, VPHRXOR is a base opcode mnemonic of the instruction which may be supplemented as detailed above. B indicates byte sized data elements, W indicates word sized data elements, D indicates double-word sized data elements, Q indicates quad-word sized data elements, DQ indicates double quad-word sized data elements, and QQ indicates quad quad-word sized data elements. The opcode 3003 itself, and potentially aspects of a prefix 3001, provides an indication that a horizontal logical XOR reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for a horizontal logical AND reduction instruction include VPHRAND[B, W, D, Q, DQ, QQ] DST, SRC1. In some examples, VPHRAND is a base opcode mnemonic of the instruction which may be supplemented as detailed above. B indicates byte sized data elements, W indicates word sized data elements, D indicates double-word sized data elements, Q indicates quad-word sized data elements, DQ indicates double quad-word sized data elements, and QQ indicates quad quad-word sized data elements. The opcode 3003 itself, and potentially aspects of a prefix 3001, provides an indication that a horizontal logical OR reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35.

Examples of a format for an integer horizontal logical AND reduction instruction include VPHRAND[B, W, D, Q, DQ, QQ] DST {k1}, SRC1, SRC2. In some examples, VPHRAND is a base opcode mnemonic of the instruction which may be supplemented as detailed above. BD indicates the source data elements are byte sized and the destination data elements are double-word sized, WD indicates source data elements are word sized and the destination data elements are double-word sized, D indicates source data elements destination data elements are double-word sized, and/or D indicates source data elements destination data elements are double-word sized. The opcode 3003 itself, and potentially aspects of a prefix 3001, provides an indication that a horizontal logical AND reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

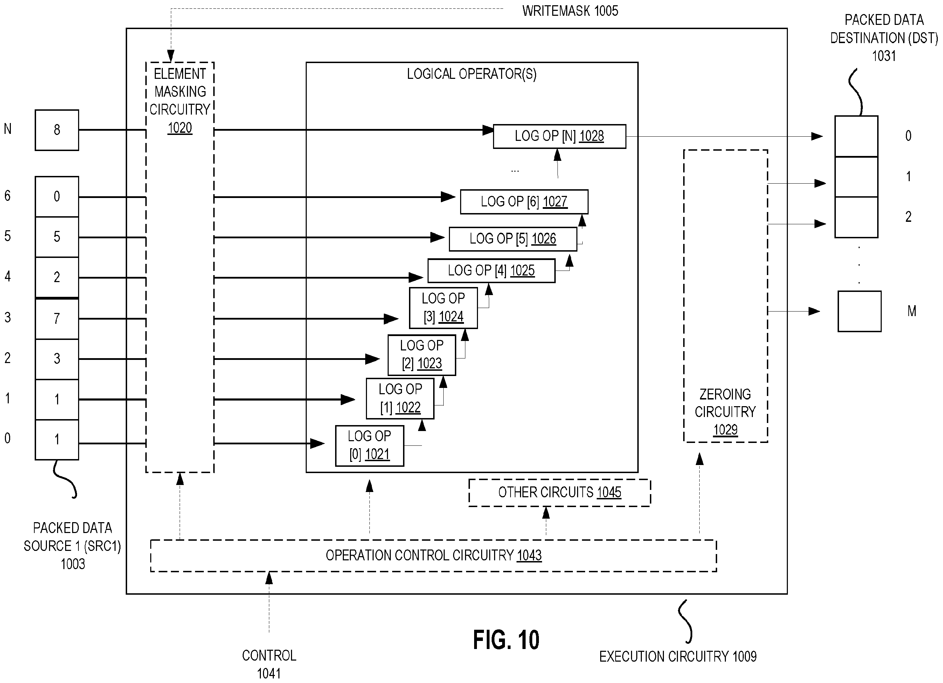

FIG. 10 illustrates example executions of a horizontal logical operation reduction instruction. While this illustration is in little endian format, the principles discussed herein work in big endian format. In this example, the execution of the horizontal logical operation reduction instruction performs a logical operation non-masked data elements from a single source to generate a logical operation reduction. Logical operations may include, but are not limited to: logical OR, logical NOR, logical AND, logical NAND, logical exclusive OR (XOR), etc. For example, when data elements of positions [0], [2], and [4] of the source are not masked (meaning they are to be included in the logical operation) the result of the logical operation reduction is performing the logical operation on each of those data elements. In some examples, the result of the logical operation(s) is stored in a least significant data element position of a destination (such as a register or memory location). In some examples, other data elements positions have their data elements zeroed.

The opcode of the instruction indicates the logical operation to be performed. In some examples, the opcode also indicates, or at least partially indicates, a datatype and size of elements to be operated on. In this example, the opcode mnemonic may include such an identification with B, W, D, Q, DQ (128-bit), and/or QQ (256-bit).

In this illustration, a packed data source (SRC1) 1003 stores a plurality of packed data elements (shown here as 0 to N). As noted above, in some examples SRC1 1003 is a packed data (e.g., vector or SIMD) register. In other examples, SRC11003 is one or more locations in memory.

SRC1 1003 is provided to execution circuitry 1009 which is to perform the horizontal logical operation reduction. Depending on the example, the execution circuitry 1009 may include a plurality of logical operation circuits (shown as logical operation circuits 0 - N 1021-1028) to perform the horizontal logical operation reduction and store a result in destination 1031. As shown, the output of each logical operation circuit is fed into a logical operation circuit for a more significant data element position. (Note that logical operation circuit 0 1021 may not be technically needed.) While illustration shows N logical operation circuits, in some examples, the same logical operation circuit is re-used multiple times and this illustrates a logical implementation. In some examples, the execution circuitry 1009 is a part of a pipeline execution (such an execute stage 2716). In some examples, the execution circuitry 1009 is a part of, or comprises, execution unit(s) circuitry 2762 and/or execution circuitry 2209. The execution circuitry 1009 comprises combinational logic circuitry in some examples.

In some examples, values in a mask (e.g., writemask 1005) provided, or referenced by, the instruction are used to selectively mask corresponding data element positions of SRC11003 using element masking circuitry 1020. For example, bit position [0] of the mask 1005 indicates how data element position [0] of SRC1 1003 is to be treated. In some examples, the mask is provided by a writemask operand. In some examples, the mask is provided by an immediate. In some examples, the mask is provided by a non-writemask register operand. In some examples, a 0 for a value in a bit position of the writemask 1005 indicates to not provide a data element in a corresponding data element position (or provide an identity value depending on the implementation). For example, when the mask[0] is 0, in some instances, the data element of SRC1[0] 1003 is not fed to logical operation circuit 1021.

In this illustration, a data element from a least significant data element position of SRC1 1003 is provided to integer logical operation circuit[0] 1021. In some examples, the result is stored in data element position [0] of DST 1031.

In some examples, the remaining data elements of DST 1031 are zeroed using zeroing circuitry 1029. Note that the number of data elements of the DST 1031 and SRC1 1003 may not be the same.

As noted above, the datatype and size may vary depending on the opcode, etc. In some examples, a decoder and/or scheduler provides this information (as control 1041) to the execution circuitry 1009 that allows for the proper execution unit type (e.g., logical operation circuit) to be used. In some examples, operation control circuitry 1043 configures the execution circuitry 1009 according to that control information 1041 to use one or more logical operation circuits instead of other logic circuits 1045 such as Boolean logic circuits, etc. In some examples, the operation control circuitry 1043 is external to the execution circuitry 1009 such as a part of a scheduler such as scheduler 2756.

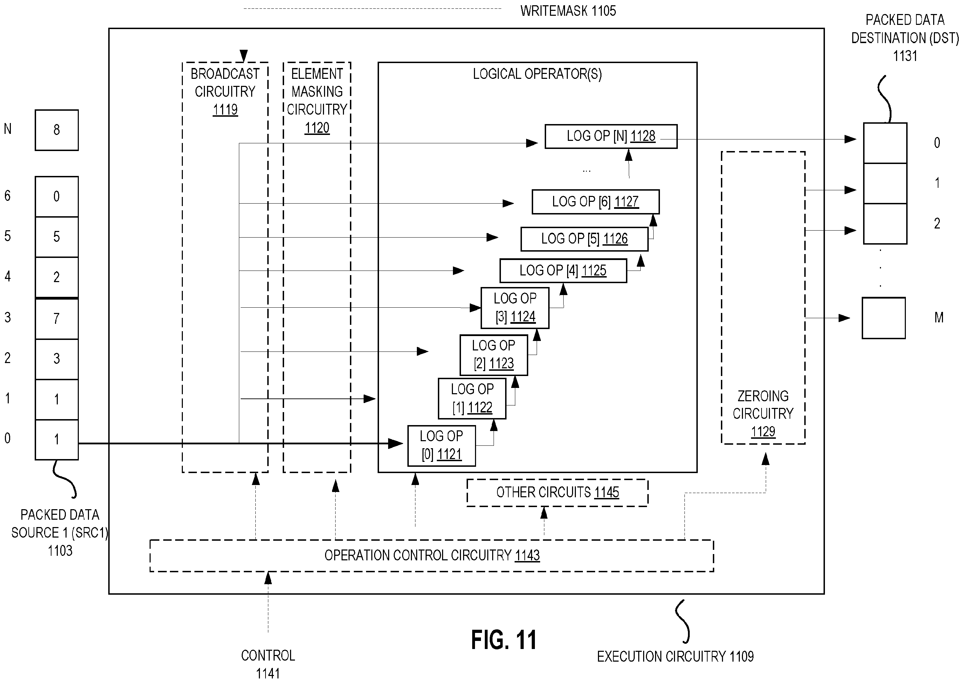

FIG. 11 illustrates example executions of a horizontal logical operation reduction instruction. While this illustration is in little endian format, the principles discussed herein work in big endian format. In this example, the execution of the horizontal logical operation reduction instruction performs a logical operation on non-masked data element positions from broadcasted data element of a single source to generate a logical operation reduction. The result of the logical operation reduction is the performance of a logical operation of those data elements. In some examples, the result is stored in a least significant data element position of a destination (such as a register or memory location). In some examples, other data elements positions have their data elements zeroed.

The opcode of the instruction indicates the logical operation to be performed. In some examples, the opcode also indicates, or at least partially indicates, a datatype and size of elements to be operated on. In this example, the opcode mnemonic may include such an identification with B, W, D, Q, DQ (128-bit), and/or QQ (256-bit).

In this illustration, a packed data source (SRC1) 1103 stores a plurality of packed data elements (shown here as 0 to N). As noted above, in some examples SRC11103 is a packed data (e.g., vector or SIMD) register. In other examples, SRC11103 is one or more locations in memory.

SRC1 1103 is provided to execution circuitry 1109 which is to perform the horizontal logical operation reduction. In this example, broadcast circuitry 1119 may broadcast a single data element to all of the logical operation circuits as a first input. In some examples, the data element from the least significant data element position of SRC11103 is broadcast.

In some examples, element masking circuitry is used to determine which logical operation circuits will receive the single data element. In some examples, values in a mask (e.g., writemask 1105) provided, or referenced by, the instruction are used to selectively mask corresponding data element positions of SRC1 1103 (and corresponding logical operation circuits) using element masking circuitry 1120. For example, bit position [1] of the mask 1105 indicates how a logical operation circuit associated with data element position [1] of SRC11103 is to be treated. In some examples, the mask is provided by a writemask operand. In some examples, the mask is provided by an immediate. In some examples, the mask is provided by a non-writemask register operand. In some examples, a 0 for a value in a bit position of the writemask 1105 indicates to not provide a data element in a corresponding data element position. For example, when the mask[1] is 0, in some instances, the data element of SRC1[0] 1103 is not broadcast to logical operation circuit[1] 1122.

Depending on the example, the execution circuitry 1109 may include a plurality of logical operation circuits (shown as logical operation circuits 0 - N 1121-1128) to perform the horizontal logical operation reduction and store a result in destination 1131. As shown, the output of each logical operation circuit is fed into a logical operation circuit for a more significant data element position. (Note that logical operation circuit 0 1121 may not be technically needed.) While illustration shows N logical operation circuits, in some examples, the same logical operation circuit is re-used multiple times and this illustrates a logical implementation. In some examples, the execution circuitry 1109 is a part of a pipeline execution (such an execute stage 2716). In some examples, the execution circuitry 1109 is a part of, or comprises, execution unit(s) circuitry 2762 and/or execution circuitry 2209. The execution circuitry 1109 comprises combinational logic circuitry in some examples.

In some examples, the remaining data elements of DST 1131 are zeroed using zeroing circuitry 1129. Note that the number of data elements of the DST 1131 and SRC11103 may not be the same.

As noted above, the datatype and size may vary depending on the opcode, etc. In some examples, a decoder and/or scheduler provides this information (as control 1141) to the execution circuitry 1109 that allows for the proper execution unit type (e.g., logical operation circuit) to be used. In some examples, operation control circuitry 1143 configures the execution circuitry 1109 according to that control information 1141 to use one or more logical operation circuits instead of other logic circuits 1145 such as Boolean logic circuits, etc. In some examples, the operation control circuitry 1143 is external to the execution circuitry 1109 such as a part of a scheduler such as scheduler 2756.

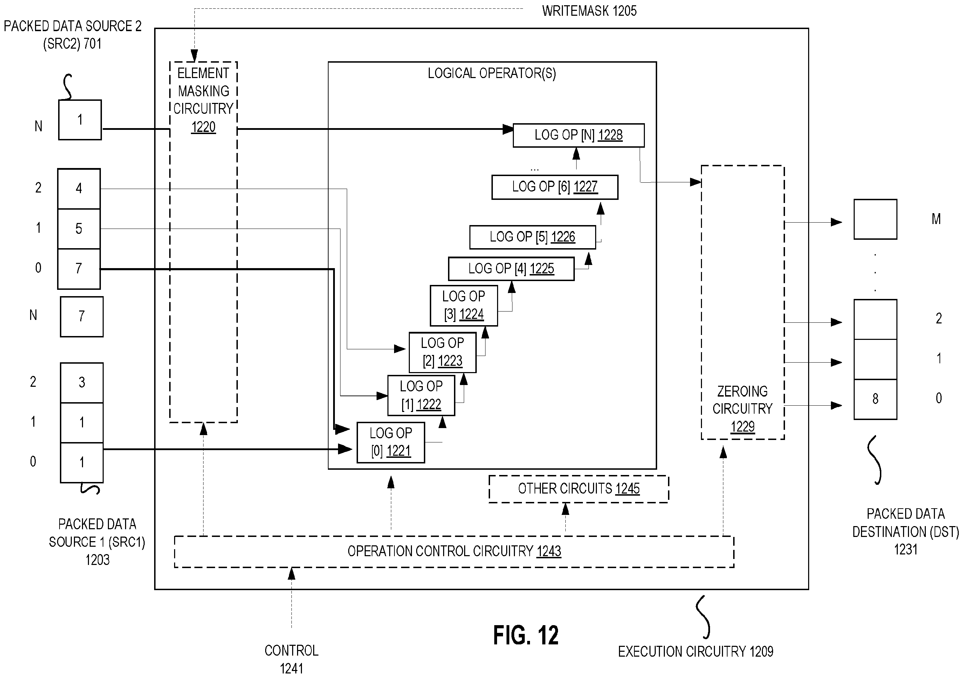

FIG. 12 illustrates example executions of a horizontal logical operation reduction instruction. While this illustration is in little endian format, the principles discussed herein work in big endian format. In this example, the execution of the horizontal logical operation reduction instruction performs a logical operation a data element from a first source to non-masked data elements from a second source to generate a logical operation reduction. For example, when data elements of positions [0], [2], and [4] of the second source are not masked (meaning they are to be included in the summation) the result of the logical operation reduction is the sum of those data elements plus the data element from the first source. In some examples, the result is stored in a least significant data element position of a destination (such as a register or memory location). In some examples, other data elements positions have their data elements zeroed.

The opcode of the instruction indicates the logical operation to be performed. In some examples, the opcode also indicates, or at least partially indicates, a datatype and size of elements to be operated on. In this example, the opcode mnemonic may include such an identification with B, W, D, Q, DQ (128-bit), and/or QQ (256-bit).

In this illustration, a first packed data source (SRC1) 1203 and a second packed data source (SRC2) 1201 each store a plurality of packed data elements (shown here as 0 to N). As noted above, in some examples SRC1 1203 and SRC2 1201 are packed data (e.g., vector or SIMD) registers. In other examples, SRC2 1201 is one or more locations in memory.

SRC1 1203 and SRC2 1201 are provided to execution circuitry 1209 which is to perform the horizontal logical operation reduction. Depending on the example, the execution circuitry 1209 may include a plurality of logical operation circuits (shown as logical operation circuits 0 - N 1221-1228) to perform the horizontal logical operation reduction and store a result in destination 1231. As shown, the output of each logical operation circuit is fed into a logical operation circuit for a more significant data element position. (Note that logical operation circuit 0 1221 may not be technically needed.) While illustration shows N logical operation circuits, in some examples, the same logical operation circuit is re-used multiple times and this illustrates a logical implementation. In some examples, the execution circuitry 1209 is a part of a pipeline execution (such an execute stage 2716). In some examples, the execution circuitry 1209 is a part of, or comprises, execution unit(s) circuitry 2762 and/or execution circuitry 2209. The execution circuitry 1209 comprises combinational logic circuitry in some examples.

In some examples, when the data elements of the sources 1201 and 1203 and destination 1231 are not the same size, the data elements of the sources 1201 and 1203 are extended using data element extend circuitry 1242.

In some examples, values in a mask (e.g., writemask 1205) provided, or referenced by, the instruction are used to selectively mask corresponding data element positions of SRC11203 using element masking circuitry 1220. For example, bit position [0] of the mask 1205 indicates how data element position [0] of SRC1 1203 is to be treated. In some examples, the mask is provided by a writemask operand. In some examples, the mask is provided by an immediate. In some examples, the mask is provided by a non-writemask register operand. In some examples, a 0 for a value in a bit position of the writemask 1205 indicates to not provide a data element in a corresponding data element position (or provide an identity value depending on the implementation). For example, when the mask[0] is 0, in some instances, the data element of SRC1[0] 1203 is not fed to logical operation circuit 1221.

In this illustration, a data element from a least significant data element position of SRC1 1203 is provided to integer logical operation circuit[0] 1221. In some examples, integer logical operation circuit[0] 1221 also receives a data element from a least significant data element position of SRC2 1201 and performs a logical operation on those two data elements to generate a logical operation result. In some examples, the result is stored in data element position [0] of DST 1231.

In some examples, the remaining data elements of DST 1231 are zeroed using zeroing circuitry 1229. Note that the number of data elements of the DST 1231 and the sources 1301 and 1303 may not be the same.

As noted above, the datatype and size may vary depending on the opcode, etc. In some examples, a decoder and/or scheduler provides this information (as control 1241) to the execution circuitry 1209 that allows for the proper execution unit type (e.g., logical operation circuit) to be used. In some examples, operation control circuitry 1243 configures the execution circuitry 1209 according to that control information 1241 to use one or more logical operation circuits instead of other logic circuits 1245 such as Boolean logic circuits, etc. In some examples, the operation control circuitry 1243 is external to the execution circuitry 1209 such as a part of a scheduler such as scheduler 2756.

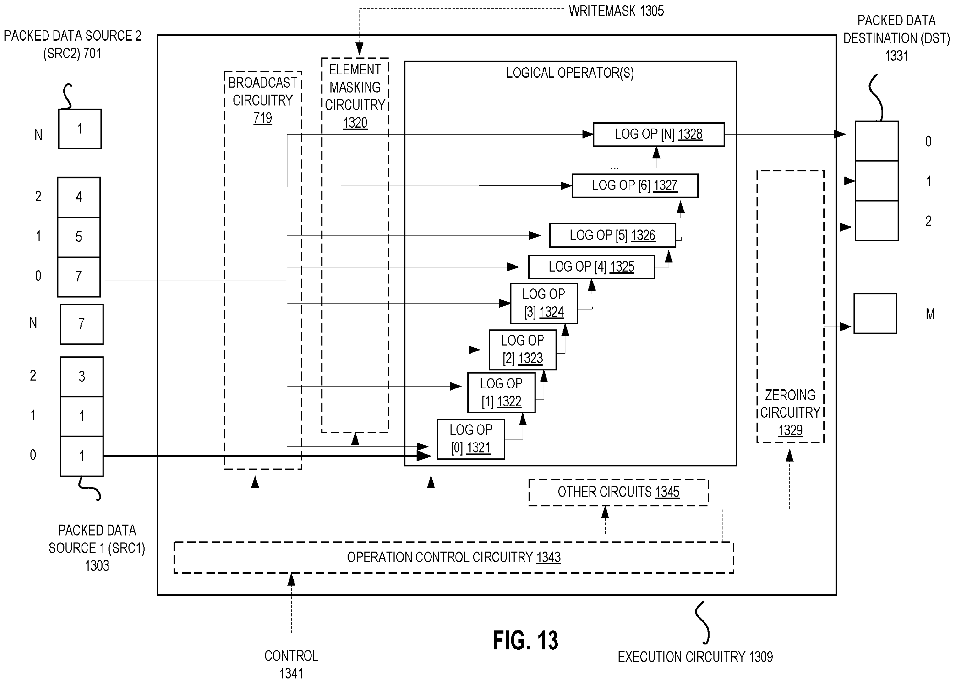

FIG. 13 illustrates example executions of a horizontal logical operation reduction instruction. While this illustration is in little endian format, the principles discussed herein work in big endian format. In this example, the execution of the horizontal logical operation reduction instruction performs a logical operation a data element from a first source to a broadcasted data element from a second source to generate a logical operation reduction. In some examples, a mask is used to determine which logical operation circuits will receive the broadcasted data element. That is the data element may not be broadcasted to each data element. The result of the logical operation reduction is the performance of a logical operation of those data elements. In some examples, the result is stored in a least significant data element position of a destination (such as a register or memory location). In some examples, other data elements positions have their data elements zeroed.

The opcode of the instruction indicates the logical operation to be performed. In some examples, the opcode also indicates, or at least partially indicates, a datatype and size of elements to be operated on. In this example, the opcode mnemonic may include such an identification with B, W, D, Q, DQ (128-bit), and/or QQ (256-bit).

In this illustration, a first packed data source (SRC1) 1303 and a second packed data source (SRC2) 1301 each store a plurality of packed data elements (shown here as 0 to N). As noted above, in some examples SRC1 1303 and SRC2 1301 are packed data (e.g., vector or SIMD) registers. In other examples, SRC2 1301 is one or more locations in memory.

SRC1 1303 and SRC2 1201 is provided to execution circuitry 1309 which is to perform the horizontal logical operation reduction. In this example, broadcast circuitry 1319 may broadcast a single data element from SRC2 1301 to all of the logical operation circuits as a first input. In some examples, the data element from the least significant data element position of SRC1 1303 is broadcast.

In some examples, element masking circuitry is used to determine which logical operation circuits will receive the single data element. In some examples, values in a mask (e.g., writemask 1305) provided, or referenced by, the instruction are used to selectively mask corresponding data element positions of SRC2 1301 (and corresponding logical operation circuits) using element masking circuitry 1320. For example, bit position [1] of the mask 1305 indicates how a logical operation circuit associated with data element position [1] of SRC2 1301 is to be treated. In some examples, the mask is provided by a writemask operand. In some examples, the mask is provided by an immediate. In some examples, the mask is provided by a non-writemask register operand. In some examples, a 0 for a value in a bit position of the writemask 1305 indicates to not provide a data element in a corresponding data element position. For example, when the mask[1] is 0, in some instances, the data element of SRC1[0] 1301 is not broadcast to logical operation circuit[1] 1322.

Depending on the example, the execution circuitry 1309 may include a plurality of logical operation circuits (shown as logical operation circuits 0 - N 1321-1328) to perform the horizontal logical operation reduction and store a result in destination 1331. As shown, the output of each logical operation circuit is fed into a logical operation circuit for a more significant data element position. (Note that logical operation circuit 0 1321 may not be technically needed.) While illustration shows N logical operation circuits, in some examples, the same logical operation circuit is re-used multiple times and this illustrates a logical implementation. In some examples, the execution circuitry 1309 is a part of a pipeline execution (such an execute stage 2716). In some examples, the execution circuitry 1309 is a part of, or comprises, execution unit(s) circuitry 2762 and/or execution circuitry 2209. The execution circuitry 1309 comprises combinational logic circuitry in some examples.

In some examples, when the data elements of the sources 1301 and 1303 and destination 1331 are not the same size, the data elements of sources 1301 and 1303 are extended using data element extend circuitry 1342.

In some examples, the remaining data elements of DST 1331 are zeroed using zeroing circuitry 1329. Note that the number of data elements of the DST 1331 and sources 1301 and 1303 may not be the same.

As noted above, the datatype and size may vary depending on the opcode, etc. In some examples, a decoder and/or scheduler provides this information (as control 1341) to the execution circuitry 1309 that allows for the proper execution unit type (e.g., logical operation circuit) to be used. In some examples, operation control circuitry 1343 configures the execution circuitry 1309 according to that control information 1341 to use one or more logical operation circuits instead of other logic circuits 1345 such as Boolean logic circuits, etc. In some examples, the operation control circuitry 1343 is external to the execution circuitry 1309 such as a part of a scheduler such as scheduler 2756.

Examples of horizontal minimum/maximum (min/max) reductions between elements of the same vector register are described now. In the case of minimum/maximum reductions, an example could be returning the maximal or minimal number in a set. For integer min/max, the examples include instructions to calculate the minimum or maximum between add 8,16,32 and 64-bit integers. The min/max comparisons can be either signed or unsigned.

In some examples, the instructions also support masking. In case of unsigned MIN, masked-out elements are ignored and treated as zero. In case of MAX or signed MIN where zero is not an identity element, the masked versions of the instruction are defined with an additional unmasked accumulator source and ignores the masked elements. In some examples, some of the instructions support element masking. In some examples, masked-out elements are ignored. In some examples, masked-out elements are replaced with an identity value (e.g., zero or all ones depending on the operation).

For floating point min/max, the in some examples the instructions support FP16, FP32, FP64 and Bfloat16 datatypes. In some examples, a masked version of these instruction uses an accumulator and ignores the masked elements. The order of operation in floating point min/max could affect the reported faults and the propagated NAN. Example pseudocode below describes a tree-like reduction order, but other orders are possible as well (sequential, for example).

Examples of a format for an integer horizontal minimum reduction instruction include VPHRMIN{S}[B, W, D, Q] DST {k1}, SRC1. In some examples, VPHRMIN is a base opcode mnemonic of the instruction which may be supplemented as detailed above. B indicates byte sized data elements, W indicates word sized data elements, D indicates double word sized data elements, and Q indicates quad word sized data elements. When {S} is in the mnemonic it indicates a signed operation. For example, VPHRMINSB indicates a horizontal minimum reduction using signed byte source data element. The opcode 3003 itself, and potentially aspects of a prefix 3001, provides an indication that a horizontal minimum reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal minimum reduction instruction include VPHRMIN{S}}[B, W, D, Q] DST {k1}, SRC1, SRC2. In some examples, VPHRMIN is a base opcode mnemonic of the instruction which may be supplemented as detailed above. B indicates byte sized data elements, W indicates word sized data elements, D indicates double word sized data elements, and Q indicates quad word sized data elements. When {S} is in the mnemonic it indicates a signed operation. For example, VPHRMINSB indicates a horizontal minimum reduction using signed byte data elements. The opcode 3003 itself, and potentially aspects of a prefix 3001, provides an indication that a horizontal minimum reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal maximum reduction instruction include VPHRMAX{S}[B, W, D, Q] DST {k1}, SRC1. In some examples, VPHRMAX is a base opcode mnemonic of the instruction which may be supplemented as detailed above. B indicates byte sized data elements, W indicates word sized data elements, D indicates double word sized data elements, and Q indicates quad word sized data elements. When {S} is in the mnemonic it indicates a signed operation. For example, VPHRMAXSB indicates a horizontal maximum reduction using signed byte source data element. The opcode 3003 itself, and potentially aspects of a prefix 3001, provides an indication that a horizontal maximum reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal maximum reduction instruction include VPHRMAX{S}[B, W, D, Q] DST {k1}, SRC1, SRC2. In some examples, VPHRMAX is a base opcode mnemonic of the instruction which may be supplemented as detailed above. B indicates byte sized data elements, W indicates word sized data elements, D indicates double word sized data elements, and Q indicates quad word sized data elements. When {S} is in the mnemonic it indicates a signed operation. For example, VPHRMAXSB indicates a horizontal maximum reduction using signed byte data elements. The opcode 3003 itself, and potentially aspects of a prefix 3001, provides an indication that a horizontal maximum reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples.

Examples of a format for an integer horizontal minimum or maximum reduction instruction include VPHRMINMAX[PD, PS, PH] DST {k1}, SRC1 IMM. In some examples, VPHRMINMAX is a base opcode mnemonic of the instruction which may be supplemented as detailed above. PH indicates the data elements are FP16, PS indicates the data elements are FP32, and PD indicates the data elements are FP64. For example, VPHRMINMAXPH indicates horizontal minimum or maximum reduction using FP16 data elements. The opcode 3003 itself, and potentially aspects of a prefix 3001, provides an indication that a horizontal minimum reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples. IMM is an immediate (e.g., 3009) to be used as described below (e.g., selecting an operation and sign override).

Examples of a format for an integer horizontal minimum or maximum reduction instruction include VPHRMINMAX{NEP}[BF16] DST {k1}, SRC1 IMM. In some examples, VPHRMINMAX is a base opcode mnemonic of the instruction which may be supplemented as detailed above. BF16 indicates the data elements are BF16. The opcode 3003 itself, and potentially aspects of a prefix 3001, provides an indication that a horizontal minimum or maximum reduction is to be performed (and data sizes, etc.). DST is at least one field to identify a destination operand such as packed data register or memory location. In some examples, the destination operand is identified via at least REG 3144. SRC1 is packed data registers and/or memory. In some examples, the first source identifier is provided by VVVV from 3517, 3405, or 3417. In some examples, the first source identifier is provided by at least R/M 3146. Note that additional information from the SIB Byte 3104 may also be used. Additionally, the R bit or RXB bits from a prefix is used in some examples for identifying a one of the destination and/or first source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples. IMM is an immediate (e.g., 3009) to be used as described below (e.g., selecting an operation and sign override). NEP, when used, details using nearest even rounding in some examples.

Examples of a format for an integer horizontal minimum or maximum reduction instruction include VPHRMINMAX[PD, PH, PD] DST {k1}, SRC1, SRC2 IMM. In some examples, VPHRMINMAX is a base opcode mnemonic of the instruction which may be supplemented as detailed above. PH indicates the source data elements are FP16, PS indicates the destination data elements are FP32, and PD indicates the source data elements are double word. For example, VPHARADDPHPS indicates horizontal minimum reduction using FP16 source data elements wherein the destination stores FP32 elements. The opcode 3003 itself, and potentially aspects of a prefix 3001, provides an indication that a horizontal minimum reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples. IMM is an immediate (e.g., 3009) to be used as described below (e.g., selecting an operation and sign override).

Examples of a format for an integer horizontal minimum or maximum reduction instruction include VPHRMINMAX{NEP}BF16PS DST {k1}, SRC1, SRC2 IMM. In some examples, VPHRMINMAX is a base opcode mnemonic of the instruction which may be supplemented as detailed above. BF16 indicates BF16 source data elements and PS indicates PF32 destination data elements. The opcode 3003 itself, and potentially aspects of a prefix 3001, provides an indication that a horizontal minimum reduction is to be performed (and data sizes, etc.). DST is at least one field to identify a destination operand such as packed data register or memory location. In some examples, the destination operand is identified via at least REG 3144. SRC1 and SCR2 are packed data registers and/or memory. In some examples, the first source identifier is provided by VVVV from 3517, 3405, or 3417. In some examples, the second source identifier is provided by at least R/M 3146. Note that additional information from the SIB Byte 3104 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 34(A)-(B). In some examples, the instruction uses a EVEX prefix. In some examples, the EVEX prefix is illustrated in FIG. 35. A writemask (shown as k1), when used, may be provided by bits 18:16 of 3515 in some examples. IMM is an immediate (e.g., 3009) to be used as described below (e.g., selecting an operation and sign override). NEP, when used, details using nearest even rounding in some examples.

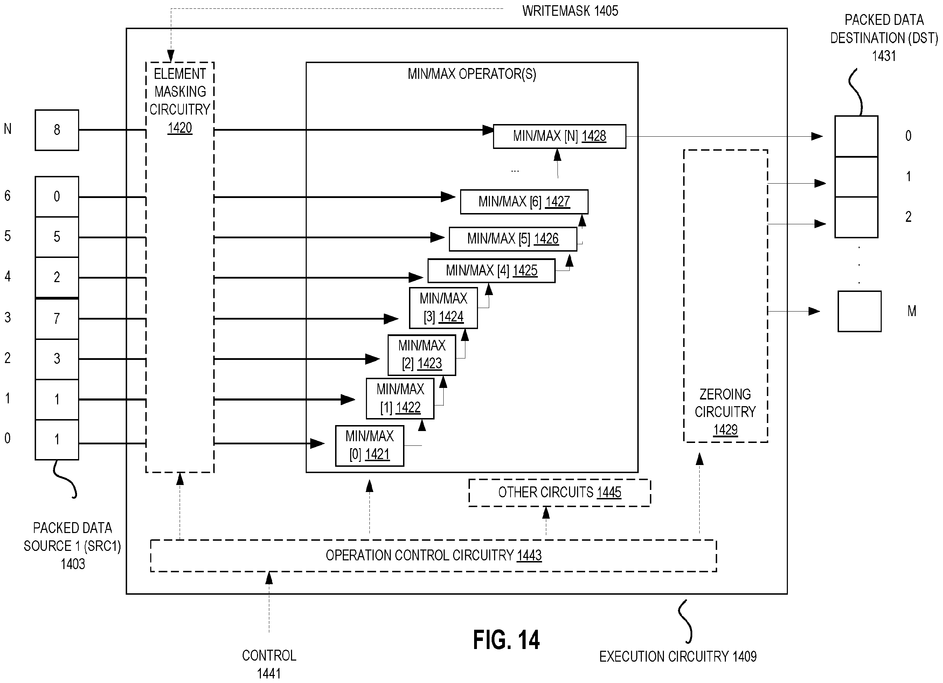

FIG. 14 illustrates example executions of a horizontal integer minimum or maximum reduction instruction. While this illustration is in little endian format, the principles discussed herein work in big endian format. In this example, the execution of the horizontal minimum or maximum reduction instruction performs a minimum or maximum operation on non-masked data elements from a single source to generate a minimum or maximum reduction. For example, when data elements of positions [0], [2], and [4] of the source are not masked (meaning they are to be included in the reduction) the result of the minimum/maximum reduction is the min/max reduction of those data elements. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). In some examples, the opcode also indicates, or at least partially indicates, a datatype and size of elements to be operated on. In this example, the opcode mnemonic may include such an identification with B, W, D, or Q. In some examples, the opcode indicates if the min/max operation is to be signed or not. In this example, the opcode mnemonic may include an "S" for signed (and in some examples a "U" for unsigned).

In this illustration, a packed data source (SRC1) 1403 stores a plurality of packed data elements (shown here as 0 to N). As noted above, in some examples SRC1 1403 is a packed data (e.g., vector or SIMD) register. In other examples, SRC11403 is one or more locations in memory.

SRC1 1403 is provided to execution circuitry 1409 which is to perform the horizontal minimum or maximum reduction. Depending on the example, the execution circuitry 1409 may include a plurality of minimum/maximum circuits (shown as minimum/maximum circuit circuitries 0- N 1421-1428) to perform the horizontal minimum or maximum reduction and store a result in destination 1431. As shown, the output of each minimum/maximum circuit is fed into an minimum/maximum circuit for a more significant data element position. (Note that minimum/maximum circuit 0 1421 may not be technically needed.) While illustration shows N minimum/maximum circuits, in some examples, the same minimum/maximum circuit is re-used multiple times and this illustrates a logical implementation. In some examples, the execution circuitry 1409 is a part of a pipeline execution (such an execute stage 2716). In some examples, the execution circuitry 1409 is a part of, or comprises, execution unit(s) circuitry 2762 and/or execution circuitry 2209. The execution circuitry 1409 comprises combinational logic circuitry in some examples.

In some examples, values in a mask (e.g., writemask 1405) provided, or referenced by, the instruction are used to selectively mask corresponding data element positions of SRC11403 using element masking circuitry 1420. For example, bit position [0] of the mask 1405 indicates how data element position [0] of SRC1 1403 is to be treated. In some examples, the mask is provided by a writemask operand. In some examples, the mask is provided by an immediate. In some examples, the mask is provided by a non-writemask register operand. In some examples, a 0 for a value in a bit position of the writemask 1405 indicates to not provide a data element in a corresponding data element position (or provide an identity value depending on the implementation). For example, when the mask[0] is 0, in some instances, the data element of SRC1[0] 1403 is not fed to minimum/maximum circuit 1421.

In this illustration, a data element from a least significant data element position of SRC1 1403 is provided to minimum/maximum circuit[0] 1421. In some examples, the result is stored in data element position [0] of DST 1431.

In some examples, the remaining data elements of DST 1431 are zeroed using zeroing circuitry 1429. Note that the number of data elements of the DST 1431 and SRC1 1403 may not be the same.

As noted above, the datatype and size may vary depending on the opcode, etc. In some examples, a decoder and/or scheduler provides this information (as control 1441) to the execution circuitry 1409 that allows for the proper execution unit type (e.g., minimum/maximum circuit) to be used. In some examples, operation control circuitry 1443 configures the execution circuitry 1409 according to that control information 1441 to use one or more minimum/maximum circuits instead of other logic circuits 1445 such as Boolean logic circuits, etc. In some examples, the operation control circuitry 1443 is external to the execution circuitry 1409 such as a part of a scheduler such as scheduler 2756.

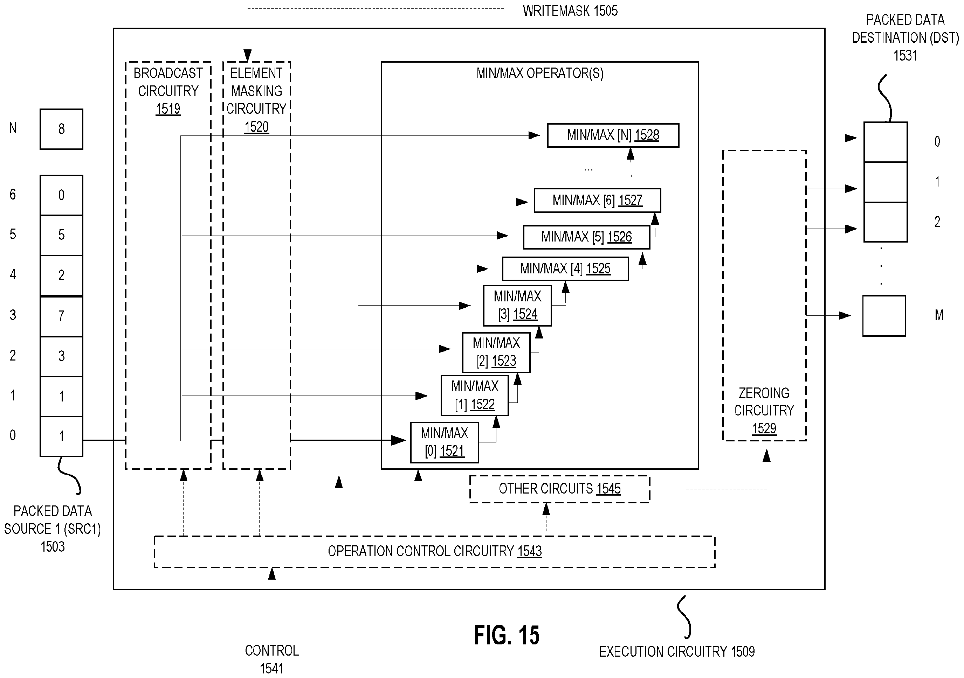

FIG. 15 illustrates example executions of a horizontal integer minimum or maximum reduction instruction. While this illustration is in little endian format, the principles discussed herein work in big endian format. In this example, the execution of the horizontal minimum or maximum reduction instruction performs a minimum or maximum operation on non-masked data element positions from broadcasted data element of a single source to generate a minimum or maximum reduction. The result of the minimum/maximum reduction is the min/max reduction of those data elements. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). In some examples, the opcode also indicates, or at least partially indicates, a datatype and size of elements to be operated on. In this example, the opcode mnemonic may include such an identification with B, W, D, or Q. In some examples, the opcode indicates if the min/max operation is to be signed or not. In this example, the opcode mnemonic may include an "S" for signed (and in some examples a "U" for unsigned).

In this illustration, a packed data source (SRC1) 1503 stores a plurality of packed data elements (shown here as 0 to N). As noted above, in some examples SRC1 1503 is a packed data (e.g., vector or SIMD) register. In other examples, SRC11503 is one or more locations in memory.

SRC1 1503 is provided to execution circuitry 1509 which is to perform the horizontal minimum or maximum reduction. In this example, broadcast circuitry 1519 may broadcast a single data element to all of the minimum/maximum circuits as a first input. In some examples, the data element from the least significant data element position of SRC1 1503 is broadcast.

In some examples, element masking circuitry is used to determine which minimum/maximum circuits will receive the single data element. In some examples, values in a mask (e.g., writemask 1505) provided, or referenced by, the instruction are used to selectively mask corresponding data element positions of SRC1 1503 (and corresponding minimum/maximum circuits) using element masking circuitry 1520. For example, bit position [1] of the mask 1505 indicates how an minimum/maximum circuit associated with data element position [1] of SRC1 1503 is to be treated. In some examples, the mask is provided by a writemask operand. In some examples, the mask is provided by an immediate. In some examples, the mask is provided by a non-writemask register operand. In some examples, a 0 for a value in a bit position of the writemask 1505 indicates to not provide a data element in a corresponding data element position. For example, when the mask[1] is 0, in some instances, the data element of SRC1[0] 1503 is not broadcast to minimum/maximum circuit[1] 1522.

Depending on the example, the execution circuitry 1509 may include a plurality of minimum/maximum circuits (shown as minimum/maximum circuit circuitries 0 - N 1521-1528) to perform the horizontal minimum or maximum reduction and store a result in destination 1531. As shown, the output of each minimum/maximum circuit is fed into an minimum/maximum circuit for a more significant data element position. (Note that minimum/maximum circuit 0 1521 may not be technically needed.) While illustration shows N minimum/maximum circuits, in some examples, the same minimum/maximum circuit is re-used multiple times and this illustrates a logical implementation. In some examples, the execution circuitry 1509 is a part of a pipeline execution (such an execute stage 2716). In some examples, the execution circuitry 1509 is a part of, or comprises, execution unit(s) circuitry 2762 and/or execution circuitry 2209. The execution circuitry 1509 comprises combinational logic circuitry in some examples.

In some examples, the remaining data elements of DST 1531 are zeroed using zeroing circuitry 1529. Note that the number of data elements of the DST 1531 and SRC1 1503 may not be the same.

As noted above, the datatype and size may vary depending on the opcode, etc. In some examples, a decoder and/or scheduler provides this information (as control 1541) to the execution circuitry 1509 that allows for the proper execution unit type (e.g., minimum/maximum circuit) to be used. In some examples, operation control circuitry 1543 configures the execution circuitry 1509 according to that control information 1541 to use one or more minimum/maximum circuits instead of other logic circuits 1545 such as Boolean logic circuits, etc. In some examples, the operation control circuitry 1543 is external to the execution circuitry 1509 such as a part of a scheduler such as scheduler 2756.

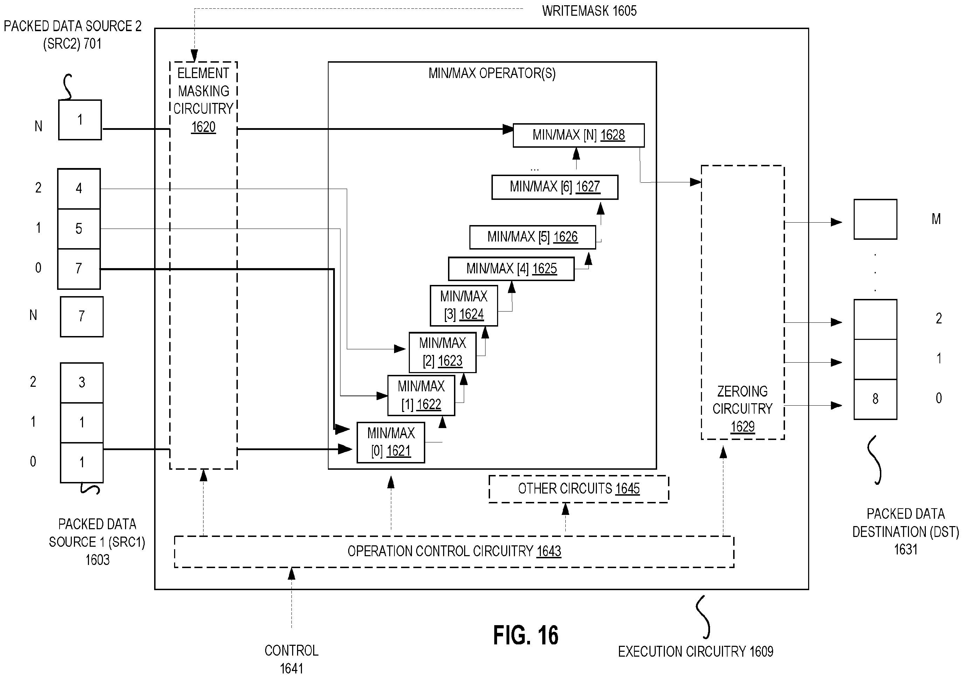

FIG. 16 illustrates example executions of a horizontal integer minimum or maximum reduction instruction. While this illustration is in little endian format, the principles discussed herein work in big endian format. In this example, the execution of the horizontal minimum or maximum reduction instruction performs a minimum or maximum operation on a data element from a first source to non-masked data elements from a second source to generate a minimum or maximum reduction. For example, when data elements of positions [0], [2], and [4] of the second source are not masked (meaning they are to be included in the reduction) the result of the minimum/maximum reduction is the min/max reduction of those data elements plus the data element from the first source. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). In some examples, the opcode also indicates, or at least partially indicates, a datatype and size of elements to be operated on. In this example, the opcode mnemonic may include such an identification with B, W, D, or Q. In some examples, the opcode indicates if the min/max operation is to be signed or not. In this example, the opcode mnemonic may include an "S" for signed (and in some examples a "U" for unsigned).

In this illustration, a first packed data source (SRC1) 1603 and a second packed data source (SRC2) 1601 each store a plurality of packed data elements (shown here as 0 to N). As noted above, in some examples SRC11603 and SRC2 1601 are packed data (e.g., vector or SIMD) registers. In other examples, SRC2 1601 is one or more locations in memory.

SRC11603 and SRC2 1601 are provided to execution circuitry 1609 which is to perform the horizontal minimum or maximum reduction. Depending on the example, the execution circuitry 1609 may include a plurality of minimum/maximum circuits (shown as minimum/maximum circuit circuitries 0 - N 1621-1628) to perform the horizontal minimum or maximum reduction and store a result in destination 1631. As shown, the output of each minimum/maximum circuit is fed into an minimum/maximum circuit for a more significant data element position. (Note that minimum/maximum circuit 0 1621 may not be technically needed.) While illustration shows N minimum/maximum circuits, in some examples, the same minimum/maximum circuit is re-used multiple times and this illustrates a logical implementation. In some examples, the execution circuitry 1609 is a part of a pipeline execution (such an execute stage 2716). In some examples, the execution circuitry 1609 is a part of, or comprises, execution unit(s) circuitry 2762 and/or execution circuitry 2209. The execution circuitry 1609 comprises combinational logic circuitry in some examples.

In some examples, values in a mask (e.g., writemask 1605) provided, or referenced by, the instruction are used to selectively mask corresponding data element positions of SRC11603 using element masking circuitry 1620. For example, bit position [0] of the mask 1605 indicates how data element position [0] of SRC1 1603 is to be treated. In some examples, the mask is provided by a writemask operand. In some examples, the mask is provided by an immediate. In some examples, the mask is provided by a non-writemask register operand. In some examples, a 0 for a value in a bit position of the writemask 1605 indicates to not provide a data element in a corresponding data element position (or provide an identity value depending on the implementation). For example, when the mask[0] is 0, in some instances, the data element of SRC1[0] 1603 is not fed to minimum/maximum circuit 1621.

In this illustration, a data element from a least significant data element position of SRC1 1603 is provided to minimum/maximum circuit[0] 1621. In some examples, minimum/maximum circuit[0] 1621 also receives a data element from a least significant data element position of SRC2 1601 and performs a min/max operation on those two data elements to generate a result. In some examples, the result is stored in data element position [0] of DST 1631.

In some examples, the remaining data elements of DST 1631 are zeroed using zeroing circuitry 1629. Note that the number of data elements of the DST 1631 and the sources 1701 and 1703 may not be the same.

As noted above, the datatype and size may vary depending on the opcode, etc. In some examples, a decoder and/or scheduler provides this information (as control 1641) to the execution circuitry 1609 that allows for the proper execution unit type (e.g., minimum/maximum circuit) to be used. In some examples, operation control circuitry 1643 configures the execution circuitry 1609 according to that control information 1641 to use one or more minimum/maximum circuits instead of other logic circuits 1645 such as Boolean logic circuits, etc. In some examples, the operation control circuitry 1643 is external to the execution circuitry 1609 such as a part of a scheduler such as scheduler 2756.

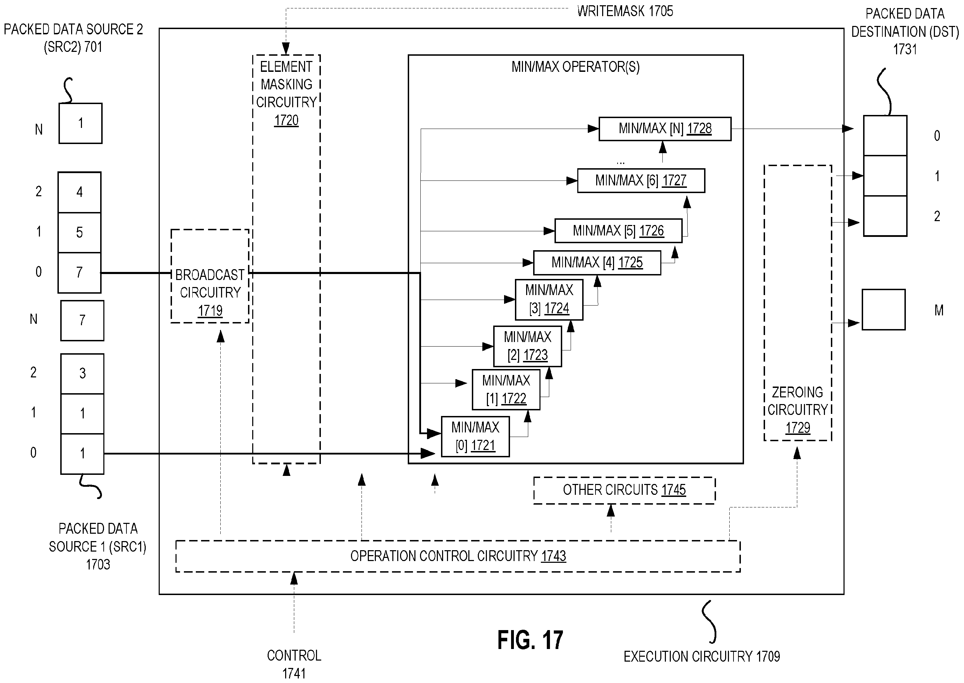

FIG. 17 illustrates example executions of a horizontal integer minimum or maximum reduction instruction. While this illustration is in little endian format, the principles discussed herein work in big endian format. In this example, the execution of the horizontal minimum or maximum reduction instruction performs a minimum or maximum operation on a data element from a first source to a broadcasted data element from a second source to generate a minimum or maximum reduction. In some examples, a mask is used to determine which minimum/maximum circuits will receive the broadcasted data element. That is the data element may not be broadcasted to each data element. The result of the minimum/maximum reduction is the min/max reduction of those data elements. In some examples, the result is stored in a least significant data element position of a destination (such as a register or memory location). In some examples, other data elements positions have their data elements zeroed.

As noted above, in some examples, data elements of the source and destination are different sizes. The opcode of the instruction indicates the operation to be performed (in this case a horizontal minimum or maximum reduction). In some examples, the opcode also indicates, or at least partially indicates, a datatype and size of elements to be operated on. In this example, the opcode mnemonic may include such an identification with B, W, D, or Q. In some examples, the opcode indicates if the min/max operation is to be signed or not. In this example, the opcode mnemonic may include an "S" for signed (and in some examples a "U" for unsigned).

In this illustration, a first packed data source (SRC1) 1703 and a second packed data source (SRC2) 1701 each store a plurality of packed data elements (shown here as 0 to N). As noted above, in some examples SRC11703 and SRC2 1701 are packed data (e.g., vector or SIMD) registers. In other examples, SRC2 1701 is one or more locations in memory.

SRC1 1703 and SRC2 1601 is provided to execution circuitry 1709 which is to perform the horizontal minimum or maximum reduction. In this example, broadcast circuitry 1719 may broadcast a single data element from SRC2 1701 to all of the minimum/maximum circuits as a first input. In some examples, the data element from the least significant data element position of SRC1 1703 is broadcast.

In some examples, element masking circuitry is used to determine which minimum/maximum circuits will receive the single data element. In some examples, values in a mask (e.g., writemask 1705) provided, or referenced by, the instruction are used to selectively mask corresponding data element positions of SRC2 1701 (and corresponding minimum/maximum circuits) using element masking circuitry 1720. For example, bit position [1] of the mask 1705 indicates how an minimum/maximum circuit associated with data element position [1] of SRC2 1701 is to be treated. In some examples, the mask is provided by a writemask operand. In some examples, the mask is provided by an immediate. In some examples, the mask is provided by a non-writemask register operand. In some examples, a 0 for a value in a bit position of the writemask 1705 indicates to not provide a data element in a corresponding data element position. For example, when the mask[1] is 0, in some instances, the data element of SRC1[0] 1701 is not broadcast to minimum/maximum circuit[1] 1722.

Depending on the example, the execution circuitry 1709 may include a plurality of minimum/maximum circuits (shown as minimum/maximum circuit circuitries 0 - N 1721-1728) to perform the horizontal minimum or maximum reduction and store a result in destination 1731. As shown, the output of each minimum/maximum circuit is fed into an minimum/maximum circuit for a more significant data element position. (Note that minimum/maximum circuit 0 1721 may not be technically needed.) While illustration shows N minimum/maximum circuits, in some examples, the same minimum/maximum circuit is re-used multiple times and this illustrates a logical implementation. In some examples, the execution circuitry 1709 is a part of a pipeline execution (such an execute stage 2716). In some examples, the execution circuitry 1709 is a part of, or comprises, execution unit(s) circuitry 2762 and/or execution circuitry 2209. The execution circuitry 1709 comprises combinational logic circuitry in some examples.

In some examples, the remaining data elements of DST 1731 are zeroed using zeroing circuitry 1729. Note that the number of data elements of the DST 1731 and sources 1701 and 1703 may not be the same.

As noted above, the datatype and size may vary depending on the opcode, etc. In some examples, a decoder and/or scheduler provides this information (as control 1741) to the execution circuitry 1709 that allows for the proper execution unit type (e.g., minimum/maximum circuit) to be used. In some examples, operation control circuitry 1743 configures the execution circuitry 1709 according to that control information 1741 to use one or more minimum/maximum circuits instead of other logic circuits 1745 such as Boolean logic circuits, etc. In some examples, the operation control circuitry 1743 is external to the execution circuitry 1709 such as a part of a scheduler such as scheduler 2756.

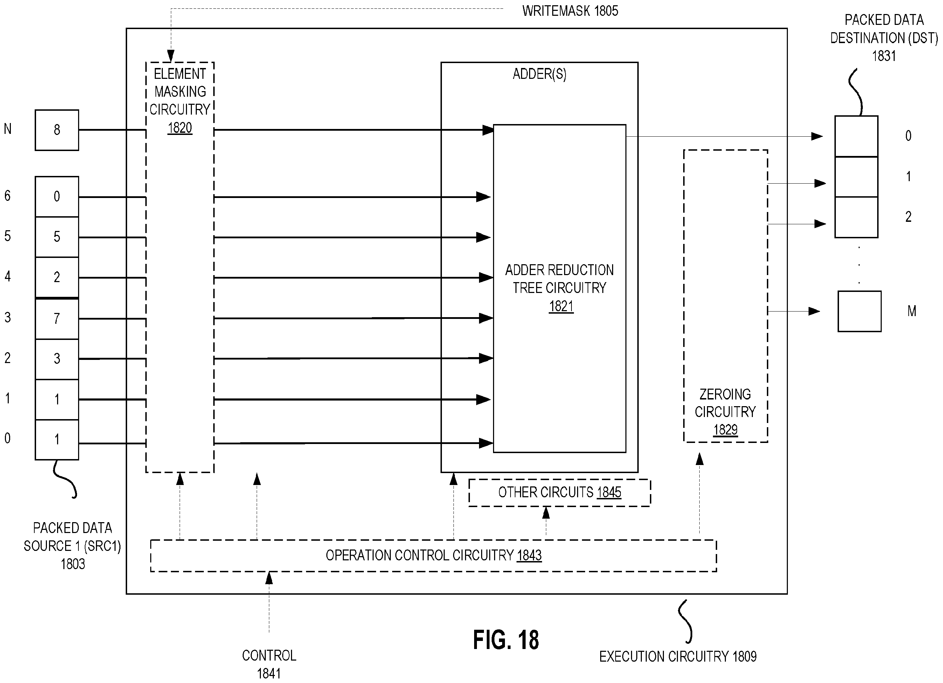

Some implementations include instructions to perform floating-point min-max operations as detailed below with respect to at least FIGS. 18-21. In some examples, these operations adhere with the IEEE 754-2019 standard, section 9.6. Some supported datatype examples include half-precision floating point data represented with 16 bits (FP16), single-precision floating point data represented with 32 bits (FP32), double-precision floating point data represented with 64 bits (FP64) and brain floating point data represented with 16 bits (BF16). In some implementations, an example MINMAX instruction may operate on two vector registers, and may also include an 8-bit immediate control field to select the particular comparison to perform. In some implementations, an example MINMAX instruction may also include an override for the sign of the comparison result.

Table 1 shows an example minimum operation on two operands "a" and "b" in one implementation of a MINMAX instruction, where a minimum of "-0" and "+0" is -0.

**Table 1**

| b \ a | a = QNAN1 | a = SNAN1 | a = Number or Infinity |
|---|---|---|---|
| b = QNAN2 | QNAN1 | Quiet(SNAN1) | QNAN2 |
| b = SNAN2 | Quiet(SNAN2) | Quiet(SNAN1) | Quiet(SNAN2) |
| b = Number or Infinity | QNAN1 | Quiet(SNAN1) | The minimum of a and b |

Table 2 shows an example minimum magnitude operation on two operands "a" and "b" in one implementation of a MINMAX instruction.

**Table 2**

| b \ a | a = QNAN1 | a = SNAN1 | a = Number or Infinity |
|---|---|---|---|
| b = QNAN2 | QNAN1 | Quiet(SNAN1) | QNAN2 |
| b = SNAN2 | Quiet(SNAN2) | Quiet(SNAN1) | Quiet(SNAN2) |
| b = Number or Infinity | QNAN1 | Quiet(SNAN1) | The minimum magnitude of a and b |

Table 3 shows an example minimum number operation on two operands "a" and "b" in one implementation of a MINMAX instruction, where a minimum number of "-0" and "+0" is -0.

**Table 3**

| b \ a | a = QNAN1 | a = SNAN1 | a = Number or Infinity |
|---|---|---|---|
| b = QNAN2 | QNAN1 | Quiet(SNAN1) | a |
| b = SNAN2 | Quiet(SNAN2) | Quiet(SNAN1) | a |
| b = Number or Infinity | b | b | The minimum of a and b |

Table 4 shows an example minimum magnitude number operation on two operands "a" and "b" in one implementation of a MINMAX instruction.

**Table 4**

| b \ a | a = QNAN1 | a = SNAN1 | a = Number or Infinity |
|---|---|---|---|
| b = QNAN2 | QNAN1 | Quiet(SNAN1) | a |
| b = SNAN2 | Quiet(SNAN2) | Quiet(SNAN1) | a |
| b = Number or Infinity | b | b | The minimum magnitude of a and b |

Table 5 shows an example maximum operation on two operands "a" and "b" in one implementation of a MINMAX instruction, where a maximum of "-0" and "+0" is +0.

**Table 5**

| b \ a | a = QNAN1 | a = SNAN1 | a = Number or Infinity |
|---|---|---|---|
| b = QNAN2 | QNAN1 | Quiet(SNAN1) | QNAN2 |
| b = SNAN2 | Quiet(SNAN2) | Quiet(SNAN1) | Quiet(SNAN2) |
| b = Number or Infinity | QNAN1 | Quiet(SNAN1) | The maximum of a and b |

Table 6 shows an example maximum magnitude operation on two operands "a" and "b" in one implementation of a MINMAX instruction.

**Table 6**

| b \ a | a = QNAN1 | a = SNAN1 | a = Number or Infinity |
|---|---|---|---|
| b = QNAN2 | QNAN1 | Quiet(SNAN1) | QNAN2 |
| b = SNAN2 | Quiet(SNAN2) | Quiet(SNAN1) | Quiet(SNAN2) |
| b = Number or Infinity | QNAN1 | Quiet(SNAN1) | The maximum magnitude of a and b |

Table 7 shows an example maximum number operation on two operands "a" and "b" in one implementation of a MINMAX instruction, where a maximum number of "-0" and "+0 is +0.

**Table 7**

| b \ a | a = QNAN1 | a = SNAN1 | a = Number or Infinity |
|---|---|---|---|
| b = QNAN2 | QNAN1 | Quiet(SNAN1) | a |
| b = SNAN2 | Quiet(SNAN2) | Quiet(SNAN1) | a |
| b = Number or Infinity | b | b | The maximum of a and b |

Table 8 shows an example maximum magnitude number operation on two operands "a" and "b" in one implementation of a MINMAX instruction.

**Table 8**

| b \ a | a = QNAN1 | a = SNAN1 | a = Number or Infinity |
|---|---|---|---|
| b = QNAN2 | QNAN1 | Quiet(SNAN1) | a |
| b = SNAN2 | Quiet(SNAN2) | Quiet(SNAN1) | a |
| b = Number or Infinity | b | b | The maximum magnitude of a and b |

A non-limiting example pseudo-code for a minimum operation is as follows:

```
 def minimum(a, b) :
        if a is SNAN or (a is QNAN and b is not SNAN):
                return QNAN(a)
        else if b is NAN:
                return QNAN(b)
        else if (a = = +0.0 and b = = -0.0) or (a = = -0.0 and b = = +0.0):
                return -0.0
        else if a <= b:
                return a
        else:
                return b
```

A non-limiting example pseudo-code for a minimum number operation is as follows:

```
 def minimum_number(a, b):
        if a is NAN and b is NAN:
                if a is SNAN or (a is QNAN and b is QNAN):
                         return QNAN(a)
                else: // a is QNAN and b is SNAN
                         return QNAN(b)
        else if a is NAN:
                return b
        else if b is NAN:
                return a
        else if (a = = +0.0 and b = = -0.0) or (a = = -0.0 and b = = +0.0):
                return -0.0
        else if a <= b:
                return a
        else:
                return b
```

A non-limiting example pseudo-code for a minimum magnitude operation is as follows:

```
 def minimum_magnitude(a, b):
        if a is SNAN or (a is QNAN and b is not SNAN):
                return QNAN(a)
        else if b is NAN:
                return QNAN(b)
        else if abs(a) <= abs(b):
                return a
        else:
                return b
```

A non-limiting example pseudo-code for a minimum magnitude number operation is as follows:

```
 def minimum_magnitude_number(a, b):
        if a is NAN and b is NAN:
                if a is SNAN or (a is ONAN and b is QNAN):
                         return QNAN(a)
                else: // a is QNAN and b is SNAN
                         return QNAN(b)
        else if a is NAN:
                return b
        else if b is NAN:
                return a
        else if abs(a) <= abs(b):
                return a
        else:
                return b
```

A non-limiting example pseudo-code for a maximum operation is as follows:

```
 def maximum(a, b) :
        if a is SNAN or (a is QNAN and b is not SNAN):
                return QNAN(a)
        else if b is NAN:
                return QNAN(b)
        else if (a = = +0.0 and b = = -0.0) or (a = = -0.0 and b = = +0.0):
                return +0.0
        else if a >= b:
                return a
        else:
                return b
```

A non-limiting example pseudo-code for a maximum number operation is as follows:

```
 def maximum_number (a, b):
        if a is NAN and b is NAN:
                if a is SNAN or (a is QNAN and b is QNAN):
                         return QNAN(a)
                else: // a is QNAN and b is SNAN
                         return QNAN(b)
        else if a is NAN:
                return b
        else if b is NAN:
                return a
        else if (a = = +0.0 and b = = -0.0) or (a = = -0.0 and b = = +0.0):
                return +0.0
        else if a >= b:
                return a
        else:
                return b
```

A non-limiting example pseudo-code for a maximum magnitude operation is as follows:

```
 def maximum_magnitude(a, b) :
        if a is SNAN or (a is QNAN and b is not SNAN):
                return QNAN(a)
        else if b is NAN:
                return QNAN(b)
        else if abs(a) >= abs(b):
                return a
        else:
                return b
```

A non-limiting example pseudo-code for a maximum magnitude number operation is as follows:

```
 def maximum_magnitude_number(a, b) :
        if a is NAN and b is NAN:
                if a is SNAN or (a is QNAN and b is QNAN):
                         return QNAN(a)
                else: // a is QNAN and b is SNAN
                         return QNAN(b)
        else if a is NAN:
                return b
        else if b is NAN:
                return a
        else if abs (a) >= abs (b):
                return a
        else:
                return b
```

Table 9 describes an example of a MINMAX comparison operation selection according to an example immediate control field imm8 for bits imm8[4] and imm8[1:0]:

**Table 9**

| imm8[4]- min/max | imm8[1:0]- Operation select | Operation |
|---|---|---|
| 0b0 | 0b00 | Minimum |
| 0b0 | 0b01 | Minimum Number |
| 0b0 | 0b10 | Minimum Magnitude |
| 0b0 | 0b11 | Minimum Magnitude Number |
| 0b1 | 0b00 | Maximum |
| 0b1 | 0b01 | Maximum Number |
| 0b1 | 0b10 | Maximum Magnitude |
| 0b1 | 0b11 | Maximum Magnitude Number |

Table 10 describes an example of a MINMAX sign control override according to the example immediate control field imm8 for bits imm8[3:2]:

**Table 10**

| imm8[3:2] Sign control | Sign |
|---|---|
| 0b00 | Select sign (src1) |
| 0b01 | Select sign (compare result) |
| 0b10 | Set sign to 0 |
| 0b11 | Set sign to 1 |

In some implementations, the sign control indication ignores NAN signs. For example, execution of the MINMAX instruction does not manipulate the sign if the result is a NAN, and does not copy the sign of SRC1 (for sign control = 0b00) if SRC1 is a NAN. In some implementations, the MINMAX instruction raises an invalid exception (#IE) if either of the operands is an SNAN, and a denormal exception (#DE) if either operand is a denormal and none of the operands are NAN.

The following example pseudocode describes how the 8-bit immediate controls both the comparison operation and the sign control (where the operands 'daz' and 'except' are additional parameters controlling denormal handling and exception reporting):

```
 def minmax(a, b, imm, daz, except):
        op_select := imm[1:0]
        sign_control := imm[3:2]
        minmax_select := imm[4]
        if except = = true:
                if a is SNAN or b is SNAN:
                         set #IE
                else if a is QNAN or b is QNAN:
                        // QNAN prevents lower-priority exceptions
                else if a is denormal or b is denormal:
                         set #DE
        if daz = = true:
                if a is denormal :
                         a.fraction := 0
                if b is denormal:
                         b.fraction := 0
        if minmax_select = = 0: //min
                if op_select = = 0:
                        tmp := minimum(a, b)
                else if op_select = = 1:
                        tmp : = minimum_number(a, b)
                else if op_select = = 2:
                        tmp := minimum_magnitude(a, b)
                else: //op_select = = 3
                        tmp := minimum_magnitude_number(a, b)
        else: //max
                if op_select = = 0:
                        tmp := maximum(a, b)
                else if op_select = = 1:
                        tmp : = maximum_number(a, b)
                else if op_select = = 2:
                        tmp := maximum_magnitude(a, b)
                else: //op_select = = 3
                        tmp := maximum_magnitude_number(a, b)
        if tmp is not NAN:
                if (sign_control = = 0) and a is not NAN:
                        tmp.sign := a.sign
                else if sign_control = = 1:
                        // keep sign of comparison result
                else if sign_control = = 2:
                        tmp.sign := 0
                else: //sign_control = = 3
                        tmp.sign := 1
        return tmp
```

FIG. 18 illustrates example executions of a horizontal minimum or maximum reduction instruction with floating point data elements. While this illustration is in little endian format, the principles discussed herein work in big endian format. In this example, the execution of the horizontal minimum or maximum reduction instruction with floating point data elements performs a minimum or maximum operation on non-masked data elements from a single source to generate a minimum or maximum reduction. For example, when data elements of positions [0], [2], and [4] of the source are not masked (meaning they are to be included in the reduction) the result of the minimum/maximum reduction is the min/max reduction of those data elements. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). Additionally, in some embodiments, an immediate of the instruction provides a particular minimum or maximum operation selection and a sign control override as detailed above. This information may be a part of the control information 1841.

In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a packed data source (SRC1) 1803 stores a plurality of packed data elements (shown here as 0 to N). As noted above, in some examples SRC1 1803 is a packed data (e.g., vector or SIMD) register. In other examples, SRC11803 is one or more locations in memory.

SRC1 1803 is provided to execution circuitry 1809 which is to perform the horizontal minimum or maximum reduction. Depending on the example, the execution circuitry 1809 may include a plurality of floating point to perform the horizontal minimum or maximum reduction and store a result in destination 1831. In some examples, the minimum/maximum circuits are configured as an minimum/maximum circuit reduction tree circuit 1821. In some examples, the execution circuitry 1809 is a part of a pipeline execution (such an execute stage 2716). In some examples, the execution circuitry 1809 is a part of, or comprises, execution unit(s) circuitry 2762 and/or execution circuitry 2209. The execution circuitry 1809 comprises combinational logic circuitry in some examples.

In some examples, values in a mask (e.g., writemask 1805) provided, or referenced by, the instruction are used to selectively mask corresponding data element positions of SRC11803 using element masking circuitry 1820. For example, bit position [0] of the mask 1805 indicates how data element position [0] of SRC1 1803 is to be treated. In some examples, the mask is provided by a writemask operand. In some examples, the mask is provided by an immediate. In some examples, the mask is provided by a non-writemask register operand. In some examples, a 0 for a value in a bit position of the writemask 1805 indicates to not provide a data element in a corresponding data element position (or provide an identity value depending on the implementation). For example, when the mask[0] is 0, in some instances, the data element of SRC1[0] 1803 is not fed to the minimum/maximum circuit reduction tree circuit 1821.

In this illustration, a data element from a least significant data element position of SRC1 1803 is provided to the minimum/maximum circuit reduction tree circuit 1821. In some examples, the minimum/maximum circuit reduction tree circuit 1821 also receives a data element from a least significant data element position of SRC1 1803 and performs a min/max operation on those two data elements to generate a result. In some examples, the result is stored in data element position [0] of DST 1831.

In some examples, the remaining data elements of DST 1831 are zeroed using zeroing circuitry 1829. Note that the number of data elements of the DST 1831 and SRC1 1803 may not be the same.

As noted above, the datatype and size may vary depending on the opcode, etc. In some examples, a decoder and/or scheduler provides this information (as control 1841) to the execution circuitry 1809 that allows for the proper execution unit type (e.g., minimum/maximum circuit) to be used. In some examples, operation control circuitry 1843 configures the execution circuitry 1809 according to that control information 1841 to use one or more minimum/maximum circuits instead of other logic circuits 1845 such as Boolean logic circuits, etc. In some examples, the operation control circuitry 1843 is external to the execution circuitry 1809 such as a part of a scheduler such as scheduler 2756.

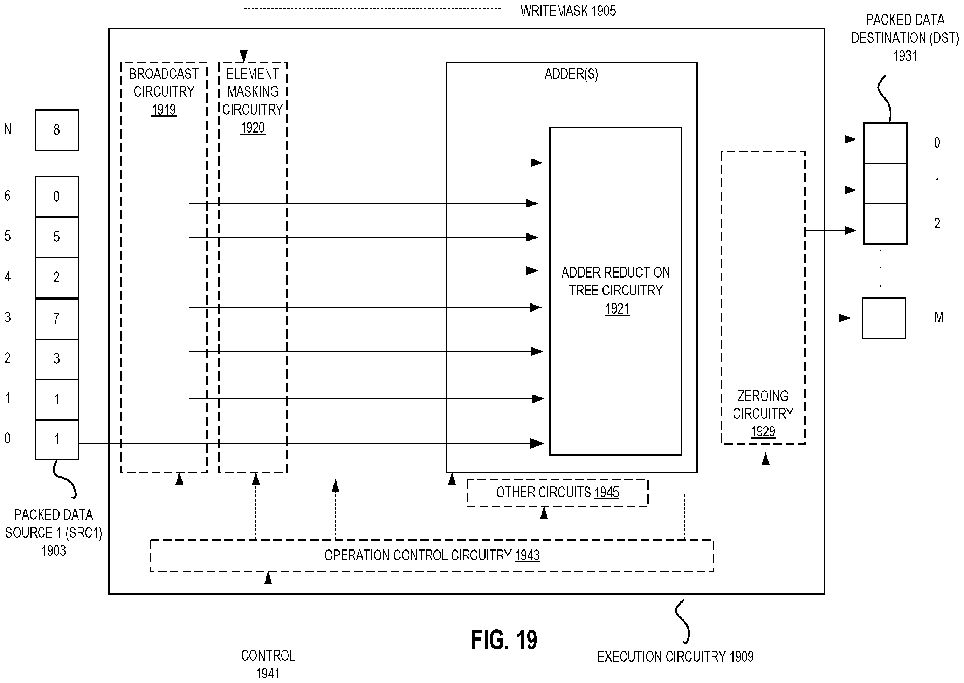

FIG. 19 illustrates example executions of a horizontal minimum or maximum reduction instruction with floating point data elements. While this illustration is in little endian format, the principles discussed herein work in big endian format. In this example, the execution of the horizontal minimum or maximum reduction instruction with floating point data elements performs a minimum or maximum operation on non-masked data element positions from broadcasted data element of a single source to generate a minimum or maximum reduction. The result of the minimum/maximum reduction is the min/max reduction of those data elements. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). Additionally, in some embodiments, an immediate of the instruction provides a particular minimum or maximum operation selection and a sign control override as detailed above. This information may be a part of the control information 1941.

In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a packed data source (SRC1) 1903 stores a plurality of packed data elements (shown here as 0 to N). As noted above, in some examples SRC1 1903 is a packed data (e.g., vector or SIMD) register. In other examples, SRC11903 is one or more locations in memory.

SRC1 1903 is provided to execution circuitry 1909 which is to perform the horizontal minimum or maximum reduction. In this example, broadcast circuitry 1919 may broadcast a single data element to all of the minimum/maximum circuits as a first input. In some examples, the data element from the least significant data element position of SRC1 1903 is broadcast.

In some examples, element masking circuitry is used to determine which minimum/maximum circuits will receive the single data element. In some examples, values in a mask (e.g., writemask 1905) provided, or referenced by, the instruction are used to selectively mask corresponding data element positions of SRC1 1903 (and corresponding minimum/maximum circuits) using element masking circuitry 1920. For example, bit position [1] of the mask 1905 indicates how an minimum/maximum circuit associated with data element position [1] of SRC1 1903 is to be treated. In some examples, the mask is provided by a writemask operand. In some examples, the mask is provided by an immediate. In some examples, the mask is provided by a non-writemask register operand. In some examples, a 0 for a value in a bit position of the writemask 1905 indicates to not provide a data element in a corresponding data element position. For example, when the mask[1] is 0, in some instances, the data element of SRC1[0] 1903 is not broadcast to the minimum/maximum circuit reduction tree circuit 1821.

Depending on the example, the execution circuitry 1909 may include a plurality of floating point minimum/maximum circuits to perform the horizontal minimum or maximum reduction and store a result in destination 1931. In some examples, these floating point minimum/maximum circuits form the minimum/maximum circuit reduction tree circuit 1921.

In some examples, the execution circuitry 1909 is a part of a pipeline execution (such an execute stage 2716). In some examples, the execution circuitry 1909 is a part of, or comprises, execution unit(s) circuitry 2762 and/or execution circuitry 2209. The execution circuitry 1909 comprises combinational logic circuitry in some examples.

In some examples, the remaining data elements of DST 1931 are zeroed using zeroing circuitry 1929. Note that the number of data elements of the DST 1931 and SRC1 1903 may not be the same.

As noted above, the datatype and size may vary depending on the opcode, etc. In some examples, a decoder and/or scheduler provides this information (as control 1941) to the execution circuitry 1909 that allows for the proper execution unit type (e.g., minimum/maximum circuit) to be used. In some examples, operation control circuitry 1943 configures the execution circuitry 1909 according to that control information 1941 to use one or more minimum/maximum circuits instead of other logic circuits 1945 such as Boolean logic circuits, etc. In some examples, the operation control circuitry 1943 is external to the execution circuitry 1909 such as a part of a scheduler such as scheduler 2756.

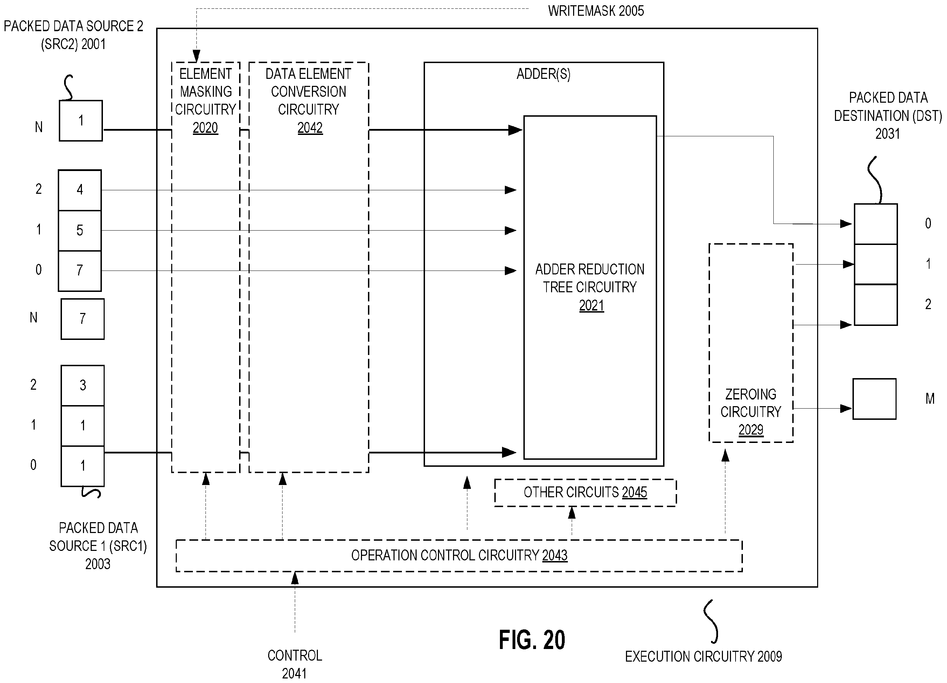

FIG. 20 illustrates example executions of a horizontal minimum or maximum reduction instruction with floating point data elements. While this illustration is in little endian format, the principles discussed herein work in big endian format. In this example, the execution of the horizontal minimum or maximum reduction instruction with floating point data elements performs a minimum or maximum operation on a data element from a first source to non-masked data elements from a second source to generate a minimum or maximum reduction. For example, when data elements of positions [0], [2], and [4] of the second source are not masked (meaning they are to be included in the reduction) the result of the minimum/maximum reduction is the min/max reduction of those data elements plus the data element from the first source. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). Additionally, in some embodiments, an immediate of the instruction provides a particular minimum or maximum operation selection and a sign control override as detailed above. This information may be a part of the control information 2041.

As noted above, in some examples, data elements of the source and destination are different sizes. In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a first packed data source (SRC1) 2003 and a second packed data source (SRC2) 2001 each store a plurality of packed data elements (shown here as 0 to N). As noted above, in some examples SRC1 2003 and SRC2 2001 are packed data (e.g., vector or SIMD) registers. In other examples, SRC2 2001 is one or more locations in memory.

SRC1 2003 and SRC2 2001 are provided to execution circuitry 2009 which is to perform the horizontal minimum or maximum reduction. Depending on the example, the execution circuitry 2009 may include a plurality of floating point minimum/maximum circuits. In some examples, these minimum/maximum circuits form an minimum/maximum circuit reduction tree circuit 2021.

In some examples, the execution circuitry 2009 is a part of a pipeline execution (such an execute stage 2716). In some examples, the execution circuitry 2009 is a part of, or comprises, execution unit(s) circuitry 2762 and/or execution circuitry 2209. The execution circuitry 2009 comprises combinational logic circuitry in some examples.

In some examples, when the data elements of the sources 2001 and 2003 and destination 2031 are not the same size, the data elements of the sources 2001 and 2003 are converted using data element conversion circuitry 2042.

In some examples, values in a mask (e.g., writemask 2005) provided, or referenced by, the instruction are used to selectively mask corresponding data element positions of SRC1 2003 using element masking circuitry 2020. For example, bit position [0] of the mask 2005 indicates how data element position [0] of SRC1 2003 is to be treated. In some examples, the mask is provided by a writemask operand. In some examples, the mask is provided by an immediate. In some examples, the mask is provided by a non-writemask register operand. In some examples, a 0 for a value in a bit position of the writemask 2005 indicates to not provide a data element in a corresponding data element position. For example, when the mask[0] is 0, in some instances, the data element of SRC1[0] 2003 is not fed to the minimum/maximum circuit reduction tree circuitry 2021.

In this illustration, a data element from a least significant data element position of SRC1 2003 is provided to the minimum/maximum circuit reduction tree circuitry 2021. In some examples, the result is stored in data element position [0] of DST 2031.

In some examples, the remaining data elements of DST 2031 are zeroed using zeroing circuitry 2029. Note that the number of data elements of the DST 2031 and the sources 2101 and 2103 may not be the same.

As noted above, the datatype and size may vary depending on the opcode, etc. In some examples, a decoder and/or scheduler provides this information (as control 2041) to the execution circuitry 2009 that allows for the proper execution unit type (e.g., minimum/maximum circuit) to be used. In some examples, operation control circuitry 2043 configures the execution circuitry 2009 according to that control information 2041 to use one or more minimum/maximum circuits instead of other logic circuits 2045 such as Boolean logic circuits, etc. In some examples, the operation control circuitry 2043 is external to the execution circuitry 2009 such as a part of a scheduler such as scheduler 2756.

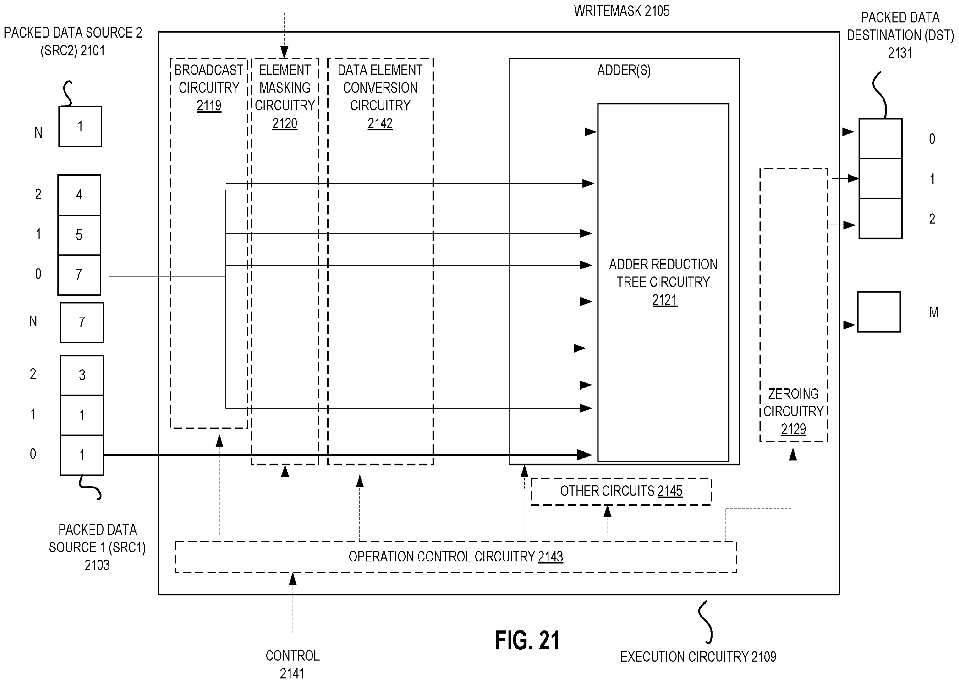

FIG. 21 illustrates example executions of a horizontal minimum or maximum reduction instruction with floating point data elements. While this illustration is in little endian format, the principles discussed herein work in big endian format. In this example, the execution of the horizontal minimum or maximum reduction instruction with floating point data elements performs a minimum or maximum operation on a data element from a first source to a broadcasted data element from a second source to generate a minimum or maximum reduction. In some examples, a mask is used to determine which minimum/maximum circuits will receive the broadcasted data element. That is the data element may not be broadcasted to each data element. The result of the minimum/maximum reduction is the min/max reduction of those data elements. In some examples, the result is stored in a least significant data element position of a destination (such as a register or memory location). In some examples, other data elements positions have their data elements zeroed.

The opcode of the instruction indicates the operation to be performed (in this case a horizontal minimum or maximum reduction). Additionally, in some embodiments, an immediate of the instruction provides a particular minimum or maximum operation selection and a sign control override as detailed above. This information may be a part of the control information 2141.

As noted above, in some examples, data elements of the source and destination are different sizes. In some examples, the opcode also indicates, or at least partially indicates, a datatype and size of elements to be operated on. In this example, the opcode mnemonic may include such an identification with PH (16-bit floating point or half-precision floating point), PS (32-bit floating point or single-precision floating point), PD (64-bit floating point or double-precision floating point), or BF16 (bfloat16).

In this illustration, a first packed data source (SRC1) 2103 and a second packed data source (SRC2) 2101 each store a plurality of packed data elements (shown here as 0 to N). As noted above, in some examples SRC1 2103 and SRC2 2101 are packed data (e.g., vector or SIMD) registers. In other examples, SRC2 2101 is one or more locations in memory.

SRC1 2103 and SRC2 2001 is provided to execution circuitry 2109 which is to perform the horizontal minimum or maximum reduction. The horizontal minimum or maximum reduction is performed by floating point minimum/maximum circuits. In some examples, the floating point minimum/maximum circuits form minimum/maximum circuit reduction tree circuitry 2121.

In this example, broadcast circuitry 2119 may broadcast a single data element from SRC2 2101 to all of the minimum/maximum circuits as a first input. In some examples, the data element from the least significant data element position of SRC1 2103 is broadcast.

In some examples, element masking circuitry is used to determine which minimum/maximum circuits will receive the single data element. In some examples, values in a mask (e.g., writemask 2105) provided, or referenced by, the instruction are used to selectively mask corresponding data element positions of SRC2 2101 (and corresponding minimum/maximum circuits) using element masking circuitry 2120. For example, bit position [1] of the mask 2105 indicates how an minimum/maximum circuit associated with data element position [1] of SRC2 2101 is to be treated. In some examples, the mask is provided by a writemask operand. In some examples, the mask is provided by an immediate. In some examples, the mask is provided by a non-writemask register operand. In some examples, a 0 for a value in a bit position of the writemask 2105 indicates to not provide a data element in a corresponding data element position. For example, when the mask[1] is 0, in some instances, the data element of SRC1[0] 2101 is not broadcast to minimum/maximum circuit reduction tree circuitry 2121.

Depending on the example, the execution circuitry 2109 may include a plurality of floating point minimum/maximum circuits (e.g., minimum/maximum circuit reduction tree circuitry 2121) to perform the horizontal minimum or maximum reduction and store a result in destination 2131. In some examples, the execution circuitry 2109 is a part of a pipeline execution (such an execute stage 2716). In some examples, the execution circuitry 2109 is a part of, or comprises, execution unit(s) circuitry 2762 and/or execution circuitry 2209. The execution circuitry 2109 comprises combinational logic circuitry in some examples.

In some examples, when the data elements of the sources 2101 and 2103 and destination 2131 are not the same size, the data elements of sources 2101 and 2103 are converted using data element conversion circuitry 2142.

In some examples, the remaining data elements of DST 2131 are zeroed using zeroing circuitry 2129. Note that the number of data elements of the DST 2131 and sources 2101 and 2103 may not be the same.

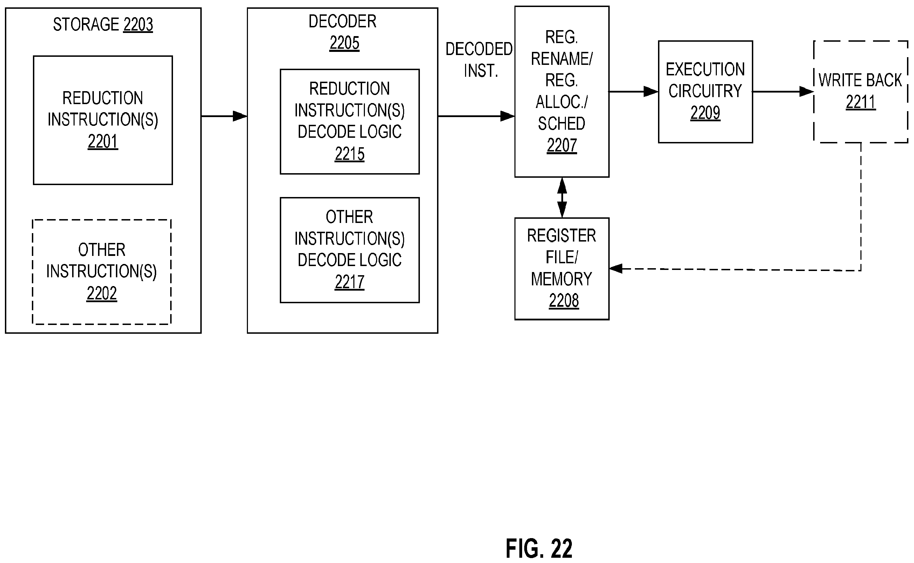

FIG. 22 illustrates examples of computing hardware to process at least a reduction instruction. As illustrated, storage 2203 stores at least an instance of a reduction instruction 2201 to be executed. The storage 2203 may also store other instructions 2202.

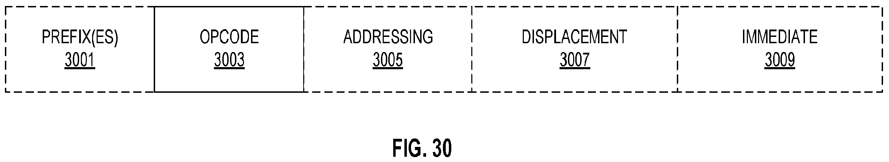

The instruction 2201 is received by decoder circuitry 2205 which includes reduction support 2213 and other instruction(s) support 2217. For example, the decoder circuitry 2205 receives this instruction from fetch circuitry (not shown). The instruction may be in any suitable format, such as that described with reference to FIG. 30 below.

More detailed examples of at least one instruction format for the instruction will be detailed later. The decoder circuitry 2205 decodes the instruction into one or more operations. In some examples, this decoding includes generating a plurality of micro-operations to be performed by execution circuitry (such as execution circuitry 2209). The decoder circuitry 2205 also decodes instruction prefixes.

In some examples, register renaming, register allocation, and/or scheduling circuitry 2207 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples) and/or providing information for configuring, or configuring, the execution circuitry 2209 to execute a particular instruction.

Examples of pseudocode for the execution of a horizontal addition reduction instruction are as follows:

```
 VPHRADDBD dest {k1}, src
 VL = 128, 256 or 512
 KL := VL/8
 
 tmp .dword := 0
 for i := 0 to KL-1:
    if k1[i] or *no writemask*:
          tsrc. dword := zero_extend (src.byte[i])
          tmp .dword := tmp.dword + tsrc.dword // unsigned add
 
 dest .dword[0] := tmp
 dest [MAX_VL-1:32] := 0

 VPHRADDSBD dest {k1}, src
 VL = 128, 256 or 512
 KL := VL/8
  
 tmp .dword := 0
 for i := 0 to KL-1:
   if k1[i] or *no writemask*:
          tsrc. dword := sign_extend (src.byte[i])
          tmp .dword := tmp.dword + tsrc.dword // signed add
  
 dest .dword[0] := tmp
 dest [MAX_VL-1:32] := 0
 
 VPHRADDWD dest {k1}, src
 VL = 128, 256 or 512
 KL := VL / 16
  
 tmp .dword := 0
 for i := 0 to KL-1:
    if k1[i] or *no writemask*:
       if src is memory and (EVEX .b == 1):
          tsrc. dword := sign_extend (src.word[0])
       else:
          tsrc. dword := sign_extend (src.word[i])
       tmp .dword := tmp.dword + tsrc.dword // signed add
  
 dest .dword[0] := tmp
 dest [MAX_VL-1:32] := 0

 VPHRADDD dest {k1}, src
 VL = 128, 256 or 512
 KL := VL / 32
  
 tmp := 0
 for i := 0 to KL-1:
    if k1[i] or *no writemask*:
       if src is memory and (EVEX .b == 1):
          tsrc := src.dword[0]
       else:
          tsrc := src.word[i]
       tmp := tmp + tsrc // unsigned add
  
 dest .dword[0] := tmp
 dest [MAX_VL-1:32] := 0
 VPHRADDSD dest {k1}, src
 VL = 128, 256 or 512
 KL := VL / 32
  
 tmp := 0
 for i := 0 to KL-1:
    if k1[i] or *no writemask*:
       if src is memory and (EVEX .b == 1):
          tsrc := src.dword[0]
       else:
          tsrc := src.dword[i]
       tmp := tmp + tsrc // signed add
  
 dest .dword[0] := tmp
 dest [MAX_VL-1:32] := 0

 VPHRADDQ dest {k1}, src
 VL = 128, 256 or 512
 KL := VL / 64
  
 tmp := 0
 for i := 0 to KL-1:
    if k1[i] or *no writemask*:
       if src is memory and (EVEX .b == 1):
          tsrc := src.qword[0]
       else:
          tsrc := src.qword[i]
       tmp := tmp + tsrc // unsigned add
  
 dest .qword[0] := tmp
 dest [MAX_VL-1:64] := 0

 VPHRADDSQ dest {k1}, src
 VL = 128, 256 or 512
 KL := VL / 64
  
 tmp := 0
 for i := 0 to KL-1:
    if k1[i] or *no writemask*:
       if src is memory and (EVEX .b == 1):
          tsrc := qword[0]
       else:
          tsrc := qword[i]
       tmp := tmp + tsrc // signed add
  
 dest .qword[0] := tmp
 dest [MAX_VL-1:64] := 0

 VPHRAADDBD dest {k1}, src1, src2
 VL= 128, 256 or 512
 KL := VL/8
  
 tmp .dword := zero_extend (src1 .byte[0])
 for i := 0 to KL-1:
    if k1[i] or *no writemask*:
          tsrc .dword := zero_extend (src2 .byte[i])
          tmp .dword:= tmp .dword + tsrc .dword // unsigned add
  
 dest .dword[0] := tmp
 dest [MAX_VL-1:32] := 0
  
 VPHRAADDSBD dest {k1}, src1, src2
 VL= 128, 256 or 512
 KL := VL/8
  
 tmp .dword := sign_extend (src1 .byte[0])
 for i := 0 to KL-1:
    if k1[i] or *no writemask*:
          tsrc .dword := sign_extend (src2 .byte[i])
          tmp .dword:= tmp .dword + tsrc .dword // signed add
  
 dest .dword[0] := tmp
 dest [MAX_VL-1:32] := 0

 VPHRAADDWD dest {k1}, src1, src2
 VL= 128, 256 or 512
 KL := VL / 16
  
 tmp .dword := zero_extend (src1 .word[0])
 for i := 0 to KL-1:
    if k1[i] or *no writemask*:
       if src2 is memory and (EVEX .b == 1):
          tsrc .dword := zero_extend (src2 .word[0])
       else:
          tsrc .dword := zero_extend (src2 .word[i])
       tmp .dword := tmp .dword + tsrc .dword // unsigned add
  
 dest .dword[0] := tmp
 dest [MAX_VL-1:32] := 0

 VPHRAADDSWD dest {k1}, src1, src2
 VL= 128, 256 or 512
 KL := VL / 16
  
 tmp .dword := sign_extend (src1 .word[0])
 for i := 0 to KL-1:
    if k1[i] or *no writemask*:
       if src2 is memory and (EVEX .b == 1):
          tsrc .dword := sign_extend (src2 .word[0])
       else:
          tsrc .dword := sign_extend (src2 .word[i])
       tmp .dword := tmp .dword + tsrc .dword // signed add
  
 dest .dword[0] := tmp
 dest [MAX_VL-1:32] := 0

 VHRADDPD dest {k1}, src
 VL = 128, 256 or 512
 KL := VL / 64
  
 if (VL == 512) and (EVEX .b == 1):
    SET_RM(EVEX.RC)
 else:
    SET_RM(MXCSR.RC)
  
 H := log2 (KL) // number of levels in the reduction tree
  
 tmp := 0
 for i := 0 to KL-1:
    if k1[i] or *no writemask*:
       if src is memory and (EVEX .b == 1):
          tmp .f64[i] := src .f64[0]
       else:
          tmp .f64[i] := src .f64[i]
 ENDFORLOOP
 for h := 1 to H:
    s := 2^h
    for i := 0 to (KL/s) - 1:
       tmp .f64 [i*s] := tmp .f64 [i*s] + tmp .f64 [i*s + s/2]
  
 dest .f64[0] := tmp .f64[0]
 dest [MAX_VL-1:64] := 0
  
 VHRADDPS dest {k1}, src
 VL = 128, 256 or 512
 KL:= VL/ 32

 if (VL == 512) and (EVEX .b == 1):
    SET_RM(EVEX.RC)
 else:
    SET_RM(MXCSR.RC)
 
 H := log2 (KL) // number of levels in the reduction tree
 
 tmp := 0
 for i := 0 to KL-1:
    if k1[i] or *no writemask*:
       if src is memory and (EVEX .b == 1):
          tmp .f32[i] := src .f32[0]
       else:
          tmp .f32[i] := src .f32[i]
 ENDFORLOOP
 for h := 1 to H:
    s := 2^h
    for i := 0 to (KL/s) - 1:
       tmp .f32 [i*s] := tmp .f32 [i*s] + tmp .f32 [i*s + s/2]
 
 dest .f32[0] := tmp .f32[0]
 dest [MAX_VL-1:32] := 0
 
 VHRADDPH dest {k1}, src
 VL = 128, 256 or 512
 KL:= VL/ 16
 
 if (VL == 512) and (EVEX .b == 1):
    SET_RM(EVEX.RC)
 else:
    SET_RM(MXCSR.RC)
 
 H := log2 (KL) // number of levels in the reduction tree
 
 tmp := 0
 for i := 0 to KL-1:
    if k1[i] or *no writemask*:
       if src is memory and (EVEX .b == 1):
          tmp .f16[i] := src .f16[0]
       else:
          tmp .f16[i] := src.f16[i]
 ENDFORLOOP
 for h := 1 to H:
    s := 2^h
    for i := 0 to (KL/s) - 1:
       tmp .f16 [i*s] := tmp .f16 [i*s] + tmp .f16 [i*s + s/2]
 
 dest .f16[0] := tmp .f16[0]
 dest [MAX_VL-1:16] := 0
 
 VHRADDNEPBF16 dest {k1}, src
 VL = 128, 256 or 512
 KL := VL / 16
 
 H := log2 (KL) // number of levels in the reduction tree
 
 tmp := 0
 for i := 0 to KL-1:
    if k1[i] or *no writemask*:
       if src is memory and (EVEX .b == 1):
          tmp .bf16[i] := src .bf16[0]
       else:
          tmp .bf16[i] := src .bf16[i]
 ENDFORLOOP
 for h := 1 to H:
    s := 2^h
    for i := 0 to (KL/s) - 1:
       tmp .bf16 [i*s] := tmp .bf16 [i*s] + tmp .bf16 [i*s + s/2] // DAZ, FTZ, RNE. SAE
 
 dest .bf16[0] := tmp .bf16[0]
 dest [MAX_VL-1:16] := 0

 VHRAADDPHPS dest {k1}, src1, src2
 VL= 128, 256 or 512
 KL:= VL/ 16
 
 if (VL == 512) and (EVEX .b == 1):
    SET_RM(EVEX.RC)
 else:
    SET_RM(MXCSR.RC)
 
 H := log2 (KL) // number of levels in the reduction tree
 
 tmp := 0
 for i := 0 to KL-1:
    if k1[i] or *no writemask*:
       if src2 is memory and (EVEX .b == 1):
          tmp .f32[i] := cvt_fp16_to_fp32 (src2 .fp16[0]
       else:
          tmp .f32[i] := cvt_fp16_to_fp32 (src2 .fp16[i]
 ENDFORLOOP
 for h := 1 to H:
    s := 2^h
    for i := 0 to (KL/s) - 1:
       tmp .f32 [i*s] := tmp .f32 [i*s] + tmp .f32 [i*s + s/2]
 
 dest .f32[0] = src1 .f32[0] + tmp .f32[0]
 dest [MAX_VL-1:32] := 0
 
 VHRAADDNEPBF16PS dest {k1}, src1, src2
 VL= 128, 256 or 512
 KL := VL / 16

 H := log2 (KL) // number of levels in the reduction tree
 
 tmp := 0
 for i := 0 to KL-1:
    if k1[i] or *no writemask*:
       if src2 is memory and (EVEX .b == 1):
          tmp .f32[i] := make_fp32 (src2 .bf16[0]
       else:
          tmp .f32[i] := make_fp32 (src2 .bf16[i]
 ENDFORLOOP
 for h := 1 to H:
    s := 2^h
    for i := 0 to (KL/s) - 1:
       tmp .f32 [i*s] := tmp .f32 [i*s] + tmp .f32 [i*s + s/2] // DAZ, FTZ, RNE, SAE
 
 dest .f32[0] = src1 .f32[0] + tmp .f32[0]
 dest [MAX_VL-1:32] := 0
```

Examples of pseudocode for the execution of a horizontal logic reduction instruction are as follows:

```
VPHRORB dest {k1}, src
 VL = 128, 256 or 512
 KL := VL/8
 tmp := 0
 
 for i := 0 to KL-1:
    if k1[i] or *no writemask*:
          tmp := tmp OR src .byte[i]
 dest .byte[0] := tmp
 dest [MAX_VL-1:8] := 0
 
 VPHRORW dest {k1}, src
 VL = 128, 256 or 512
 KL := VL / 16
 
 tmp := 0
 for i := 0 to KL-1:
    if k1[i] or *no writemask*:
       if src is memory and (EVEX .b == 1):
          tsrc := src.word[0]
       else:
          tsrc := src.word[i]
       tmp := tmp OR tsrc
 
 dest .word[0] := tmp
 dest [MAX_VL-1:16] := 0
 
 VPHRORD dest {k1}, src
 VL = 128, 256 or 512
 KL := VL / 32
 
 tmp := 0
 for i := 0 to KL-1:
   if k1[i] or *no writemask*:
       if src is memory and (EVEX .b == 1):
          tsrc := src.dword[0]
      else:
          tsrc := src.dword[i]
      tmp := tmp OR tsrc

 dest .dword[0] := tmp
 dest [MAX_VL-1:32] := 0
 VPHRORQ dest {k1}, src
 VL = 128, 256 or 512
 KL := VL / 64
  
 tmp := 0
 for i := 0 to KL-1:
    if k1[i] or *no writemask*:
       if src is memory and (EVEX .b == 1):
          tsrc := src.qword[0]
       else:
          tsrc := src.qword[i]
       tmp := tmp OR tsrc
  
 dest .qword[0] := tmp
 dest [MAX_VL-1:64] := 0
 VPHRORDQ dest, src
 VL = 128, 256 or 512
 KL := VL / 128
  
 tmp := src .i128[0]
 for i := 0 to KL-1:
       if src is memory and (EVEX .b == 1):
          tsrc := src .i128 [0]
       else:
          tsrc := src .i128[i]
       tmp := tmp OR tsrc
  
 dest .i128[0] := tmp
 dest [MAX_VL-1:128] := 0
 VPHRORQQ dest, src
 VL = 512
 KL := VL / 256
  
 tmp := src .i256[0]
 for i := 1 to KL-1:
       if src is memory and (EVEX .b == 1):
          tsrc := src .i256 [0]
       else:
          tsrc := src .i256[i]
       tmp := tmp OR tsrc
  
 dest .i256[0] := tmp
 dest [MAX_VL-1:256] := 0
  
 VPHRXORB dest {k1}, src
 VL = 128, 256 or 512
 KL := VL/ 8
  
 tmp := 0
 for i := 0 to KL-1:
    if k1[i] or *no writemask*:
          tmp := tmp XOR src .byte[i]
  
 dest .byte[0] := tmp
 dest [MAX_VL-1:8] := 0
  
 VPHRXORW dest {k1}, src
 VL = 128, 256 or 512
 KL := VL / 16
 tmp := 0
 for i := 0 to KL-1:
    if k1[i] or *no writemask*:
       if src is memory and (EVEX .b == 1):
          tsrc := src.word[0]
       else:
          tsrc := src.word[i]
       tmp := tmp XOR tsrc
  
 dest .word[0] := tmp
 dest [MAX_VL-1:16] := 0
 VPHRXORD dest {k1}, src
 VL = 128, 256 or 512
 KL := VL / 32
  
 tmp := 0
 for i := 0 to KL-1:
    if k1[i] or *no writemask*:
       if src is memory and (EVEX .b == 1):
          tsrc := src.dword[0]
       else:
          tsrc := src.dword[i]
       tmp := tmp XOR tsrc
  
 dest .dword[0] := tmp
 dest [MAX_VL-1:32] := 0
 VPHRXORQ dest {k1}, src
 VL = 128, 256 or 512
 KL := VL / 64
  
 tmp := 0
 for i := 0 to KL-1:
    if k1[i] or *no writemask*:
       if src is memory and (EVEX .b == 1):
          tsrc := src.qword[0]
       else:
          tsrc := src.qword[i]
       tmp := tmp XOR tsrc
  
 dest .qword[0] := tmp
 dest [MAX_VL-1:64] := 0
 VPHRXORDQ dest, src
 VL = 128, 256 or 512
 KL := VL / 128
  
 tmp := src .i128[0]
 for i := 1 to KL-1:
       if src is memory and (EVEX .b == 1):
          tsrc := src .i128 [0]
       else:
          tsrc := src .i128 [i]
       tmp := tmp XOR tsrc
  
 dest .i128[0] := tmp
 dest [MAX_VL-1:128] := 0
 VPHRXORQQ dest, src
 VL = 512
 KL := VL / 256
  
 tmp := src .i256[0]
 for i := 1 to KL-1:
       if src is memory and (EVEX .b == 1):
          tsrc := src .i256 [0]
       else:
          tsrc := src .i256 [i]
       tmp := tmp XOR tsrc
  
 dest .i256[0] := tmp
 dest [MAX_VL-1:256] := 0
   
 VPHRANDB dest, src
 VL= 128, 256 or 512
 KL := VL/8
  
 tmp := src .byte[0]
 for i := 1 to KL-1:
          tsrc := src .byte[i]
          tmp := tmp AND tsrc
  
 dest .byte[0] := tmp
 dest [MAX_VL-1:8] := 0
  
 VPHRANDW dest, src
 VL= 128, 256 or 512
 KL := VL / 16
  
 tmp := src .word[0]
 for i := 1 to KL-1:
       if src is memory and (EVEX .b == 1):
          tsrc := src .word [0]
       else:
          tsrc := src .word [i]
       tmp := tmp AND tsrc
  
 dest .word[0] := tmp
 dest [MAX_VL-1:16] := 0
  
 VPHRANDD dest, src
 VL= 128, 256 or 512
 KL := VL / 32
   
 tmp := src .dword[0]
 for i := 1 to KL-1:
       if src is memory and (EVEX .b == 1):
          tsrc := src .dword [0]
       else:
          tsrc := src .dword [i]
       tmp := tmp AND tsrc
  
 dest .dword[0] := tmp
 dest [MAX_VL-1:32] := 0
   
 VPHRANDQ dest, src
 VL = 128, 256 or 512
 KL := VL / 64
  
 tmp := src .qword[0]
 for i := 1 to KL-1:
       if src is memory and (EVEX .b == 1):
          tsrc := src .qword [0]
       else:
          tsrc := src .qword [i]
       tmp := tmp AND tsrc
  
 dest .qword[0] := tmp
 dest [MAX_VL-1:64] := 0
   
 VPHRANDDQ dest, src
 VL = 256 or 512
 KL := VL / 128
  
 tmp := src .i128[0]
 for i := 1 to KL-1:
       if src is memory and (EVEX .b == 1):
          tsrc := src .i128 [0]
       else:
          tsrc := src .i128 [i]
       tmp := tmp AND tsrc
  
 dest .i128[0] := tmp
 dest [MAX_VL-1:128] := 0
   
 VPHRANDQQdest, src
 VL = 512
 KL := VL / 256
  
 tmp := src .i256[0]
 for i := 1 to KL-1:
       if src is memory and (EVEX .b == 1):
          tsrc := src .i256 [0]
       else:
          tsrc := src .i256 [i]
       tmp := tmp AND tsrc
  
 dest .i256[0] := tmp
 dest [MAX_VL-1:256] := 0
   
 VPHRAANDB dest {k1}, src1, src2
 VL= 128, 256 or 512
 KL := VL/8
  
 tmp := src1 .byte [0]
  
 for i := 0 to KL-1:
    if k1[i] or *no writemask*:
          tmp := tmp AND src2 .byte[i]
  
 dest .byte[0] := tmp
 dest [MAX_VL-1:8] := 0
   
 VPHRAANDW dest {k1], src1, src2
 VL= 128, 256 or 512
 KL := VL / 16
  
 tmp := src1 .word[0]
  
 for i := 0 to KL-1:
    if k1[i] or *no writemask*:
       if src2 is memory and (EVEX .b == 1):
          tsrc := src2 .word [0]
       else:
          tsrc := src2 .word [i]
       tmp := tmp AND tsrc
  
 dest .word[0] := tmp
 dest [MAX_VL-1:16] := 0
   
 VPHRAANDD dest {k1], src1, src2
 VL= 128, 256 or 512
 KL := VL / 32
  
 tmp := src1 .dword[0]
  
 for i := 0 to KL-1:
    if k1[i] or *no writemask*:
       if src2 is memory and (EVEX .b == 1):
          tsrc := src2 .dword [0]
       else:
          tsrc := src2 .dword [i]
       tmp := tmp AND tsrc
  
 dest .dword[0] := tmp
 dest [MAX_VL-1:32] := 0
   
 VPHRAANDQ dest {k1], src1, src2
 VL = 128, 256 or 512
 KL := VL / 64
  
 tmp := src1 .qword[0]
  
 for i := 0 to KL-1:
    if k1[i] or *no writemask*:
       if src2 is memory and (EVEX .b == 1):
          tsrc := src2 .qword [0]
       else:
          tsrc := src2 .qword [i]
       tmp := tmp AND tsrc
  
 dest .qword[0] := tmp
 dest [MAX_VL-1:64] := 0
```

Examples of pseudocode for the execution of a horizontal min/max reduction instruction are as follows:

```
 VPHRMAXB dest {k1}, src
 VL = 128, 256 or 512
 KL := VL/8
  
 tmp := 0
 for i := 0 to KL-1:
    if k1[i] or *no writemask*:
       tsrc := src .byte[i]
       if tmp < tsrc: // unsigned comparison
          tmp := tsrc
  
 dest .byte[0] := tmp
 dest [MAX_VL-1:8] := 0
   
 VPHRMAXW dest {k1}, src
 VL = 128, 256 or 512
 KL := VL / 16
  
 tmp := 0
 for i := 0 to KL-1:
    if k1[i] or *no writemask*:
       if src is memory and (EVEX .b == 1):
          tsrc := src.word[0]
       else:
          tsrc := src.word[i]
  
       if tmp < tsrc: // unsigned comparison
       tmp := tsrc
  
  
 dest .word[0] := tmp
 dest [MAX_VL-1:16] := 0
   
 VPHRMAXD dest {k1}, src
 VL = 128, 256 or 512
 KL := VL / 32
  
 tmp := 0
 for i := 0 to KL-1:
    if k1[i] or *no writemask*:
       if src is memory and (EVEX .b == 1):
          tsrc := src.dword[0]
       else:
          tsrc := src.dword[i]
  
       if tmp < tsrc: // unsigned comparison
       tmp := tsrc
  
 dest .dword[0] := tmp
 dest [MAX_VL-1:32] := 0
 VPHRMAXQ dest {k1}, src
 VL = 128, 256 or 512
 KL := VL / 64
  
 tmp := 0
 for i := 0 to KL-1:
    if k1[i] or *no writemask*:
       if src is memory and (EVEX .b == 1):
          tsrc := src.qword[0]
       else:
          tsrc := src.qword[i]
  
       if tmp < tsrc: // unsigned comparison
       tmp := tsrc
  
 dest .qword[0] := tmp
 dest [MAX_VL-1:64] := 0
   
 VPHRMAXSB dest, src
 VL = 128, 256 or 512
 KL := VL/8
  
 tmp := src .byte[0]
 for i := 1 to KL-1:
       tsrc := src .byte[i]
       if tmp < tsrc: // signed comparison
          tmp := tsrc
  
 dest .byte[0] := tmp
 dest [MAX_VL-1:8] := 0
 VPHRMAXSW dest, src
 VL = 128, 256 or 512
 KL := VL / 16
  
 tmp := src.word[0]
 for i := 1 to KL-1:
       if src is memory and (EVEX .b == 1):
          tsrc := src.word[0]
       else:
          tsrc := src.word[i]
  
       if tmp < tsrc: // signed comparison
       tmp := tsrc
  
 dest .word[0] := tmp
 dest [MAX_VL-1:16] := 0
 VPHRMAXSD dest, src
 VL = 128, 256 or 512
 KL := VL / 32
  
 tmp := src.dword[0]
 for i := 1 to KL-1:
       if src is memory and (EVEX .b == 1):
          tsrc := src.dword[0]
       else:
          tsrc := src.dword[i]
  
       if tmp < tsrc: // signed comparison
       tmp := tsrc
  
 dest .dword[0] := tmp
 dest [MAX_VL-1:32] := 0
 VPHRMAXSQ dest, src
 VL = 128, 256 or 512
 KL := VL / 64
  
 tmp := src.qword[0]
 for i := 1 to KL-1:
       if src is memory and (EVEX .b == 1):
          tsrc := src.qword[0]
       else:
          tsrc := src.qword[i]
  
       if tmp < tsrc: // signed comparison
       tmp := tsrc
  
 dest .qword[0] := tmp
 dest [MAX_VL-1:64] := 0
 VPHRMINB dest, src
 VL = 128, 256 or 512
 KL := VL/8
  
 tmp := src .byte[0]
 for i := 1 to KL-1:
       tsrc := src .byte[i]
       if tmp > tsrc: // unsigned comparison
          tmp := tsrc
  
 dest .byte[0] := tmp
 dest [MIN_VL-1:8] := 0
 VPHRMINW dest, src
 VL = 128, 256 or 512
 KL := VL / 16
  
 tmp := src.word[0]
 for i := 1 to KL-1:
       if src is memory and (EVEX .b == 1):
          tsrc := src.word[0]
       else:
          tsrc := src.word[i]
       if tmp > tsrc: // unsigned comparison
          tmp := tsrc
  
 dest .word[0] := tmp
 dest [MIN_VL-1:16] := 0
 VPHRMIND dest, src
 VL = 128, 256 or 512
 KL := VL / 32
  
 tmp := src.dword[0]
 for i := 1 to KL-1:
       if src is memory and (EVEX .b == 1):
          tsrc := src.dword[0]
       else:
          tsrc := src.dword[i]
  
       if tmp > tsrc: // unsigned comparison
          tmp := tsrc
  
 dest .dword[0] := tmp
 dest [MIN_VL-1:32] := 0
   
 VPHRMINQdest, src
 VL = 128, 256 or 512
 KL := VL / 64
  
 tmp := src.qword[0]
 for i := 1 to KL-1:
       if src is memory and (EVEX .b == 1):
          tsrc := src.qword[0]
       else:
          tsrc := src.qword[i]
       if tmp > tsrc: // unsigned comparison
          tmp := tsrc
  
 dest .qword[0] := tmp
 dest [MIN_VL-1:64] := 0
 VPHRMINSB dest, src
 VL = 128, 256 or 512
 KL := VL/8
  
 tmp := src .qword[0]
 for i := 1 to KL-1:
       tsrc := src .byte[i]
       if tmp > tsrc: // signed comparison
          tmp := tsrc
  
 dest .byte[0] := tmp
 dest [MIN_VL-1:8] := 0
 VPHRMINSW dest, src
 VL = 128, 256 or 512
 KL := VL / 16
  
 tmp := src.word[0]
 for i := 1 to KL-1:
       if src is memory and (EVEX .b == 1):
          tsrc := src.word[0]
       else:
          tsrc := src.word[i]
       if tmp > tsrc: // signed comparison
          tmp := tsrc
  
 dest .word[0] := tmp
 dest [MIN_VL-1:16] := 0
 VPHRMINSD dest, src
 VL = 128, 256 or 512
 KL := VL / 32
  
 tmp := src.dword[0]
 for i := 1 to KL-1:
       if src is memory and (EVEX .b == 1):
          tsrc := src.dword[0]
       else:
          tsrc := src.dword[i]
       if tmp > tsrc: // signed comparison
          tmp := tsrc
  
 dest .dword[0] := tmp
 dest [MIN_VL-1:32] := 0
 VPHRMINSQ dest, src
 VL = 128, 256 or 512
 KL := VL / 64
  
 tmp := src.qword[0]
 for i := 1 to KL-1:
       if src is memory and (EVEX .b == 1):
          tsrc := src.qword[0]
       else:
          tsrc := src.qword[i]
       if tmp > tsrc: // signed comparison
          tmp := tsrc
  
 dest .qword[0] := tmp
 dest [MIN_VL-1:64] := 0
 VPHRAMAXSB dest, {k1}, src1, src2
 VL= 128, 256 or 512
 KL := VL/8
  
 tmp := src1 .byte[0]
 for i := 0 to KL-1:
    if k1[i] or *no writemask*:
       if tmp < src2 .byte[i]: // signed comparison
          tmp := src2 .byte[i]
  
 dest .byte[0] := tmp
 dest [MAX_VL-1:8] := 0
 VPHRAMAXSW dest, {k1}, src1, src2
 VL = 128, 256 or 512
 KL:= VLI 16
  
 tmp := src1 .word[0]
 for i := 0 to KL-1:
    if k1[i] or *no writemask*:
       if src2 is memory and (EVEX .b == 1):
          tsrc := src2 .word[0]
       else:
          tsrc := src2 .word[i]
       if tmp < tsrc: // signed comparison
          tmp := tsrc
  
 dest .word[0] := tmp
 dest [MAX_VL-1:16] := 0
 VPHRAMAXSD dest, {k1}, src1, src2
 VL = 128, 256 or 512
 KL:= VLI 32
  
 tmp := src1 .dword[0]
  
 for i := 0 to KL-1:
    if k1[i] or *no writemask*:
       if src2 is memory and (EVEX .b == 1):
          tsrc := src2 .dword[0]
       else:
          tsrc := src2 .dword[i]
       if tmp < tsrc: // signed comparison
          tmp := tsrc
  
 dest .dword[0] := tmp
 dest [MAX_VL-1:32] := 0
 VPHRAMAXSQdest, {k1}, src1, src2
 VL = 128, 256 or 512
 KL := VL / 64
  
 tmp := src1 .qword[0]
 
 for i := 0 to KL-1:
    if k1[i] or *no writemask*:
       if src2 is memory and (EVEX .b == 1):
          tsrc := src2 .qword[0]
       else:
          tsrc := src2 .qword[i]
       if tmp < tsrc: // signed comparison
          tmp := tsrc
  
 dest .qword[0] := tmp
 dest [MAX_VL-1:64] := 0
 VPHRAMINB dest, {k1}, src1, src2
 VL= 128, 256 or 512
 KL := VL/8
  
 tmp := src1 .byte[0]
  
 for i := 0 to KL-1:
    if k1[i] or *no writemask*:
       if tmp > src2 .byte[i]: // unsigned comparison
          tmp := src2 .byte[i]
  
 dest .byte[0] := tmp
 dest [MAX_VL-1:8] := 0
  
 VPHRAMINSB dest, {k1}, src1, src2
 VL= 128, 256 or 512
 KL := VL/8
  
 tmp := src1 .byte[0]
  
 for i := 0 to KL-1:
    if k1[i] or *no writemask*:
       if tmp > src2 .byte[i]: // signed comparison
          tmp := src2 .byte[i]
  
 dest .byte[0] := tmp
 dest [MAX_VL-1:8] := 0
  
 VPHRAMINW dest, {k1}, src1, src2
 VL= 128, 256 or 512
 KL:= VLI 16
   
 tmp := src1 .word[0]
  
 for i := 0 to KL-1:
    if k1[i] or *no writemask*:
       if src2 is memory and (EVEX .b == 1):
          tsrc := src2 .word[0]
       else:
          tsrc := src2 .word[i]
       if tmp > tsrc: // unsigned comparison
          tmp := tsrc
  
 dest .word[0] := tmp
 dest [MAX_VL-1:16] := 0
 VPHRAMINSW dest, {k1}, src1, src2
 VL = 128, 256 or 512
 KL:= VLI 16
  
 tmp := src1 .word[0]
  
 for i := 0 to KL-1:
    if k1[i] or *no writemask*:
       if src2 is memory and (EVEX .b == 1):
          tsrc := src2 .word[0]
       else:
          tsrc := src2 .word[i]
       if tmp > tsrc: // signed comparison
          tmp := tsrc
  
 dest .word[0] := tmp
 dest [MAX_VL-1:16] := 0
 VPHRAMIND dest, {k1}, src1, src2
 VL = 128, 256 or 512
 KL:= VLI 32
  
 tmp := src1 .dword[0]
 
 for i := 0 to KL-1:
    if k1[i] or *no writemask*:
       if src2 is memory and (EVEX .b == 1):
          tsrc := src2 .dword[0]
       else:
          tsrc := src2 .dword[i]
       if tmp > tsrc: // unsigned comparison
          tmp := tsrc
  
 dest .dword[0] := tmp
 dest [MAX_VL-1:32] := 0
 VPHRAMINSD dest, {k1}, src1, src2
 VL = 128, 256 or 512
 KL:= VLI 16
  
 tmp := src1 .word[0]
  
 for i := 0 to KL-1:
    if k1[i] or *no writemask*:
       if src2 is memory and (EVEX .b == 1):
          tsrc := src2 .dword[0]
       else:
          tsrc := src2 .dword[i]
       if tmp > tsrc: // signed comparison
          tmp := tsrc
  
 dest .dword[0] := tmp
 dest [MAX_VL-1:32] := 0
 VPHRAMAXQ dest, {k1}, src1, src2
 VL = 128, 256 or 512
 KL := VL / 64
  
 tmp := src1 .qword[0]
  
 for i := 0 to KL-1:
    if k1[i] or *no writemask*:
       if src2 is memory and (EVEX .b == 1):
          tsrc := src2 .qword[0]
       else:
          tsrc := src2 .qword[i]
       if tmp > tsrc: // unsigned comparison
          tmp := tsrc
  
 dest .qword[0] := tmp
 dest [MAX_VL-1:64] := 0
 VPHRAMAXSQdest, {k1}, src1, src2
 VL = 128, 256 or 512
 KL := VL / 64
  
 tmp := src1 .qword[0]
  
 for i := 0 to KL-1:
    if k1[i] or *no writemask*:
       if src2 is memory and (EVEX .b == 1):
          tsrc := src2 .qword[0]
       else:
          tsrc := src2 .qword[i]
       if tmp > tsrc: // signed comparison
          tmp := tsrc
  
 dest .qword[0] := tmp
 dest [MAX_VL-1:64] := 0
 VHRMINMAXPD dest, src, imm8
 VL= 128, 256 or 512
 KL := VL / 64
  
 H := log2 (KL) // number of levels in the reduction tree
  
 tmp := 0
  
 for i := 0 to KL-1:
       if src is memory and (EVEX .b == 1):
          tmp .f64[i] := src .f64[0]
       else:
          tmp .f64[i] := src .f64[i]
 ENDFORLOOP
 for h := 1 to H:
    s := 2^h
    for i := 0 to (KL/s) - 1:
       tmp .f64 [i*s] := minmax (tmp .f64 [i*s], tmp .f64 [i*s + s/2],
                                imm8, daz=MXCSR.DAZ, except=true)
 dst .f64[0] := tmp .f64[0]
 dest [MAX_VL-1:64] := 0
 VHRMINMAXPS dest, src, imm8
 VL= 128, 256 or 512
 KL := VL / 32
  
 H := log2 (KL) // number of levels in the reduction tree
  
 tmp := 0
  
 for i := 0 to KL-1:
       if src is memory and (EVEX .b == 1):
          tmp .f32[i] := src .f32[0]
       else:
          tmp .f32[i] := src .f32[i]
 ENDFORLOOP
 for h := 1 to H:
    s := 2^h
    for i := 0 to (KL/s) - 1:
       tmp .f32 [i*s] := minmax (tmp .f32 [i*s], tmp .f32 [i*s + s/2],
                                imm8, daz=MXCSR.DAZ, except=true)
 dst .f32[0] := tmp .f32[0]
 dest [MAX_VL-1:32] := 0
 VHRMINMAXPH dest, src, imm8
 VL= 128, 256 or 512
 KL := VL / 16
  
 H := log2 (KL) // number of levels in the reduction tree
  
 tmp := 0
  
 for i := 0 to KL-1:
       if src is memory and (EVEX .b == 1):
          tmp .f16[i] := src .f16[0]
       else:
          tmp .f16[i] := src.f16[i]
 ENDFORLOOP
 for h := 1 to H:
    s := 2^h
    for i := 0 to (KL/s) - 1:
       tmp .f16 [i*s] := minmax (tmp .f16 [i*s], tmp .f16 [i*s + s/2],
                                imm8, daz=false, except=true)
 dst .f16[0] := tmp .f16[0]
 dest [MAX_VL-1:16] := 0
 VHRMINMAXNEPBF16PS dest, src, imm8
 VL= 128, 256 or 512
 KL := VL / 16
  
 H := log2 (KL) // number of levels in the reduction tree
  
 tmp := 0
  
 for i := 0 to KL-1:
       if src is memory and (EVEX .b == 1):
          tmp .bf16[i] := src .bf16[0]
       else:
          tmp .bf16[i] := src .bf16[i]
 ENDFORLOOP
 for h := 1 to H:
    s := 2^h
    for i := 0 to (KL/s) - 1:
       tmp .bf16 [i*s] := minmax (tmp .bf16 [i*s], tmp .bf16 [i*s + s/2],
                                imm8, daz=true, except=false)
 dst .bf16[0] := tmp .bf16[0]
 dest [MAX_VL-1:16] := 0
 VHRAMINMAXPD dest {k1}, src1, src2, imm8
 VL = 128, 256 or 512
 KL := VL / 64
  
 H := log2 (KL) // number of levels in the reduction tree
  
 tmp := 0
 valid := 0
  
 for i := 0 to KL-1:
     if k1[i] or *no writemask*:
       if src is memory and (EVEX .b == 1):
          tmp .bf64[i] := src .bf64[0]
       else:
          tmp .bf64[i] := src .bf64[i]
       valid.bit[i] := 1
 ENDFORLOOP
 for h := 1 to H:
    s := 2^h
    for i := 0 to (KL/s) - 1:
       if valid.bit[i*s] and valid.bit[i*s + s/2]:
          tmp .bf64 [i*s] := minmax (tmp .bf64 [i*s], tmp .bf64 [i*s + s/2],
                                imm8, daz=MXCSR.DAZ, except=true)
       else if valid.bit[i*s + s/2]:
          tmp.f64[i*s] := tmp.f64[i*s + s/2] // pass unmasked element
          valid.bit[i*s] := 1
       // if only tmp.f64[i*s] is unmasked do nothing (pass unmasked element)
       // if both elements are masked do nothing
 if valid.bit[0]:
    dst.f64[0] := minmax(src1.f64[0], tmp.f64[0],
                       imm8, daz=MXCSR.DAZ, except=true)
 else: // mask is all zeros
     dst .f64[0] := src1 .f64[0]
 dest [MAX_VL-1:64] := 0
 VHRAMINMAXPS dest {k1}, src1, src2, imm8
 VL = 128, 256 or 512
 KL := VL / 32
  
 H := log2 (KL) // number of levels in the reduction tree
  
 tmp := 0
 valid := 0
  
 for i := 0 to KL-1:
     if k1[i] or *no writemask*:
       if src is memory and (EVEX .b == 1):
          tmp .f32[i] := src . f32[0]
       else:
          tmp . f32[i] := src .f32 [i]
       valid.bit[i] := 1
 ENDFORLOOP
 for h := 1 to H:
    s := 2^h
    for i := 0 to (KL/s) - 1:
       if valid.bit[i*s] and valid.bit[i*s + s/2]:
          tmp .f32 [i*s] := minmax (tmp .f32 [i*s], tmp .f32 [i*s + s/2],
                                imm8, daz=MXCSR.DAZ, except=true)
       else if valid.bit[i*s + s/2]:
          tmp.f32[i*s] := tmp.f32[i*s + s/2] // pass unmasked element
          valid.bit[i*s] := 1
       // if only tmp.f32[i*s] is unmasked do nothing (pass unmasked element)
       // if both elements are masked do nothing
 if valid.bit[0]:
    dst.f32[0] := minmax(src1.f32[0], tmp.f32[0],
                       imm8, daz=MXCSR.DAZ, except=true)
 else: // mask is all zeros
     dst .f32[0] := src1 .f32[0]
 dest [MAX_VL-1:32] := 0
   
 VHRAMINMAXPH dest {k1}, src1, src2, imm8
 VL = 128, 256 or 512
 KL := VL / 16
  
 H := log2 (KL) // number of levels in the reduction tree
  
 tmp := 0
 valid := 0
  
 for i := 0 to KL-1:
     if k1[i] or *no writemask*:
       if src is memory and (EVEX .b == 1):
          tmp .f16[i] := src. f16[0]
       else:
          tmp . f16[i] := src .f16 [i]
       valid.bit[i] := 1
 ENDFORLOOP
 for h := 1 to H:
    s := 2^h
    for i := 0 to (KL/s) - 1:
       if valid.bit[i*s] and valid.bit[i*s + s/2]:
          tmp .f16 [i*s] := minmax (tmp .f16 [i*s], tmp .f16 [i*s + s/2],
                                imm8, daz=false, except=true)
       else if valid.bit[i*s + s/2]:
          tmp.f16[i*s] := tmp.f16[i*s + s/2] // pass unmasked element
          valid.bit[i*s] := 1
       // if only tmp.f16[i*s] is unmasked do nothing (pass unmasked element)
       // if both elements are masked do nothing
 if valid.bit[0]:
    dst.f16[0] := minmax(src1.f16[0], tmp.f16[0],
                       imm8, daz=false, except=true)
 else: // mask is all zeros
     dst .f16[0] := src1 .f16[0]
 dest [MAX_VL-1:16] := 0
 VHRAMINMAXNEPBF16PS dest {k1}, src1, src2, imm8
 VL = 128, 256 or 512
 KL := VL / 16
  
 H := log2 (KL) // number of levels in the reduction tree
  
 tmp := 0
 valid := 0
  
 for i := 0 to KL-1:
     if k1[i] or *no writemask*:
       if src is memory and (EVEX .b == 1):
          tmp .bf16[i] := src . bf16[0]
       else:
          tmp . bf16[i] := src .bf16 [i]
       valid.bit[i] := 1
 ENDFORLOOP
 for h := 1 to H:
    s := 2^h
    for i := 0 to (KL/s) - 1:
       if valid.bit[i*s] and valid.bit[i*s + s/2]:
          tmp b.f16 [i*s] := minmax (tmp .bf16 [i*s], tmp .bf16 [i*s + s/2],
                                imm8, daz=true, except=false)
       else if valid.bit[i*s + s/2]:
          tmp.bf16[i*s] := tmp.bf16[i*s + s/2] // pass unmasked element
          valid.bit[i*s] := 1
       // if only tmp.bf16[i*s] is unmasked do nothing (pass unmasked element)
       // if both elements are masked do nothing
 if valid.bit[0]:
    dst.bf16[0] := minmax(src1.bf16[0], tmp.bf16[0],
                       imm8, daz=false, except=true)
 else: // mask is all zeros
     dst .bf16[0] := src1 .bf16[0]
 dest [MAX_VL-1:16] := 0
```

Registers (register file) and/or memory 2208 store data as operands of the instruction to be operated by execution circuitry 2209. Example register types include packed data registers, general purpose registers (GPRs), and floating-point registers.

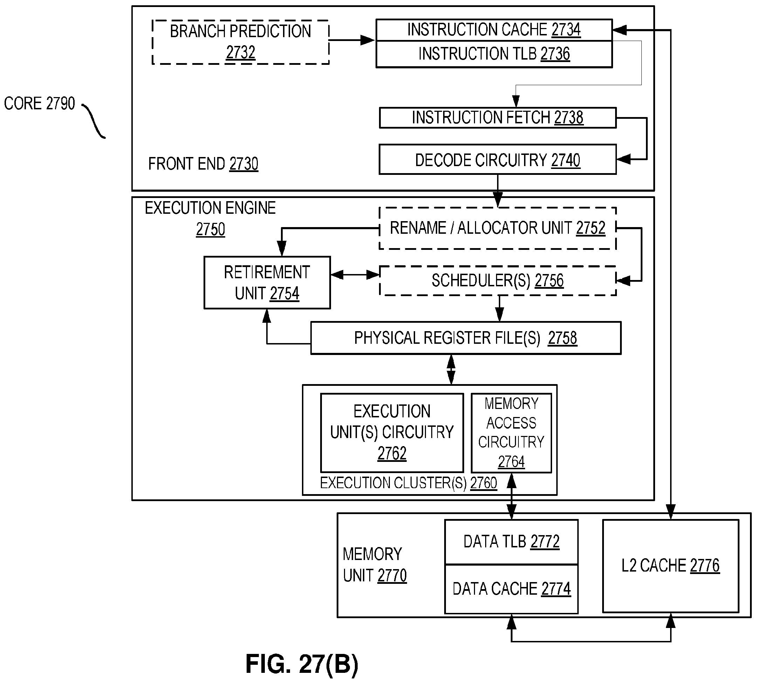

Execution circuitry 2209 executes the decoded instruction. Example detailed execution circuitry includes execution circuitry 109 shown in FIG. 1, and execution cluster(s) 2760 shown in FIG. 27(B), etc. The execution of the decoded instruction causes the execution circuitry to the operation as indicated by the opcode (and/or as defined by the immediate).

In some examples, retirement/write back circuitry 2211 architecturally commits the destination register into the registers or memory 2208 and retires the instruction.

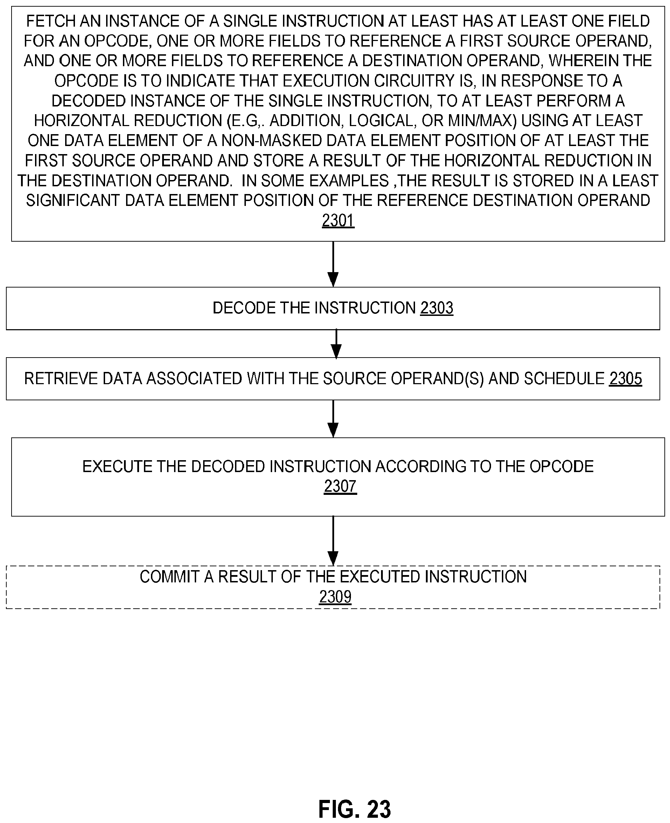

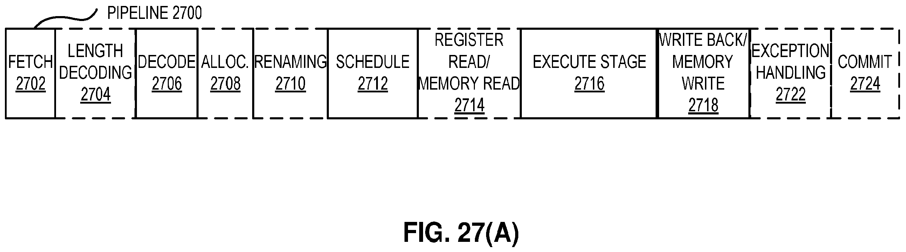

FIG. 23 illustrates an example of method performed by a processor to process a horizontal reduction instruction such as those detailed above. For example, a processor core as shown in FIG. 27(B), a pipeline as detailed below, etc., performs this method.

At 2301, an instance of a single horizontal reduction instruction (such as those detailed above) is fetched. In some examples, the instance of the single instruction at least has at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in the destination operand. In some examples the result is stored in a least significant data element position of the reference destination operand. In some examples, the horizontal reduction is one of addition, logical, or min/max.

In some examples, the first source operand and destination operand are packed data registers.

In some examples, the instruction further includes one or more fields to reference a second source operand. In some examples, a single data element of the second source operand is used in the horizontal reduction operation. Note that in the discussions above the first and second source operands may use a different naming convention. In some examples, the first source operand, second source operand, and destination operand are packed data registers. In some examples, at least one of the first source operand, second source operand, and destination operand is a packed data registers and at least one of the first source operand, second source operand, and destination operand is a packed data register is a memory location.

In some examples, the instruction further includes a field for a mask operand. In some examples, the mask of the mask operand is to mask data element positions. In some examples, some of the instructions support element masking. In some examples, masked-out elements are ignored. In some examples, masked-out elements are replaced with an identity value (e.g., zero or all ones depending on the operation).

In some examples, a single data element of the first and/or second source operand is broadcast.

In some examples, data elements of the first and/or second source operand are sign or zero extended.

Depending on the examples, data elements of the source(s) and destination may be in the form of: N, B, W, Q, DW, QQ, FP16, FP32, FP64, and/or BF16.

In some examples, the instruction includes a field for an immediate to determine a min/max operation to perform and/or sign override.

In some examples, the instruction includes a prefix such as those detailed herein.

In some examples, the execution circuitry is to use a reduction tree to perform the reduction.

In some examples, the instruction is fetched from an instruction cache. The opcode and/or opcode and prefix define the datatype and size of the source operands. In some examples, the execution circuitry is configured to perform the horizontal reduction using the defined datatype and size (e.g., by selecting the proper circuits, etc.).

The fetched instruction is decoded at 2303. For example, the fetched horizontal reduction instruction is decoded by decoder circuitry such as decoder circuitry 2205 or decode circuitry 2740 detailed herein.

Data values associated with the source operands of the decoded instruction are retrieved when the decoded instruction is scheduled at 2305. For example, when one or more of the source operands are memory operands, the data from the indicated memory location is retrieved.

At 2307, the decoded instruction is executed by execution circuitry (hardware) such as execution circuitry shown in FIGS. 1-22, execution circuitry 2209 shown in FIG. 22, or execution cluster(s) 2760 shown in FIG. 27(B), etc. according to the opcode. For the horizontal reduction instruction, the execution will cause execution circuitry to perform the operations described in connection with earlier illustrated figures, etc.

In some examples, the instruction is committed or retired at 2309.

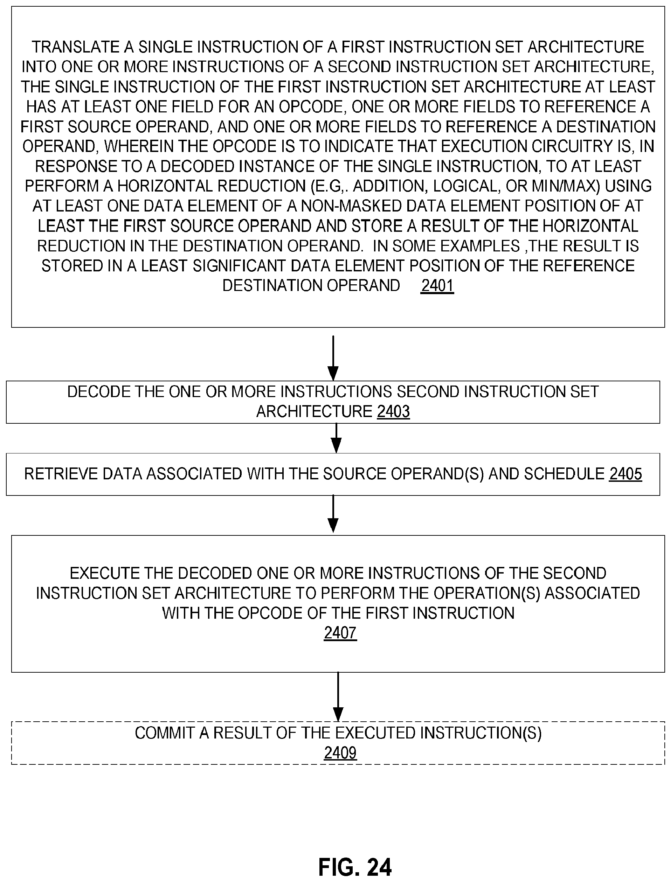

FIG. 24 illustrates an example of method to process a horizontal reduction instruction using emulation or binary translation. For example, a processor core as shown in FIG. 27(B), a pipeline and/or emulation/translation layer perform aspects of this method.

An instance of a single horizontal reduction instruction of a first instruction set architecture is translated into one or more instructions of a second instruction set architecture at 2401. In some examples, the instance of the single instruction at least has at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in the destination operand. In some examples the result is stored in a least significant data element position of the reference destination operand. In some examples, the horizontal reduction is one of addition, logical, or min/max.

In some examples, the first source operand and destination operand are packed data registers.

In some examples, the instruction further includes one or more fields to reference a second source operand. In some examples, a single data element of the second source operand is used in the horizontal reduction operation. Note that in the discussions above the first and second source operands may use a different naming convention. In some examples, the first source operand, second source operand, and destination operand are packed data registers. In some examples, at least one of the first source operand, second source operand, and destination operand is a packed data registers and at least one of the first source operand, second source operand, and destination operand is a packed data register is a memory location.

In some examples, the instruction further includes a field for a mask operand. In some examples, the mask of the mask operand is to mask data element positions. In some examples, some of the instructions support element masking. In some examples, masked-out elements are ignored. In some examples, masked-out elements are replaced with an identity value (e.g., zero or all ones depending on the operation).

In some examples, a single data element of the first and/or second source operand is broadcast.

In some examples, data elements of the first and/or second source operand are sign or zero extended.

Depending on the examples, data elements of the source(s) and destination may be in the form of: N, B, W, Q, DW, QQ, FP16, FP32, FP64, and/or BF16.

In some examples, the instruction includes a field for an immediate to determine a min/max operation to perform and/or sign override.

In some examples, the instruction includes a prefix such as those detailed herein.

In some examples, the execution circuitry is to use a reduction tree to perform the reduction.

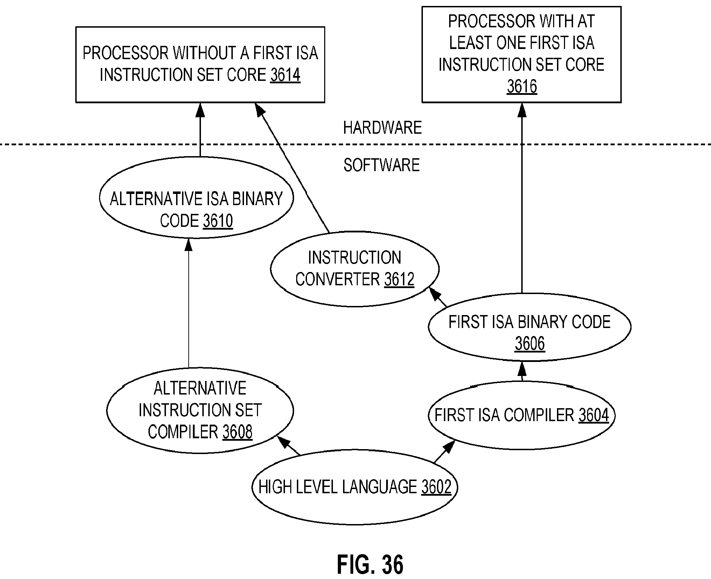

In some examples, the execution circuitry is configured to perform the horizontal reduction using the defined datatype and size (e.g., by selecting the proper circuit(s)). This translation is performed by a translation and/or emulation layer of software in some examples. In some examples, this translation is performed by an instruction converter 3612 as shown in FIG. 36. In some examples, the translation is performed by hardware translation circuitry.

The one or more translated instructions of the second instruction set architecture are decoded at 2403. For example, the translated instructions are decoded by decoder circuitry such as decoder circuitry 2205 or decode circuitry 2740 detailed herein. In some examples, the operations of translation and decoding at 2402 and 2403 are merged.

Data values associated with the source operand(s) of the decoded one or more instructions of the second instruction set architecture are retrieved and the one or more instructions are scheduled at 2405. For example, when one or more of the source operands are memory operands, the data from the indicated memory location is retrieved.

At 2407, the decoded instruction(s) of the second instruction set architecture is/are executed by execution circuitry (hardware) such as execution circuitry shown in FIGS. 1-22, execution circuitry 2209 shown in FIG. 22, or execution cluster(s) 2760 shown in FIG. 27(B), etc. to perform the horizontal reduction operation(s) indicated by the opcode of the single instruction of the first instruction set architecture. For the horizontal reduction instruction, the execution will cause execution circuitry to perform the operations described in connection with earlier illustrated figures, etc.

In some examples, the instruction is committed or retired at 2409.

Detailed below are example cores, architectures, etc. in which examples detailed above may be embodied.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

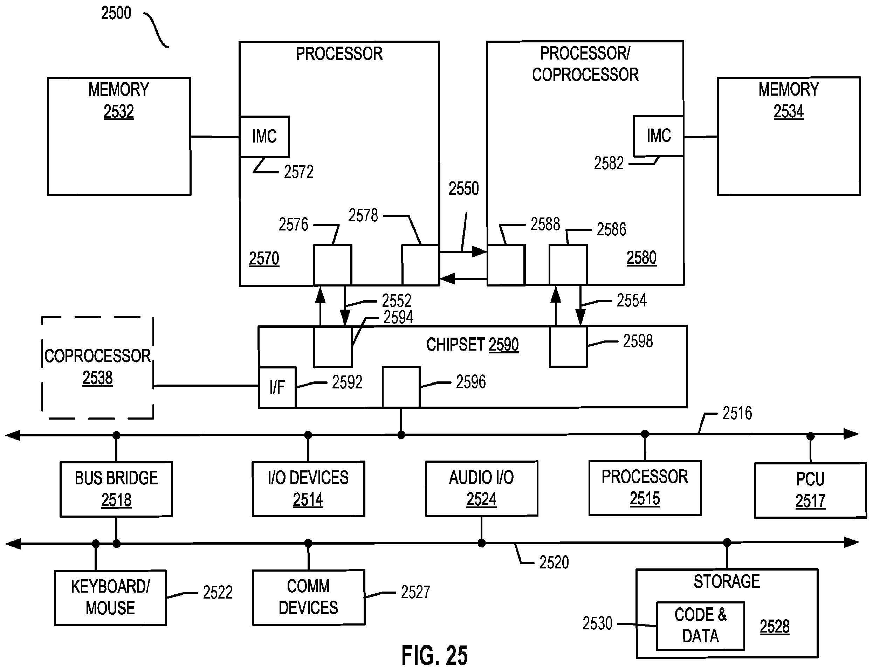

FIG. 25 illustrates an example computing system. Multiprocessor system 2500 is an interfaced system and includes a plurality of processors or cores including a first processor 2570 and a second processor 2580 coupled via an interface 2550 such as a point-to-point (P-P) interconnect, a fabric, and/or bus. In some examples, the first processor 2570 and the second processor 2580 are homogeneous. In some examples, first processor 2570 and the second processor 2580 are heterogenous. Though the example system 2500 is shown to have two processors, the system may have three or more processors, or may be a single processor system. In some examples, the computing system is a system on a chip (SoC).

Processors 2570 and 2580 are shown including integrated memory controller (IMC) circuitry 2572 and 2582, respectively. Processor 2570 also includes interface circuits 2576 and 2578; similarly, second processor 2580 includes interface circuits 2586 and 2588. Processors 2570, 2580 may exchange information via the interface 2550 using interface circuits 2578, 2588. IMCs 2572 and 2582 couple the processors 2570, 2580 to respective memories, namely a memory 2532 and a memory 2534, which may be portions of main memory locally attached to the respective processors.

Processors 2570, 2580 may each exchange information with a network interface (NW I/F) 2590 via individual interfaces 2552, 2554 using interface circuits 2576, 2594, 2586, 2598. The network interface 2590 (e.g., one or more of an interconnect, bus, and/or fabric, and in some examples is a chipset) may optionally exchange information with a coprocessor 2538 via an interface circuit 2592. In some examples, the coprocessor 2538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 2570, 2580 or outside of both processors, yet connected with the processors via an interface such as P-P interconnect, such that either or both processors' local cache information may be stored in the shared cache if a processor is placed into a low power mode.

Network interface 2590 may be coupled to a first interface 2516 via interface circuit 2596. In some examples, first interface 2516 may be an interface such as a Peripheral Component Interconnect (PCI) interconnect, a PCI Express interconnect or another I/O interconnect. In some examples, first interface 2516 is coupled to a power control unit (PCU) 2517, which may include circuitry, software, and/or firmware to perform power management operations with regard to the processors 2570, 2580 and/or co-processor 2538. PCU 2517 provides control information to a voltage regulator (not shown) to cause the voltage regulator to generate the appropriate regulated voltage. PCU 2517 also provides control information to control the operating voltage generated. In various examples, PCU 2517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 2517 is illustrated as being present as logic separate from the processor 2570 and/or processor 2580. In other cases, PCU 2517 may execute on a given one or more of cores (not shown) of processor 2570 or 2580. In some cases, PCU 2517 may be implemented as a microcontroller (dedicated or general-purpose) or other control logic configured to execute its own dedicated power management code, sometimes referred to as P-code. In yet other examples, power management operations to be performed by PCU 2517 may be implemented externally to a processor, such as by way of a separate power management integrated circuit (PMIC) or another component external to the processor. In yet other examples, power management operations to be performed by PCU 2517 may be implemented within BIOS or other system software.

Various I/O devices 2514 may be coupled to first interface 2516, along with a bus bridge 2518 which couples first interface 2516 to a second interface 2520. In some examples, one or more additional processor(s) 2515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 2516. In some examples, second interface 2520 may be a low pin count (LPC) interface. Various devices may be coupled to second interface 2520 including, for example, a keyboard and/or mouse 2522, communication devices 2527 and storage circuitry 2528. Storage circuitry 2528 may be one or more non-transitory machine-readable storage media as described below, such as a disk drive or other mass storage device which may include instructions/code and data 2530 and may implement the storage 2203 in some examples. Further, an audio I/O 2524 may be coupled to second interface 2520. Note that other architectures than the point-to-point architecture described above are possible. For example, instead of the point-to-point architecture, a system such as multiprocessor system 2500 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

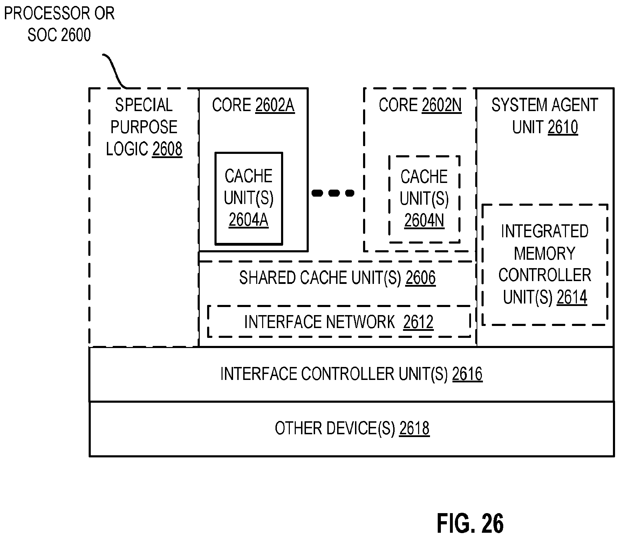

FIG. 26 illustrates a block diagram of an example processor and/or SoC 2600 that may have one or more cores and an integrated memory controller. The solid lined boxes illustrate a processor 2600 with a single core 2602(A), system agent unit circuitry 2610, and a set of one or more interface controller unit(s) circuitry 2616, while the optional addition of the dashed lined boxes illustrates an alternative processor 2600 with multiple cores 2602(A)-(N), a set of one or more integrated memory controller unit(s) circuitry 2614 in the system agent unit circuitry 2610, and special purpose logic 2608, as well as a set of one or more interface controller units circuitry 2616. Note that the processor 2600 may be one of the processors 2570 or 2580, or co-processor 2538 or 2515 of FIG. 25.

Thus, different implementations of the processor 2600 may include: 1) a CPU with the special purpose logic 2608 being integrated graphics and/or scientific (throughput) logic (which may include one or more cores, not shown), and the cores 2602(A)-(N) being one or more general purpose cores (e.g., general purpose in-order cores, general purpose out-of-order cores, or a combination of the two); 2) a coprocessor with the cores 2602(A)-(N) being a large number of special purpose cores intended primarily for graphics and/or scientific (throughput); and 3) a coprocessor with the cores 2602(A)-(N) being a large number of general purpose in-order cores. Thus, the processor 2600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 2600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 2604(A)-(N) within the cores 2602(A)-(N), a set of one or more shared cache unit(s) circuitry 2606, and external memory (not shown) coupled to the set of integrated memory controller unit(s) circuitry 2614. The set of one or more shared cache unit(s) circuitry 2606 may include one or more mid-level caches, such as level 2 (L2), level 3 (L3), level 4 (L4), or other levels of cache, such as a last level cache (LLC), and/or combinations thereof. While in some examples interface network circuitry 2612 (e.g., a ring interconnect) interfaces the special purpose logic 2608 (e.g., integrated graphics logic), the set of shared cache unit(s) circuitry 2606, and the system agent unit circuitry 2610, alternative examples use any number of well-known techniques for interfacing such units. In some examples, coherency is maintained between one or more of the shared cache unit(s) circuitry 2606 and cores 2602(A)-(N). In some examples, interface controller units circuitry 2616 couple the cores 2602 to one or more other devices 2618 such as one or more I/O devices, storage, one or more communication devices (e.g., wireless networking, wired networking, etc.), etc.

In some examples, one or more of the cores 2602(A)-(N) are capable of multi-threading. The system agent unit circuitry 2610 includes those components coordinating and operating cores 2602(A)-(N). The system agent unit circuitry 2610 may include, for example, power control unit (PCU) circuitry and/or display unit circuitry (not shown). The PCU may be or may include logic and components needed for regulating the power state of the cores 2602(A)-(N) and/or the special purpose logic 2608 (e.g., integrated graphics logic). The display unit circuitry is for driving one or more externally connected displays.

The cores 2602(A)-(N) may be homogenous in terms of instruction set architecture (ISA). Alternatively, the cores 2602(A)-(N) may be heterogeneous in terms of ISA; that is, a subset of the cores 2602(A)-(N) may be capable of executing an ISA, while other cores may be capable of executing only a subset of that ISA or another ISA.

### Example Core Architectures - In-order and out-of-order core block diagram.

FIG. 27(A) is a block diagram illustrating both an example in-order pipeline and an example register renaming, out-of-order issue/execution pipeline according to examples. FIG. 27(B) is a block diagram illustrating both an example in-order architecture core and an example register renaming, out-of-order issue/execution architecture core to be included in a processor according to examples. The solid lined boxes in FIGS. 27(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 27(A), a processor pipeline 2700 includes a fetch stage 2702, an optional length decoding stage 2704, a decode stage 2706, an optional allocation (Alloc) stage 2708, an optional renaming stage 2710, a schedule (also known as a dispatch or issue) stage 2712, an optional register read/memory read stage 2714, an execute stage 2716, a write back/memory write stage 2718, an optional exception handling stage 2722, and an optional commit stage 2724. One or more operations can be performed in each of these processor pipeline stages. For example, during the fetch stage 2702, one or more instructions are fetched from instruction memory, and during the decode stage 2706, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 2706 and the register read/memory read stage 2714 may be combined into one pipeline stage. In one example, during the execute stage 2716, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 27(B) may implement the pipeline 2700 as follows: 1) the instruction fetch circuitry 2738 performs the fetch and length decoding stages 2702 and 2704; 2) the decode circuitry 2740 performs the decode stage 2706; 3) the rename/allocator unit circuitry 2752 performs the allocation stage 2708 and renaming stage 2710; 4) the scheduler(s) circuitry 2756 performs the schedule stage 2712; 5) the physical register file(s) circuitry 2758 and the memory unit circuitry 2770 perform the register read/memory read stage 2714; the execution cluster(s) 2760 perform the execute stage 2716; 6) the memory unit circuitry 2770 and the physical register file(s) circuitry 2758 perform the write back/memory write stage 2718; 7) various circuitry may be involved in the exception handling stage 2722; and 8) the retirement unit circuitry 2754 and the physical register file(s) circuitry 2758 perform the commit stage 2724.

FIG. 27(B) shows a processor core 2790 including front-end unit circuitry 2730 coupled to execution engine unit circuitry 2750, and both are coupled to memory unit circuitry 2770. The core 2790 may be a reduced instruction set architecture computing (RISC) core, a complex instruction set architecture computing (CISC) core, a very long instruction word (VLIW) core, or a hybrid or alternative core type. As yet another option, the core 2790 may be a special-purpose core, such as, for example, a network or communication core, compression engine, coprocessor core, general purpose computing graphics processing unit (GPGPU) core, graphics core, or the like.

The front-end unit circuitry 2730 may include branch prediction circuitry 2732 coupled to instruction cache circuitry 2734, which is coupled to an instruction translation lookaside buffer (TLB) 2736, which is coupled to instruction fetch circuitry 2738, which is coupled to decode circuitry 2740. In one example, the instruction cache circuitry 2734 is included in the memory unit circuitry 2770 rather than the front-end circuitry 2730. The decode circuitry 2740 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 2740 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 2740 may be implemented using various different mechanisms. Examples of suitable mechanisms include, but are not limited to, look-up tables, hardware implementations, programmable logic arrays (PLAs), microcode read only memories (ROMs), etc. In one example, the core 2790 includes a microcode ROM (not shown) or other medium that stores microcode for certain macroinstructions (e.g., in decode circuitry 2740 or otherwise within the front-end circuitry 2730). In one example, the decode circuitry 2740 includes a micro-operation (micro-op) or operation cache (not shown) to hold/cache decoded operations, micro-tags, or micro-operations generated during the decode or other stages of the processor pipeline 2700. The decode circuitry 2740 may be coupled to rename/allocator unit circuitry 2752 in the execution engine circuitry 2750.

The execution engine circuitry 2750 includes the rename/allocator unit circuitry 2752 coupled to retirement unit circuitry 2754 and a set of one or more scheduler(s) circuitry 2756. The scheduler(s) circuitry 2756 represents any number of different schedulers, including reservations stations, central instruction window, etc. In some examples, the scheduler(s) circuitry 2756 can include arithmetic logic unit (ALU) scheduler/scheduling circuitry, ALU queues, address generation unit (AGU) scheduler/scheduling circuitry, AGU queues, etc. The scheduler(s) circuitry 2756 is coupled to the physical register file(s) circuitry 2758. Each of the physical register file(s) circuitry 2758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 2758 includes vector registers unit circuitry, writemask registers unit circuitry, and scalar register unit circuitry. These register units may provide architectural vector registers, vector mask registers, general-purpose registers, etc. The physical register file(s) circuitry 2758 is coupled to the retirement unit circuitry 2754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2754 and the physical register file(s) circuitry 2758 are coupled to the execution cluster(s) 2760. The execution cluster(s) 2760 includes a set of one or more execution unit(s) circuitry 2762 and a set of one or more memory access circuitry 2764. The execution unit(s) circuitry 2762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2756, physical register file(s) circuitry 2758, and execution cluster(s) 2760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2764). It should also be understood that where separate pipelines are used, one or more of these pipelines may be out-of-order issue/execution and the rest in-order.

In some examples, the execution engine unit circuitry 2750 may perform load store unit (LSU) address/data pipelining to an Advanced Microcontroller Bus (AMB) interface (not shown), and address phase and writeback, data phase load, store, and branches.

The set of memory access circuitry 2764 is coupled to the memory unit circuitry 2770, which includes data TLB circuitry 2772 coupled to data cache circuitry 2774 coupled to level 2 (L2) cache circuitry 2776. In one example, the memory access circuitry 2764 may include load unit circuitry, store address unit circuitry, and store data unit circuitry, each of which is coupled to the data TLB circuitry 2772 in the memory unit circuitry 2770. The instruction cache circuitry 2734 is further coupled to the level 2 (L2) cache circuitry 2776 in the memory unit circuitry 2770. In one example, the instruction cache 2734 and the data cache 2774 are combined into a single instruction and data cache (not shown) in L2 cache circuitry 2776, level 3 (L3) cache circuitry (not shown), and/or main memory. The L2 cache circuitry 2776 is coupled to one or more other levels of cache and eventually to a main memory.

The core 2790 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 2790 includes logic to support a packed data instruction set architecture extension (e.g., AVX1, AVX2), thereby allowing the operations used by many multimedia applications to be performed using packed data.

### Example Execution Unit(s) Circuitry.

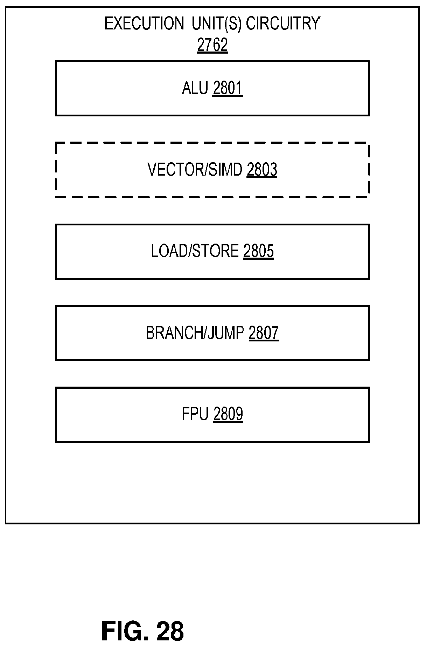

FIG. 28 illustrates examples of execution unit(s) circuitry, such as execution unit(s) circuitry 2762 of FIG. 27(B). As illustrated, execution unit(s) circuity 2762 may include one or more ALU circuits 2801, optional vector/single instruction multiple data (SIMD) circuits 2803, load/store circuits 2805, branch/jump circuits 2807, and/or Floating-point unit (FPU) circuits 2809. ALU circuits 2801 perform integer arithmetic and/or Boolean operations. Vector/SIMD circuits 2803 perform vector/SIMD operations on packed data (such as SIMD/vector registers). Load/store circuits 2805 execute load and store instructions to load data from memory into registers or store from registers to memory. Load/store circuits 2805 may also generate addresses. Branch/jump circuits 2807 cause a branch or jump to a memory address depending on the instruction. FPU circuits 2809 perform floating-point arithmetic. The width of the execution unit(s) circuitry 2762 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

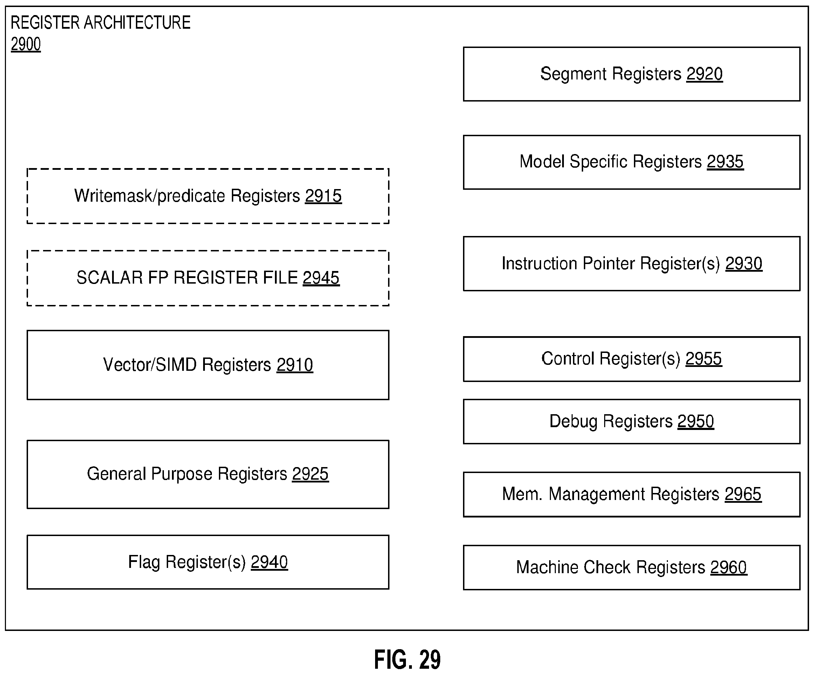

FIG. 29 is a block diagram of a register architecture 2900 according to some examples. As illustrated, the register architecture 2900 includes vector/SIMD registers 2910 that vary from 128-bit to 1,024 bits width. In some examples, the vector/SIMD registers 2910 are physically 512-bits and, depending upon the mapping, only some of the lower bits are used. For example, in some examples, the vector/SIMD registers 2910 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2900 includes writemask/predicate registers 2915. For example, in some examples, there are 8 writemask/predicate registers (sometimes called k0 through k7) that are each 16-bit, 32-bit, 64-bit, or 128-bit in size. Writemask/predicate registers 2915 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2915 corresponds to a data element position of the destination. In other examples, the writemask/predicate registers 2915 are scalable and consists of a set number of enable bits for a given vector element (e.g., 8 enable bits per 64-bit vector element).

The register architecture 2900 includes a plurality of general-purpose registers 2925. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2900 includes scalar floating-point (FP) register file 2945 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2940 (e.g., EFLAGS, RFLAGS, etc.) store status and control information for arithmetic, compare, and system operations. For example, the one or more flag registers 2940 may store condition code information such as carry, parity, auxiliary carry, zero, sign, and overflow. In some examples, the one or more flag registers 2940 are called program status and control registers.

Segment registers 2920 contain segment points for use in accessing memory. In some examples, these registers are referenced by the names CS, DS, SS, ES, FS, and GS.

Model specific registers or machine specific registers (MSRs) 2935 control and report on processor performance. Most MSRs 2935 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2960 consist of control, status, and error reporting MSRs that are used to detect and report on hardware errors. Control register(s) 2955 (e.g., CR0-CR4) determine the operating mode of a processor (e.g., processor 2570, 2580, 2538, 2515, and/or 2600) and the characteristics of a currently executing task. In some examples, MSRs 2935 are a subset of control registers 2955.

One or more instruction pointer register(s) 2930 store an instruction pointer value. Debug registers 2950 control and allow for the monitoring of a processor or core's debugging operations.

Memory (mem) management registers 2965 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2900 may, for example, be used in register file / memory 2208, or physical register file(s) circuitry 2758.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 30 illustrates examples of an instruction format. As illustrated, an instruction may include multiple components including, but not limited to, one or more fields for: one or more prefixes 3001, an opcode 3003, addressing information 3005 (e.g., register identifiers, memory addressing information, etc.), a displacement value 3007, and/or an immediate value 3009. Note that some instructions utilize some or all the fields of the format whereas others may only use the field for the opcode 3003. In some examples, the order illustrated is the order in which these fields are to be encoded, however, it should be appreciated that in other examples these fields may be encoded in a different order, combined, etc.

The prefix(es) field(s) 3001, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 3003 is used to at least partially define the operation to be performed upon a decoding of the instruction. In some examples, a primary opcode encoded in the opcode field 3003 is one, two, or three bytes in length. In other examples, a primary opcode can be a different length. An additional 3-bit opcode field is sometimes encoded in another field.

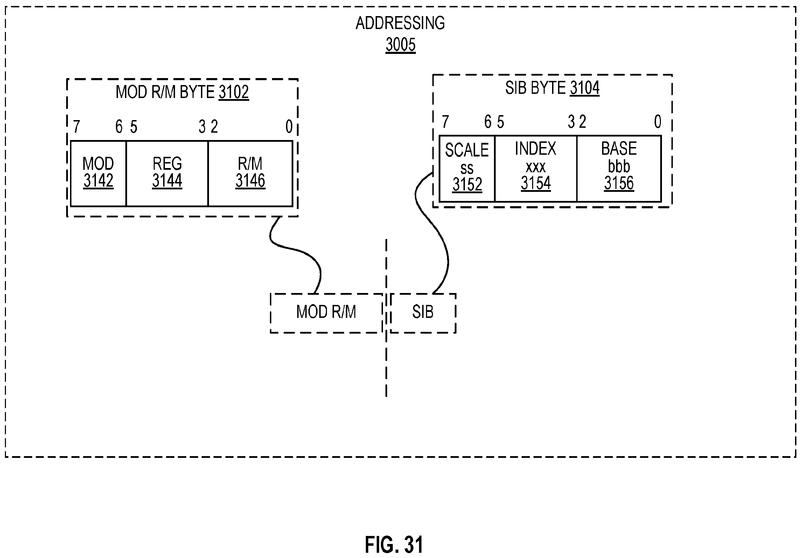

The addressing information field 3005 is used to address one or more operands of the instruction, such as a location in memory or one or more registers. FIG. 31 illustrates examples of the addressing information field 3005. In this illustration, an optional MOD R/M byte 3102 and an optional Scale, Index, Base (SIB) byte 3104 are shown. The MOD R/M byte 3102 and the SIB byte 3104 are used to encode up to two operands of an instruction, each of which is a direct register or effective memory address. Note that both of these fields are optional in that not all instructions include one or more of these fields. The MOD R/M byte 3102 includes a MOD field 3142, a register (reg) field 3144, and R/M field 3146.

The content of the MOD field 3142 distinguishes between memory access and non-memory access modes. In some examples, when the MOD field 3142 has a binary value of 11 (11b), a register-direct addressing mode is utilized, and otherwise a register-indirect addressing mode is used.

The register field 3144 may encode either the destination register operand or a source register operand or may encode an opcode extension and not be used to encode any instruction operand. The content of register field 3144, directly or through address generation, specifies the locations of a source or destination operand (either in a register or in memory). In some examples, the register field 3144 is supplemented with an additional bit from a prefix (e.g., prefix 3001) to allow for greater addressing.

The R/M field 3146 may be used to encode an instruction operand that references a memory address or may be used to encode either the destination register operand or a source register operand. Note the R/M field 3146 may be combined with the MOD field 3142 to dictate an addressing mode in some examples.

The SIB byte 3104 includes a scale field 3152, an index field 3154, and a base field 3156 to be used in the generation of an address. The scale field 3152 indicates a scaling factor. The index field 3154 specifies an index register to use. In some examples, the index field 3154 is supplemented with an additional bit from a prefix (e.g., prefix 3001) to allow for greater addressing. The base field 3156 specifies a base register to use. In some examples, the base field 3156 is supplemented with an additional bit from a prefix (e.g., prefix 3001) to allow for greater addressing. In practice, the content of the scale field 3152 allows for the scaling of the content of the index field 3154 for memory address generation (e.g., for address generation that uses 2^{scale ∗} index + base).

Some addressing forms utilize a displacement value to generate a memory address. For example, a memory address may be generated according to 2^{scale ∗} index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 3007 provides this value. Additionally, in some examples, a displacement factor usage is encoded in the MOD field of the addressing information field 3005 that indicates a compressed displacement scheme for which a displacement value is calculated and stored in the displacement field 3007.

In some examples, the immediate value field 3009 specifies an immediate value for the instruction. An immediate value may be encoded as a 1-byte value, a 2-byte value, a 4-byte value, etc.

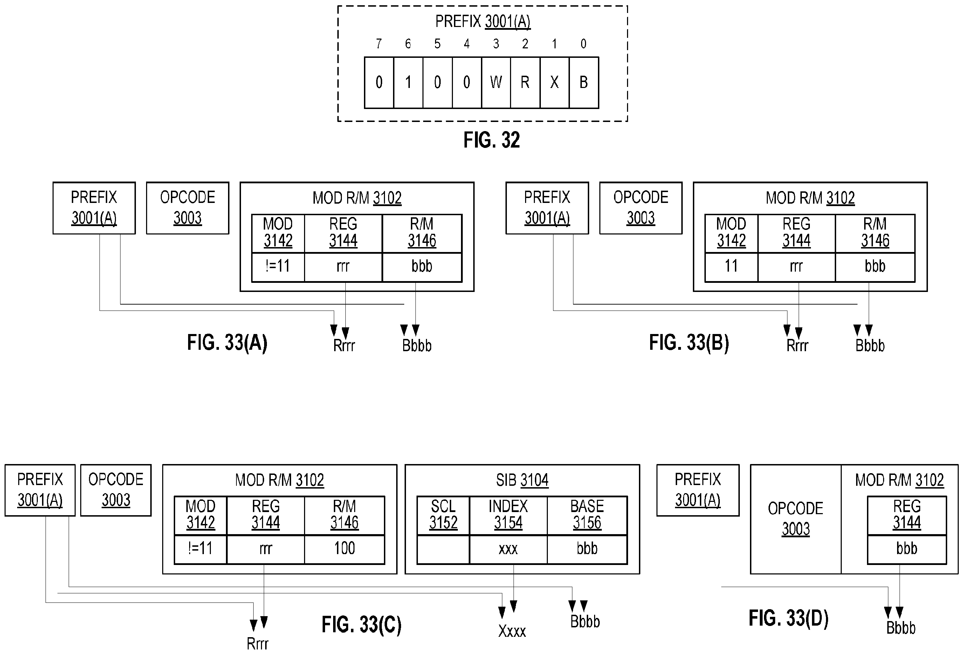

FIG. 32 illustrates examples of a first prefix 3001(A). In some examples, the first prefix 3001(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 3001(A) may specify up to three registers using 3-bit fields depending on the format: 1) using the reg field 3144 and the R/M field 3146 of the MOD R/M byte 3102; 2) using the MOD R/M byte 3102 with the SIB byte 3104 including using the reg field 3144 and the base field 3156 and index field 3154; or 3) using the register field of an opcode.

In the first prefix 3001(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 3144 and MOD R/M R/M field 3146 alone can each only address 8 registers.

In the first prefix 3001(A), bit position 2 (R) may be an extension of the MOD R/M reg field 3144 and may be used to modify the MOD R/M reg field 3144 when that field encodes a general-purpose register, a 64-bit packed data register (e.g., a SSE register), or a control or debug register. R is ignored when MOD R/M byte 3102 specifies other registers or defines an extended opcode.

Bit position 1 (X) may modify the SIB byte index field 3154.

Bit position 0 (B) may modify the base in the MOD R/M R/M field 3146 or the SIB byte base field 3156; or it may modify the opcode register field used for accessing general purpose registers (e.g., general purpose registers 2925).

FIGS. 33(A)-(D) illustrate examples of how the R, X, and B fields of the first prefix 3001(A) are used. FIG. 33(A) illustrates R and B from the first prefix 3001(A) being used to extend the reg field 3144 and R/M field 3146 of the MOD R/M byte 3102 when the SIB byte 3104 is not used for memory addressing. FIG. 33(B) illustrates R and B from the first prefix 3001(A) being used to extend the reg field 3144 and R/M field 3146 of the MOD R/M byte 3102 when the SIB byte 3104 is not used (register-register addressing). FIG. 33(C) illustrates R, X, and B from the first prefix 3001(A) being used to extend the reg field 3144 of the MOD R/M byte 3102 and the index field 3154 and base field 3156 when the SIB byte 3104 being used for memory addressing. FIG. 33(D) illustrates B from the first prefix 3001(A) being used to extend the reg field 3144 of the MOD R/M byte 3102 when a register is encoded in the opcode 3003.

FIGS. 34(A)-(B) illustrate examples of a second prefix 3001(B). In some examples, the second prefix 3001(B) is an example of a VEX prefix. The second prefix 3001(B) encoding allows instructions to have more than two operands, and allows SIMD vector registers (e.g., vector/SIMD registers 2910) to be longer than 64-bits (e.g., 128-bit and 256-bit). The use of the second prefix 3001(B) provides for three-operand (or more) syntax. For example, previous two-operand instructions performed operations such as A = A + B, which overwrites a source operand. The use of the second prefix 3001(B) enables operands to perform nondestructive operations such as A = B + C.

In some examples, the second prefix 3001(B) comes in two forms - a two-byte form and a three-byte form. The two-byte second prefix 3001(B) is used mainly for 128-bit, scalar, and some 256-bit instructions; while the three-byte second prefix 3001(B) provides a compact replacement of the first prefix 3001(A) and 3-byte opcode instructions.

FIG. 34(A) illustrates examples of a two-byte form of the second prefix 3001(B). In one example, a format field 3401 (byte 0 3403) contains the value C5H. In one example, byte 1 3405 includes an "R" value in bit[7]. This value is the complement of the "R" value of the first prefix 3001(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 3146 to encode the instruction operand that references a memory address or encode either the destination register operand or a source register operand.

Instructions that use this prefix may use the MOD R/M reg field 3144 to encode either the destination register operand or a source register operand, or to be treated as an opcode extension and not used to encode any instruction operand.

For instruction syntax that support four operands, vvvv, the MOD R/M R/M field 3146 and the MOD R/M reg field 3144 encode three of the four operands. Bits[7:4] of the immediate value field 3009 are then used to encode the third source register operand.

FIG. 34(B) illustrates examples of a three-byte form of the second prefix 3001(B). In one example, a format field 3411 (byte 0 3413) contains the value C4H. Byte 1 3415 includes in bits[7:5] "R," "X," and "B" which are the complements of the same values of the first prefix 3001(A). Bits[4:0] of byte 1 3415 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 3417 is used similar to W of the first prefix 3001(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 3146 to encode the instruction operand that references a memory address or encode either the destination register operand or a source register operand.

Instructions that use this prefix may use the MOD R/M reg field 3144 to encode either the destination register operand or a source register operand, or to be treated as an opcode extension and not used to encode any instruction operand.

For instruction syntax that support four operands, vvvv, the MOD R/M R/M field 3146, and the MOD R/M reg field 3144 encode three of the four operands. Bits[7:4] of the immediate value field 3009 are then used to encode the third source register operand.

FIG. 35 illustrates examples of a third prefix 3001(C). In some examples, the third prefix 3001(C) is an example of an EVEX prefix. The third prefix 3001(C) is a four-byte prefix.

The third prefix 3001(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 29) or predication utilize this prefix. Opmask register allow for conditional processing or selection control. Opmask instructions, whose source/destination operands are opmask registers and treat the content of an opmask register as a single value, are encoded using the second prefix 3001(B).

The third prefix 3001(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 3001(C) is a format field 3511 that has a value, in one example, of 62H. Subsequent bytes are referred to as payload bytes 3515-3519 and collectively form a 24-bit value of P[23:0] providing specific capability in the form of one or more fields (detailed herein).

In some examples, P[1:0] of payload byte 3519 are identical to the low two mm bits. P[3:2] are reserved in some examples. Bit P[4] (R') allows access to the high 16 vector register set when combined with P[7] and the MOD R/M reg field 3144. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 3144 and MOD R/M R/M field 3146. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 3001(A) and second prefix 3011(B) and may serve as an opcode extension bit or operand size promotion.

P[18:16] specify the index of a register in the opmask (writemask) registers (e.g., writemask/predicate registers 2915). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 3001(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 36 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 36 shows a program in a high-level language 3602 may be compiled using a first ISA compiler 3604 to generate first ISA binary code 3606 that may be natively executed by a processor with at least one first ISA core 3616. The processor with at least one first ISA core 3616 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3604 represents a compiler that is operable to generate first ISA binary code 3606 (e.g., object code) that can, with or without additional linkage processing, be executed on the processor with at least one first ISA core 3616. Similarly, FIG. 36 shows the program in the high-level language 3602 may be compiled using an alternative ISA compiler 3608 to generate alternative ISA binary code 3610 that may be natively executed by a processor without a first ISA core 3614. The instruction converter 3612 is used to convert the first ISA binary code 3606 into code that may be natively executed by the processor without a first ISA core 3614. This converted code is not necessarily to be the same as the alternative ISA binary code 3610; however, the converted code will accomplish the general operation and be made up of instructions from the alternative ISA. Thus, the instruction converter 3612 represents software, firmware, hardware, or a combination thereof that, through emulation, simulation or any other process, allows a processor or other electronic device that does not have a first ISA processor or core to execute the first ISA binary code 3606.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

Embodiments of the invention include, but are not limited to:
1. An apparatus comprising:
   decoder circuitry to decode an instance of a single instruction, the instance of the single instruction to include at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in a single data element position of the destination operand; and
   execution circuitry configured to execute the decoded instruction according to the opcode.
2. The apparatus of example 1, wherein the horizontal reduction is one of addition, logical, or min/max.
3. The apparatus of any of examples 1-2, wherein the one or more fields to reference the first source operand identify a vector register.
4. The apparatus of any of examples 1-2, wherein the one or more fields to reference the first source operand identify a memory location.
5. The apparatus of any of examples 1-4, wherein the instance of the single instruction further includes one or more fields to reference a second source operand.
6. The apparatus of example 5, wherein a single data element of the second source operand is used in the horizontal reduction operation.
7. The apparatus of any of examples 1-6, wherein the instance of the single instruction further includes a field for a mask operand wherein a mask of the mask operand is to mask data element positions.
8. The apparatus of example 7, wherein the execution circuitry is to use the mask operand to determine which data element positions of the first source operand to zero or replace with an identity value.
9. The apparatus of any of examples 1-9, wherein data elements of the first source operand are sign extended.
10. The apparatus of any of examples 1-9, wherein data elements of the first source operand are zero extended.
11. The apparatus of any of examples 1-10, wherein data elements of the first source operand are a size of 8-bit, 16-bit, 32-bit, 64-bit, 128-bt, or 256-bit.
12. The apparatus of any of examples 1-11, wherein data elements of the first source operand are integers.
13. The apparatus of any of examples 1-11, wherein data elements of the first source operand are floating points.
14. The apparatus of any of examples 1-13, wherein the instance of the single instruction includes a field for an immediate to determine a min/max operation to perform.
15. A method comprising:
   translating an instance of single instruction of a first instruction set architecture into one or more instructions of a second instruction set architecture, the instance of the single instruction of the first instruction set architecture to include at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in a single data element position of the destination operand;
   decoding the one or more instructions of the second instruction set architecture; and
   executing the decoded one or more instructions of the second instruction set architecture according to the opcode of the instance of the single instruction of the first instruction set architecture.
16. The method of example 15, wherein the horizontal reduction is one of addition, logical, or min/max.
17. The method of any of examples 15-16, wherein the one or more fields to reference the first source operand identify a vector register.
18. The method of any of examples 15-16, wherein the one or more fields to reference the first source operand identify a memory location.
19. The method of any of examples 15-18, wherein the instance of the single instruction further includes one or more fields to reference a second source operand.
20. The method of example 19, wherein a single data element of the second source operand is used in the horizontal reduction operation.
21. The method of any of examples 15-20, wherein the instance of the single instruction further includes a field for a mask operand wherein a mask of the mask operand is to mask data element positions.
22. The method of example 21, wherein the execution circuitry is to use the mask operand to determine which data element positions of the first source operand to zero or replace with an identity value.
23. The method of example 21, the execution circuitry is to use the mask operand to determine which data element positions of the second source to unmask.
24. The method of any of examples 15-23, wherein data elements of the first source operand are a size of 8-bit, 16-bit, 32-bit, 64-bit, 128-bt, or 256-bit.
25. A system comprising:
   memory to store an instance of a single instruction; and
   a processor core comprising:
      decoder circuitry to decode an instance of a single instruction, the instance of the single instruction to include at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in a single data element position of the destination operand; and
      execution circuitry configured to execute the decoded instruction according to the opcode.
      instruction according to the opcode.
26. A non-transitory medium having stored thereon an instance of a single instruction, wherein a processor is to handle the instance of the single instruction according to any of the above described example methods.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder circuitry to decode an instance of a single instruction, the instance of the single instruction to include at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in a single data element position of the destination operand; and
execution circuitry configured to execute the decoded instruction according to the opcode.

2. The apparatus of claim 1, wherein the horizontal reduction is one of addition, logical, or min/max.

3. The apparatus of any of claims 1-2, wherein the one or more fields to reference the first source operand identify a vector register.

4. The apparatus of any of claims 1-2, wherein the one or more fields to reference the first source operand identify a memory location.

5. The apparatus of any of claims 1-4, wherein the instance of the single instruction further includes one or more fields to reference a second source operand.

6. The apparatus of claim 5, wherein a single data element of the second source operand is used in the horizontal reduction operation.

7. The apparatus of any of claims 1-6, wherein the instance of the single instruction further includes a field for a mask operand wherein a mask of the mask operand is to mask data element positions.

8. The apparatus of claim 7, wherein the execution circuitry is to use the mask operand to determine which data element positions of the first source operand to zero or replace with an identity value.

9. The apparatus of any of claims 1-8, wherein data elements of the first source operand are sign extended.

10. The apparatus of any of claims 1-9, wherein data elements of the first source operand are zero extended.

11. The apparatus of any of claims 1-10, wherein data elements of the first source operand are a size of 8-bit, 16-bit, 32-bit, 64-bit, 128-bt, or 256-bit.

12. The apparatus of any of claims 1-11, wherein data elements of the first source operand are integers.

13. The apparatus of any of claims 1-12, wherein data elements of the first source operand are floating points.

14. The apparatus of claim 1, wherein the instance of the single instruction includes a field for an immediate to determine a min/max operation to perform.

15. A method comprising:
translating an instance of single instruction of a first instruction set architecture into one or more instructions of a second instruction set architecture, the instance of the single instruction of the first instruction set architecture to include at least one field for an opcode, one or more fields to reference a first source operand, and one or more fields to reference a destination operand, wherein the opcode is to indicate that execution circuitry is, in response to a decoded instance of the single instruction, to at least perform a horizontal reduction using at least one data element of a non-masked data element position of at least the first source operand and store a result of the horizontal reduction in a single data element position of the destination operand;
decoding the one or more instructions of the second instruction set architecture; and
executing the decoded one or more instructions of the second instruction set architecture according to the opcode of the instance of the single instruction of the first instruction set architecture.
